Europäisches Patentamt

European Patent Office

Office européen des brevets

(19)

(11) **EP 1 432 138 B1**

(12) **EUROPEAN PATENT SPECIFICATION**

(45) Date of publication and mention
of the grant of the patent:
**28.09.2005  Bulletin 2005/39**

(51) Int Cl.⁷: **H04B 3/54**

(21) Application number: **02102836.0**

(22) Date of filing: **19.12.2002**

(54) **Digital data distribution method and system**

Vorrichtung und Verfahren zur Verteilung von digitalen Daten

Procédé et méthode de diffusion de médias numériques

(84) Designated Contracting States:
**AT BE BG CH CY CZ DE DK EE ES FI FR GB GR
IE IT LI LU MC NL PT SE SI SK TR**

(43) Date of publication of application:
**23.06.2004  Bulletin 2004/26**

(73) Proprietor: **Laboratoire Europeen ADSL
35510 Cesson Sevigne (FR)**

(72) Inventors:
• **Fernandez, Thierry
  92400 Courbevoie (FR)**
• **Grenie, Olivier
  92300 Levallois Perret (FR)**
• **Buchoux, Vincent
  75013 Paris (FR)**

(74) Representative:
**Schmit, Christian Norbert Marie et al
SCHMIT-CHRETIEN-SCHIHIN
8, place du Ponceau
95000 Cergy (FR)**

(56) References cited:
**EP-A- 0 913 955        EP-A- 1 073 211**

**Description**

The present invention has as an object a digital data distribution system that set a waveform used for indoor power line communication systems. The aim of the invention is to provide a universal system able of adaptation to every environment found in power line networks.

Reference is herein made to following standards and prior art:

-    IEEE standard for information technology - telecommunications and information exchange between systems - local and metropolitan area networks - specific requirements part 3: carrier sense multiple access with collision detection (CSMA/CD) access method and physical layer specifications,

-    IEEE Std 802.3-2000 (Revision of IEEE Std 802.3, 2000 edition), 2000,

-    Digital Communications, John G. Proakis - McGraw-Hill, New York, third edition, 1995,

-    CDMA for wireless personal communications, Ramjee PRASAD - Artech House Publishers, May 1996,

-    Spread spectrum CDMA systems for wireless communications, Savo GLISIC, Branka VUCETIC - Artech House Publishers, April 1997,

-    Frequenzbereichszuweisungsplanverordnung (German regulation for the use of frequencies in and along conductors and possible incompatibility between radio and cable applications), Bundesministerium für Wirtschaft und Technologie, 26th July 2002, a.k.a. NB30

-    Publication of the Frequency band allocation ordinance (FreqBZPV), including Usage Provision 30, following approval by the federal government of the federal republic of Germany, Germany, CEPT/ERC PT SE35, May 2001, a.k.a. NB30

-    Radio frequency devices, American federal communications commission, 22nd July 2002,

-    MPT 1570 - radiation limits and measurement specification - electromagnetic radiation in the range 9 KHz to 1.6 MHz from material substances forming part of a telecommunication system, radiocommunications agency, 3rd August 2001,

-    Appareils de traitement de l'information caracteristiques des perturbations radioélectriques limites et méthodes de mesure, CENELEC, 1999.

It is known from existing prior art, namely DE-A-197 16 011, and EP-A-0 975 097, multi carrier modulation (MCM) data transmission techniques for transmitting data on power lines. It is also known from "MV and LV powerline communications: new proposed IEC standards", due to Stefan RAMSEIER, Michael ARZBERGER, and Andreas HAUSER, in XP-002136480, IEEE 1999, different alternative schemes for transmitting data on power lines. Other examples are in EP-A-913 955 and EP-A-1 073 211.

All the known techniques suffer however the drawbacks of not being enough flexible to correspond to any power line network, or to any situations. Particularly, when a connection of a power line network to a dedicated transmission networks is involved, for example a connection to a home specific data transmission network, a home telephone network or a cable, the needs may be so various that at each time a specific connection system has to be designed. It is an aim of the invention to provide for a universal transmission system, on power lines.

This is achieved, according to the invention by recognizing that the transmissions are generally unbalanced. Particularly when connecting to Internet, or more generally to a server, it has been noted that the amount of data transmitted is greater for a downlink transmission, from the server to the user, than for an uplink transmission, from a user equipment to the server. It has also been noted that the needs were different. For a downlink transmission, a real time transmission with a high bit rate is necessary. For uplink transmissions, a high bit rate transmission is also necessary, but with random access.

In the invention, it is taken advantage of this situation in providing a system in which a downlink transmission uses a CDMA coding scheme while, in an uplink transmission, use is made of a non CDMA coding scheme, typically a QAM modulation scheme. It then can be shown that that kind of unbalanced two directions transmission system is able to satisfy the request for a real time downlink multi user transmission.

With the invention, it may be achieved a downlink rate of 75 Ksymbols per second for each coding sequence of the CDMA transmission. That leads, with a ten codes channel, to a real rate of 1,5 Mbits per second (including signalisation signals), which is sufficient for downlink transmission, either video or audio transmissions, of course for data transmissions. Moreover, a dynamic attribution of coding sequence to one among several user equipments permits a rate of 3 Mbits per second, if twenty codes are temporarily attributed to a channel.

For an uplink channel, a narrow bandwidth of 2,5 MHz authorizes a rate of 2,5Mbauds per second. With a QPSK (as specified in this system), i.e. a QAM 2 modulation a 5 Mbits per second is obtained. This rate may go up to 15 Mbits per second with a QAM 6 (equivalent to a 64 QAM). Taking into account that the propagation range is decreasing with the modulation indicia, the complexity of the modulation constellation, this QAM 6 is well convenient for 5 to 10 meters propagation which are encountered in domestic networks.

The system of the invention thus allows allocating a fixed quality to the downlink channel. Eventually this quality may be negotiated with the server. For the uplink channel a contention system, an anti collision system, gives a full rate to every user, as and when this user is randomly requesting it. For example, for the uplink channel, an ethernet frame rythm is retained. An uplink interface then places ethernet frame data on the network (with encapsulation and modulation), ethernet frame by ethernet frame, listening to the availability of the network between each ethernet frames. This repartition between means for downlink channel and uplink channel solves all the problem of adequacy of the quality of the existing networks to the real time needs met in any situation.

As a result, the invention has for an object a digital data distribution system comprising:

- an electric power lines network, and
- inductive couplers distributed in different locations of the network for coupling data processing units to this network for transmission, and
- in these couplers, a master coupler and a set of slave couplers wherein

  - the master coupler comprises a coding emitter, of the CDMA type, with a spreading factor, for transmitting CDMA coded data on the network after such a coding, and
  - each slave coupler comprises a receiver, for receiving this CDMA coded data from the master coupler and for decoding it, and a modulation emitter, without spreading factor, for coding data to be transmitted to said master coupler.

The invention will be understood more clearly from the following description and the appended figures. These figures are given purely by way of an indication and in no way restrict the scope of the invention. These figures show:

- Figure 1: System configuration
- Figure 2: Spectrum occupancy
- Figure 3: downlink emission: framing
- Figure 4: downlink emission: spreading - filtering - up-sampling
- Figure 5: MII controller
- Figure 6: MII controller: state machine
- Figure 7: ethernet frame format
- Figure 8: MII interface: management frame
- Figure 9: downlink emission: formation of a CDMA frame
- Figure 10: downlink emission: SOF flag generation
- Figure 11: downlink emission: header generation
- Figure 12: downlink emission: header multiplexing
- Figure 13: downlink emission: header encoder
- Figure 14: downlink emission: header multiplexing
- Figure 15: downlink emission: header encoder (Reed-Solomon)
- Figure 16: downlink emission: Reed-Solomon encoder
- Figure 17: downlink emission: payload processing
- Figure 18: downlink emission: first convolutive encoder - block
- Figure 19: downlink emission: first convolutive encoder - principle
- Figure 20: downlink emission: second convolutive encoder - block
- Figure 21: downlink emission: second convolutive encoder - principle
- Figure 22: downlink emission: interleaver - block
- Figure 23: downlink emission: interleaver - writing
- Figure 24: downlink emission: interleaver - reading
- Figure 25: downlink emission: SOF header and payload multiplexing
- Figure 26: downlink emission: user to code demux - block
- Figure 27: downlink emission: spreading - principle
- Figure 28: downlink emission: Hadamard sequence generation
- Figure 29: downlink emission: spreader
- Figure 30: downlink emission: shaping filter
- Figure 31: downlink emission: first interpolation
- Figure 32: downlink emission: baseband to IF transposition (NCO)
- Figure 33: downlink emission: second interpolation
- Figure 34: downlink emission: second interpolation - phase and magnitude of the up-sampler filter
- Figure 35: downlink emission: second interpolation - filter response to a Dirac

- Figure 36: uplink reception: down-sampling & filtering
- Figure 37: uplink reception: synchronization, demodulation & deframing
- Figure 38: uplink reception: IF to baseband transposition (NCO)
- Figure 39: uplink reception: down-sampler
- Figure 40: uplink reception: first and second down-samplers - down-sampling filter response
- Figure 41: uplink reception: third down-sampler - down-sampling filter response
- Figure 42: uplink reception: SRRC filter
- Figure 43: uplink reception: SRRC filter - implementation
- Figure 44: uplink reception: synchronization & demodulation
- Figure 45: uplink reception: synchronization & demodulation - sequencer
- Figure 46: uplink reception: synchronization
- Figure 47: uplink reception: demodulation
- Figure 48: uplink reception: demodulation - delay line
- Figure 49: uplink reception: demodulation - phase correction
- Figure 50: uplink reception: demodulation - QPSK de-mapping
- Figure 51: uplink reception: demodulation - reformat output samples
- Figure 52: uplink reception: demodulation - update synchronization position
- Figure 53: uplink reception: demodulation - update phase
- Figure 54: uplink reception: demodulation - update phase - phase computation
- Figure 55: uplink reception: de-framing
- Figure 56: uplink reception: de-framing - decode header
- Figure 57: uplink reception: de-framing - de-interleaver
- Figure 58: uplink reception: de-framing - first payload decoder (Viterbi decoder)
- Figure 59: uplink reception: de-framing - second payload decoder (Viterbi decoder)
- Figure 60: uplink reception: de-framing - data buffer
- Figure 61: downlink reception: down-sampling & filtering
- Figure 62: downlink reception: synchronization - demodulation
- Figure 63: downlink reception: de-framing
- Figure 64: downlink reception: automatic gain control
- Figure 65: downlink reception: first decimation
- Figure 66: downlink reception: first decimation - phase and magnitude of the down-sampler filter
- Figure 67: downlink reception: first decimation - filter response to a Dirac
- Figure 68: downlink reception: IF to baseband transposition (NCO)
- Figure 69: downlink reception: second decimation
- Figure 70: downlink reception: second decimation - phase and magnitude of the down-sampler filter
- Figure 71: downlink reception: second decimation- filter response to a Dirac
- Figure 72: downlink reception: shaping filter
- Figure 73: downlink reception: synchronization
- Figure 74: downlink reception: synchronization - synchro block - block
- Figure 75: downlink reception: synchronization - synchro block - principle
- Figure 76: downlink reception: synchronization - correlation points computation - block
- Figure 77: downlink reception: synchronization - correlation points computation - principle
- Figure 78: downlink reception: synchronization - maximum searcher
- Figure 79: downlink reception: synchronization - synchronization position filter - block
- Figure 80: downlink reception: synchronization - synchronization position filter - principle
- Figure 81: downlink reception: synchronization - delay line - block
- Figure 82: downlink reception: synchronization - delay line - principle
- Figure 83: downlink reception: demodulation - block
- Figure 84: downlink reception: demodulation - principle
- Figure 85: downlink reception: de-multiplexing
- Figure 86: downlink reception: de-framing - state machine
- Figure 87: downlink reception: de-framing - detect SOF flag
- Figure 88: downlink reception: de-framing - decode header
- Figure 89: downlink reception: de-framing - de-interleaver
- Figure 90: downlink reception: de-framing - first payload decoder (Viterbi decoder)
- Figure 91: downlink reception: de-framing - second payload decoder (Viterbi decoder)
- Figure 92: downlink reception: de-framing - data buffer
- Figure 93: uplink emission: framing

- Figure 94: uplink emission: spreading - filtering - up-sampling
- Figure 95: uplink emission - CDMA frame
- Figure 96: uplink emission: header generation
- Figure 97: uplink emission: header multiplexing
- Figure 98: uplink emission: header encoder
- Figure 99: uplink emission: header multiplexing
- Figure 100: uplink emission: header encoder (Reed-Solomon)
- Figure 101: uplink emission: Reed-Solomon encoder
- Figure 102: uplink emission: payload processing
- Figure 103: uplink emission: first convolutive encoder - block
- Figure 104: uplink emission: first convolutive encoder - principle
- Figure 105: uplink emission: second convolutive encoder - block
- Figure 106: uplink emission: second convolutive encoder - principle
- Figure 107: uplink emission: interleaver - block
- Figure 108: uplink emission: interleaver - writing
- Figure 109: uplink emission: interleaver - reading
- Figure 110: uplink emission: header and payload multiplexing
- Figure 111: uplink emission: spreading - filtering - up-sampling
- Figure 112: uplink emission: QPSK mapping
- Figure 113: uplink emission: QPSK mapping - detailed implementation
- Figure 114: uplink emission: QPSK mapping - sequencer - state machine
- Figure 115: uplink emission: SRRC filter
- Figure 116: uplink emission - SRRC filter - detailed implementation
- Figure 117: uplink emission: first interpolation
- Figure 118: uplink emission: baseband to IF transposition (NCO)

For understanding the invention use is made of the following definitions and abbreviations :

| | |
|---|---|
| ADC: | Analogue to Digital Converter |
| AFE: | Analogue Front End |
| AGC: | Automatic Gain Controller |
| BPSK: | Binary Phase Shift Keying |
| CDMA: | Code Division Multiple Access |
| CDMA_HMC: | CDMA Header Multiplexing and Coding : block, which generates the CDMA frame header |
| DAC: | Digital to Analogue Converter |
| DBCh: | Downlink Broadcast Channel |
| DDSCh: | Downlink Dedicated Synchronization Channel |
| DDTCh: | Downlink Dedicated Transport Channels |
| DEMUX: | De multiplexer: block, which distribute all the bits on the different CDMA codes |
| Dlk: | Downlink |
| DSSCh: | Downlink Symbol Synchronization Channel |
| Fc: | Chip Frequency (5MHz) |
| FIFO: | First In First Out |
| FIR: | Finite Impulse Response |
| GF: | Galois Field |
| HDMUX: | Header Data Multiplex: block, which concatenates all the fields of a CDMA frame |
| ISI: | Inter Symbol Interference |
| LFSR: | Linear Feedback Shift Registers |
| LSB: | Least Significant Bit |
| MAC: | Medium Access Control |
| MDI: | Management Data Interface |
| MII: | Media Independent Interface |
| MSB: | Most Significant Bit |
| NCO: | Numerically Controlled Oscillator |
| ISO: | International Organization for Standardization |
| OSI: | Open System Interconnection |
| PLT: | Powerline Telecommunications |
| ppm: | Part per million |

| | |
|---|---|
| PHY: | Physical |
| PLNC: | Powerline Network Controller |
| PLNIC: | Powerline Network Interface Card |
| QPSK: | Quadrature Phase Shift Keying |
| RS: | Reed-Solomon |
| SOF: | Start Of Frame flag |
| Rx: | Receiver |
| sfd: | Start of Frame Delimiter |
| Tc: | Time chip: duration of one chip (=0.2µs, in a preferred example) |
| Ts: | Time symbol: duration of one symbol, 64 chips (=12.8µs in a preferred example) |
| Tx: | Transmission |
| TX_NB_CODES: | Number of codes used on the downlink link |
| TX_NB_CODE_MAX: | Maximum number of codes on the downlink link (=63 in a preferred example) |
| TX_NB_CODE_Ui: | Number of active codes for the user i |
| TX_NB_USER: | Number of user |
| TX_NB_USER_MAX: | Maximum number of users (=10 in a preferred example). |

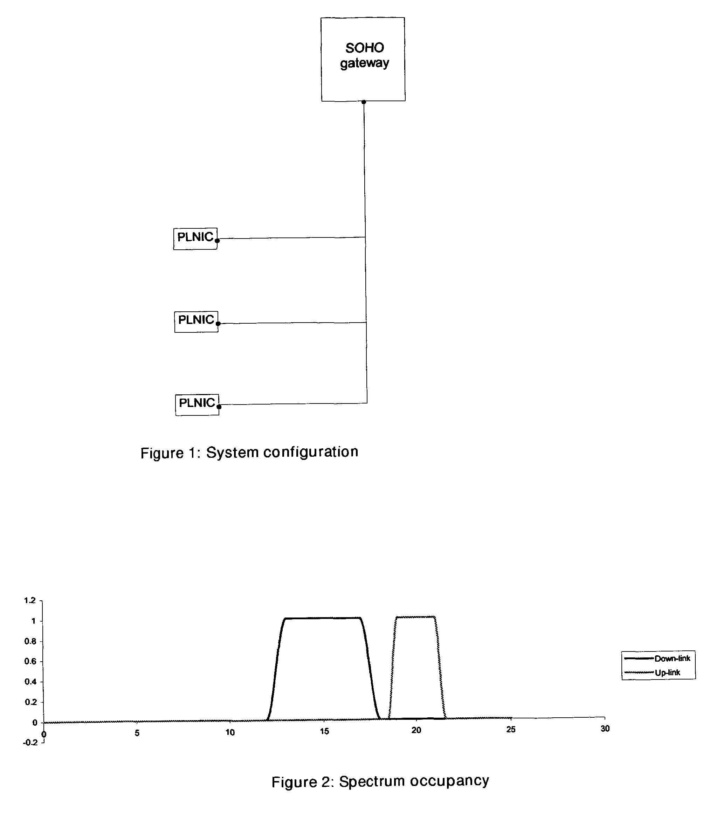

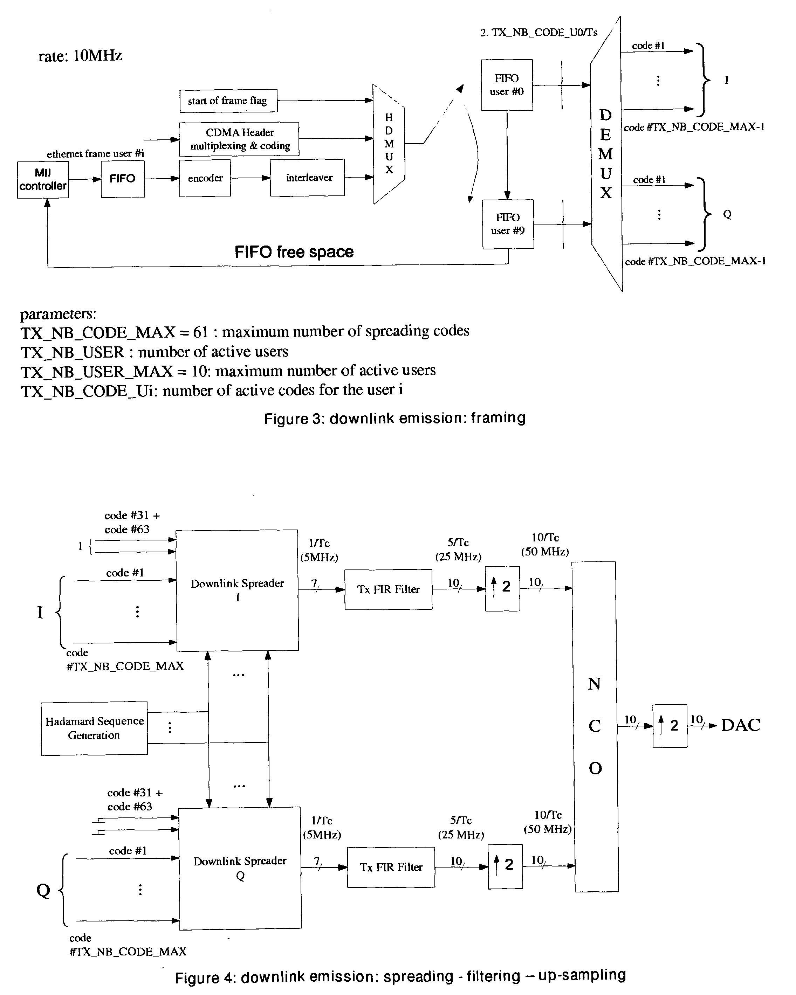

Fig 1 shows a CDMA system configuration according to the invention, where for one gateway (PLNC) up to ten different Powerline Network interface Controllers (PLNIC) corresponding to ten users may be used. The gateway clock of the Powerline Network Controller (PLNC) is a crystal oscillator at 50 MHz with an accuracy of 50 ppm. In the Powerline Network Interface Cards, PLNIC, a clock is provided by a VCXO with the following specifications: Frequency : 50 MHz, Accuracy : 50 ppm, Pulling : 100 ppm.

A physical layer interface standardizes the electrical, mechanical and functional control of data circuits that are connected to physical media.

The waveforms in the transmission are following

| | |
|---|---|
| Downlink access techniques | DS-CDMA |
| Downlink code length | 64 chips |
| Downlink chip rate | 5 Mchip/s |
| Downlink center frequency | 15 MHz |
| Downlink roll-off | 0.22 |
| Uplink access technique | QAM Modulation |
| Uplink symbol rate | 2.5Msymbol/s |
| Uplink center frequency | 20MHz |
| Uplink roll-off | 0.22 |

In the spectra shown in Fig 2, the low bandwidth is dedicated to downlink transmissions, between around 12MHz and 18MHz, the high narrow bandwidth is dedicated to the uplink transmissions, between 18MHz and 22MHz.

As concern the transmitter scheduling, at every symbol time, 2 x TX_NB_CODES coded bits are sent on the channel. As concern a receiver scheduling for the nodes, at every symbol time, 2 x TX_NB_CODES coded bits are received. As concern a receiver scheduling for the Hub, the hub may receive several frames at a time.

The downlink channel specification is now presented. The access mechanism for the downlink channel is the DS-CDMA. The downlink is divided into 64 different logical channels. Each channel is differentiated by one CDMA code. The codes used are 64-bit Hadamard codes.

As a bandwidth allocation protocol, each downlink channel has a bandwidth of 128 Kbps.

Channels D0 to D59 are downlink channels.

The Gateway PLNC is responsible for channel allocation.

At any time, the communication between remote power-line interface card and the Gateway uses up to 50 codes for the downlink (i.e. 7.8 Mbps). It shall be noticed that the first Hadamard spreading code (that equals to +1) is never used for spectrum purposes.

A Common Symbol Synchronization signal is emitted on the downlink to synchronize the devices with the Gateway. The synchronization signal is defined as a constant BPSK modulated sequence, namely '+1'. This signal is then spread using dedicated spreading codes (the 31st and 63rd Hadamard codes).

Among the 63 Hadamard codes, one is dedicated to the broadcast channel. This channel is demodulated by every remote interface and carries network management information such as the allocation of the code (activation and de-activation).

The downlink transport channels are numbered D1 to D63. Each channel carries 156 Kbps from the Gateway to the remote powerline interface card. The channels number D31 and D63 are dedicated for the synchronization and therefore are not enable for transport channels.

The uplink channel is designed as a common bus for each PLNIC (end users). Only one PLNIC can access the medium at each time.

In order to handle several users, the gateway is responsible to allow to the different users (PLNIC) to emit or not on the medium. The technique used to allow these users is not specified in the present claim ..

On the gateway side, the chipset is referenced herein below as LK12001 chipset, while on the user side the slave chipset is referenced to as LK12011.

MASTER LK12001 DOWNLINK TRANSMISSION CHIP

The principle of the CDMA chipset, in downlink emission framing, is depicted according to Fig 3. In Fig 3 a HDMUX receives a start of flag signal, a CDMA header and a coded and interleaved signal . These HDMUX feeds in one example ten FIFO circuits dedicated to ten users, numbered 0 to 9. A controlling signal from these FIFO circuits is processed for providing the interleaved signal. A controlling signal also drives the feeding of the FIFO circuits by the HDMUX. An interleaver and encoder are providing the interleaved signal. They aim at preventing the error due to the channel. A DEMUX provides for TX_NB_CODE_MAX coded signals.

Fig 4 is showing downlink emission: spreading, filtering, and up-sampling operation of TX_NB_CODE_MAX signals provided by the circuit of Fig 3. Two downlink spreaders receive these signals together with Hadamard sequences. Signals output of these spreaders are filtered and are controlling a digitally controlled oscillator NCO.

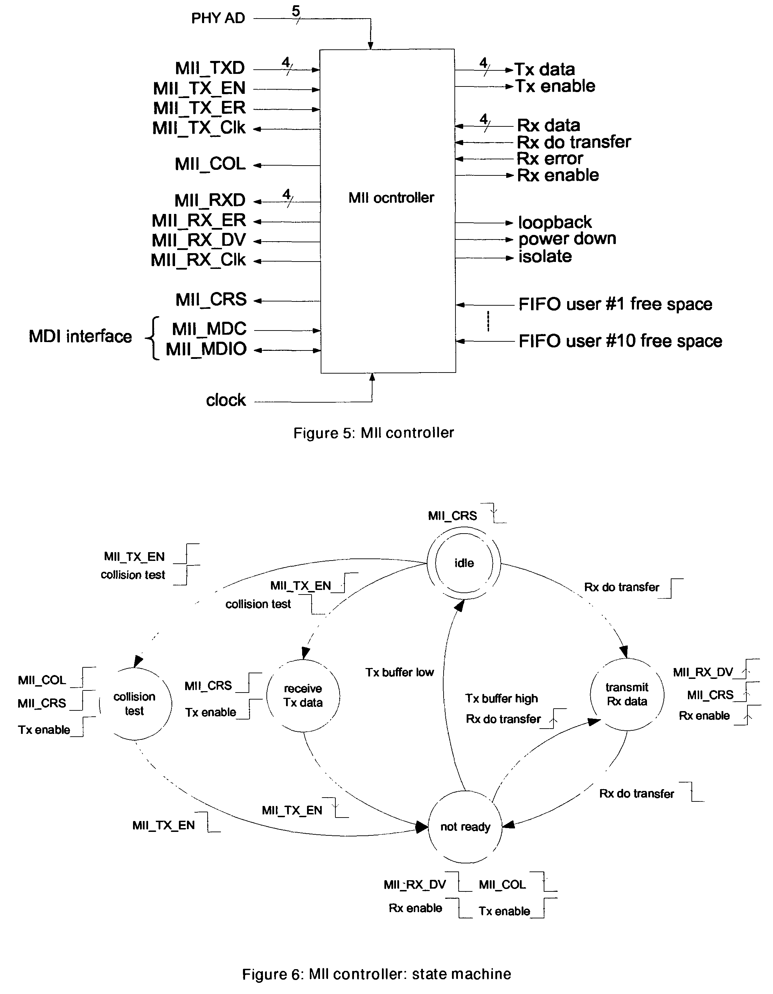

The MII controller of Fig 3 is depicted on Fig 5. It plays the interface between the MAC layer (external controller) and the CDMA chipset (LK12001 or LK12011). These two modules exchange Ethernet frames. There are two kinds of Ethernet frames:

- data frames: have to be transmitted using the power line transmission, PLT, medium
- management frames: these frames are not transmitted on the PLT medium. Their aim is to manage the CDMA chipset (LK12001 or LK12011).

The utilized signals are in transmission:

MII_TX_Clk : This clock provides the timing reference for the transmission of the data - MII_TXD - and for other signals - MII_TX_EN and MII_TX_ER - from the external controller through the MII interface to the CDMA chipset (LK12001 or LK12011). As the bit rate is 10Mb/s then this clock is a 2.5MHz clock.

MII_TXD : this pin is used to transmit actual data to the CDMA chipset (LK12001 or LK12011). MII_TXD is a bundle of four signals. The LSB is the bit number 0. The transmission is done synchronously with the MII_TX_Clk.

MII_TX_EN: this pin indicates, that there are valid nibbles on the MII_TXD. This pin has to be asserted synchronously with the clock MII_TX_Clk.

MII_TX_ER: this pin indicates error in the frame transmission. If this pin is asserted while the MII_TX_EN pin is asserted, then the data - MII_TXD - are ignored. This pin is asserted synchronously with the clock MII_TX_Clk.

The utilized signals are in reception :

MII_RX_Clk: This clock gives the timing reference for the transmission of the received data from the CDMA chipset (LK12001 or LK12011) - MII_RXD - and some other signals - MII_RXDV and MII_RX_ER - to the external controller through the MII interface. As the bit rate is 10Mb/s then this clock is a 2.5MHz clock.

MII_RXD: this pin is used to transmit the received bits from the CDMA chipset (LK12001 or LK12011). MII_RXD is a bundle of four signals. The LSB is the bit number 0. The transmission is done synchronously with the MII_TX_Clk.

MII_RX_DV: this pin indicates that the data transmitted on the MII_RXD are valid. This pin is asserted synchronously with the MII_RX_Clk clock. This pin have to be negated prior to the first non-valid nibble transmit on the MII_RXD pins.

MII_RX_ER: this pin indicates that the PHY layer detected an error somewhere into the frame transmitted (e.g., a coding error, or any error that the PHY is capable of detecting, and that may otherwise be undetectable at the MAC sublayer). This pin is asserted synchronously with the MII_RX_Clk clock.

The medium status signals are :

MII_COL: this pin is asserted when a collision has occurred. This pin is asserted asynchronously. For the downlink, there are no collisions. Therefore, the MII_COL is kept low except if the register 0.7 is set (cf. indications below on a control register).

MII_CRS: this pin indicates that the new frame can be transmitted by the external controller to the CDMA chipset (LK12001 or LK12011). This pin is asserted asynchronously. Just after the beginning of the transmission of a new frame to the CDMA chipset (LK12001 or LK12011), the MII_CRS is asserted. It is kept high until the whole frame has been transmitted - MII_TX_EN is asserted low just after the end of the transmission of the frame - AND the LK12001 is ready to receive a new frame - the previous frame has been processed and the internal memory has enough free space to store this new frame.

When a received frame is transmitted by the CDMA chipset (LK12001 or LK12011) to the external controller then the MII_CRS is asserted.

The management signals (MDI interface) are :

MII_MDC: this pin gives the clock reference for the transmission of the data on the MII_MDIO pins. The external controller to the CDMA chipset (LK12001 or LK12011) generates this signal. It is an asymmetric signal. The minimum high and low times for MDC shall be 160 ns each, and the minimum period for MDC shall be 400 ns.

MII_MDIO: these pins are used to transfer control and status information between the external controller and the CDMA chipset (LK12001 or LK12011).

The PHY address signal, PHY AD, gives the physical address of the CDMA chipset (LK12001 or LK12011).

On the CDMA chipset side, transmission signals are :

Tx data: a 4-bit bus. These pins are used to transfer the data from the MII controller to an *ethernet frame* buffer FIFO.

Tx enable: this pin is set, when the data on the *tx data* bus are valid. This pin remains set until a whole ethernet frame has been transferred. Then, this pin is lowered to signal the end of an ethernet frame.

On the CDMA chipset side, reception signals are :

Rx data: a 4-bit bus. These pins are used to transfer the data from the ethernet frame buffer to the MII controller.

Rx do transfer: it is set when the data on the Rx data bus are valid. This pin is kept high, while transferring an entire ethernet frame. Then, this pin is lowered to signal the MII controller that, the whole ethernet frame has been transferred even if there are other ethernet frames to be transferred.

Rx error: if the current frame contains an error (due demodulation, decoding, ...), then this pin is set to high.

Rx enable: this pin is set by the MII controller in order to signal to the CDMA chipset, that an ethernet frame can be transferred. As soon as this pin is set, the pin *Rx do transfer* can be set in order to signal to the MII controller, that a new ethernet frame is being transferred to the MII controller.

As a user FIFO information, a space available in each user FIFO is signaled to the MII controller. As soon as only one user has no more memory left on his FIFO, the reception and transmission of ethernet frames from the MII controller to the ethernet frame buffer is stopped

The management signals are :

Loopback: if this pin is set, then no signal shall be emitted on the PLT medium. The MII_TXD signal has to be looped back to the MII_RXD signal.

Power down: if this pin is set, then no signal is emitted and received.

Isolate: this pin is set in order to isolate electrically the CDMA chipset from the MII bus. A high impedance is presented on the outputs MII_TX_Clk, MII_RX_Clk, MII_RX_DV, MII_RX_ER, MII_RXD, MII_COL, MII_CRS. The CDMA chipset does not respond to MII_TXD, MII_TX_EN, MII_TX_ER. (cf. control register).

Collision test, MII_COL : if this pin is set, then the CDMA chipset must respond to the assertion of the MII_TX_EN by the assertion of the MII_COL. The CDMA chipset must respond to the de-assertion of the MII_TX_EN by the de-assertion of the MII_COL (cf. control register).

The MII controller is acting as a state machine shown in Fig 6. When in state not ready, the sequencer checks the Tx memory if there is not enough space to store new data (the FIFO free space for one user is lower than an encoded CDMA frame, 24636):

• if there are some received data to transfer then the MII_CRS is lowered during one Rx clock period and then set again. The signal MII_Rx_DV is set and the received data are transferred using the RXD bus (state *transmit Rx data*).

- otherwise the state remains *not ready.*

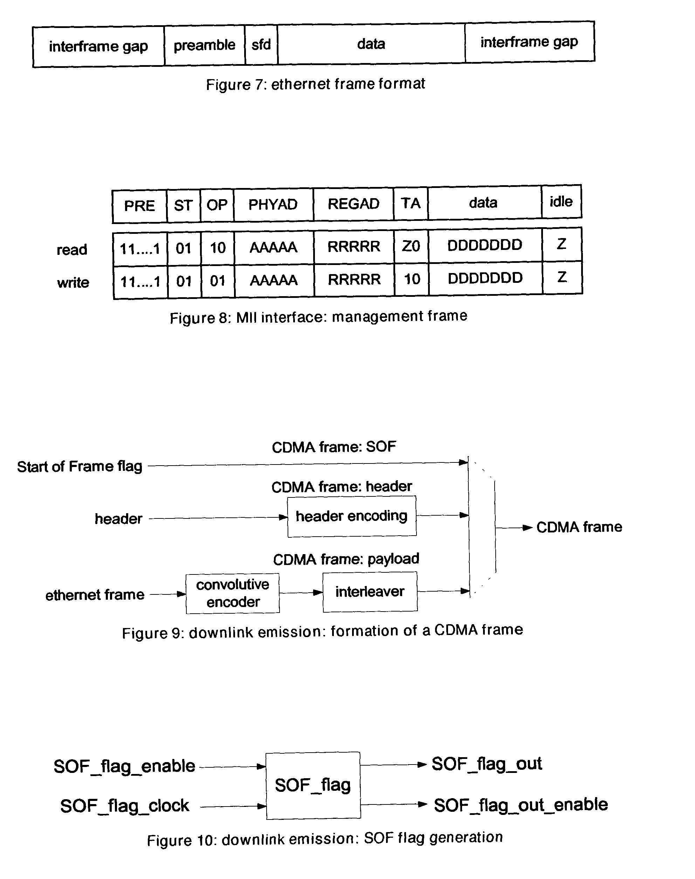

The data transferred between the external controller and the LK12001 are ethernet frames whose data format is according to Fig 7, where sfd is the *start of frame delimiter.* The de-assertion of the MII_TX_EN or the MII_RXDV signals the end of the frame.

The Management Data interface - MDI are used to transfer control and status information between the external controller and the LK12001 via the MDI interface. The data transferred must have the format given in Fig 8. This frame is used for either read or write the register *RRRRR* of the PHY, whose address is AAAAA.

PRE (preamble): the preamble consists of 32 continuous 1. It is used to synchronize the LK12001. The LK12001 shall observe a sequence of 32 contiguous one bits on MDIO with 32 corresponding cycles on MDC before it responds to any transaction.

ST (start of frame): the pattern is <01>

OP (operation code): for reading, the operation code is <10> and for writing, the operation code is <01>.

PHYAD (PHY address): this is a 5 bits field allowing up to 32 unique PHY addresses. The first bit received is the MSB of the address. If the PHYAD field is the same as the PHY AD - input pins - of the CDMA chipset, then the CDMA chipset will respond to this management frame.

REGAD (register address): the *register address* is a five bits field allowing up to 32 different registers to be addressed within each CDMA chipset. The first bit is the MSB. The register addressed at the address 0 is the control register and the register addressed at the address 1 is the status register.

TA (turnaround): The turnaround time is a 2 bit time spacing between the Register Address field and the Data field of a management frame to avoid contention during a read transaction. For the read transaction, the external controller remains in a high impedance state during one bit then, for the second bit, the CDMA chipset will drive a 0. For the write transaction, the external controller will emit the pattern <10>.

DATA: the data field is a 16 bits field. The first bit transmitted is the bit 15 of the register being addressed.

IDLE (idle condition): it is not actually part of the management frame. It is a high impedance state.

Only the two first registers are used, the control register and the status register. If a write or read transaction for other registers is received through the MDI, then the management frame have to be dropped.

The control register is stored at the address 0. Its content is :

| Register address | Register name | Description |
|---|---|---|
| 0.15 | Reset | When set, reset and set the control register and the status register to their default values. This value must remain set until the operation is accomplished. Any read transactions or write transactions to other bit than 0.15 are ignored until the reset is completed. The reset have to be completed within 0.5s from the setting of the bit 0.15. The default value is 0. |
| 0.14 | Loopback | Loopback mode when the bit 0.14 is set (isolation from the PLT network). The data from the MII transmit data have to be looped back the MII received data within 51.2μs. The MII_COL remains unset unless bit 0.7 is set. The default value is 0. |
| 0.13 | Speed selection (LSB) | The data rate is 10Mb/s. Therefore, this bit is not set. |
| 0.12 | Auto-negotiation enable | The auto-negotiation facility is not implemented. Then, this bit is not set. |
| 0.11 | Power down | When this bit is set, then there are no bit received or transmitted on the PLT medium. The default value is 0. |
| 0.10 | Isolate | When set, the CDMA chipset is electrically isolated from the MII. It must not respond to MII_TXD, MII_TX_EN, MII_TX_ER. It must present a high impedance on the outputs MII_TX_Clk, MII_RX_Clk, MII_RX_DV, MII_RX_ER, MII_RXD, MII_COL, MII_CRS. The default value is 0. |
| 0.9 | Restart auto-negotiation | The auto-negotiation facility is not implemented. Then, this bit is not set. |

(continued)

| Register address | Register name | Description |
|---|---|---|
| 0.8 | Duplex mode | The CDMA chipset operates in half-duplex mode. Then, this bit is not set. |
| 0.7 | Collision test | When set, the CDMA chipset must respond to the assertion of the MII_TX_EN by the assertion of the MII_COL within 51.2µs. The CDMA chipset must respond to the de-assertion of the MII_TX_EN by the de-assertion of the MII_COL within 0.4µs. The default value is 0. |
| 0.6 | Speed selection (MSB) | The data rate is 10Mb/s. Therefore, this bit is not set. |
| 0.5 to 0 | Reserved | Reserved - always reads 0. |

The status register is stored at the address 1. All these registers are read only. They can not be written using the management interface.

| Register address | Register name | Description |
|---|---|---|
| 1.15 | 100base-T4 | Reads 0 indicating that the CDMA chipset lacks the ability to perform link transmission and reception using the 100BASE-T4 signaling specification. |
| 1.14 | 100base-X duplex | Reads 0 indicating that the CDMA chipset lacks the full ability to perform full duplex link transmission and reception using the 100BASE-X signaling specification. |
| 1.13 | 100base-X duplex | half Reads 0 indicating that the CDMA chipset lacks the ability to perform half-duplex link transmission and reception using the 100BASE-X signaling specification. |
| 1.12 | 10Mb/s duplex | full Reads 0 indicating that the CDMA chipset lacks the ability to perform full duplex link transmission and reception while operating at 10Mb/s. |
| 1.11 | 10Mb/s duplex | half Reads 1 indicating that the CDMA chipset have the ability to perform half-duplex link transmission and reception while operating at 10Mb/s. |
| 1.10 | 100base-T2 full duplex | Reads 0 indicating that the CDMA chipset lacks the ability to perform full duplex link transmission and reception using the 100BASE-T2 signaling specification. |
| 1.9 | 100base-T2 half duplex | Reads 0 indicating that the CDMA chipset lacks the ability to perform half-duplex link transmission and reception using the 100BASE-T2 signaling specification. |
| 1.8 | Extended status | Reads 0 indicating that the extended status is not implemented |
| 1.7 | Reserved | Reserved - always reads 0. |
| 1.6 | MF preamble suppression | Reads 0 indicating that the CDMA chipset is not able to accept management frames unless they are preceded by the preamble pattern. |
| 1.5 | Auto-negotiation complete | Reads 0. The CDMA chipset lacks the auto-negotiation capability. |
| 1.4 | Remote fault | Reads 0. The CDMA chipset has no provision for remote fault detection. |
| 1.3 | Auto-negotiation ability | Reads 0 indicating that the CDMA chipset lacks the ability to perform auto-negotiation. |

(continued)

| Register address | Register name | Description |
|---|---|---|
| 1.2 | link status | If the link is up, reads 1. If there is a link failure, this bit must be unset and remains unset until this register is read via the management interface. Always reads 1. |
| 1.1 | Jabber detect | Reads 0 indicating that the CDMA chipset lacks the ability to perform jabber detect. |
| 1.0 | Extended capability | Reads 0 indicating that the CDMA chipset does not include the extended register set but only the basic register set. |

The principle of the CDMA frame generation is following. The LK12001 communicates with several users (up to 10) by sending to these users some ethernet frames. The frames emitted on the PLT medium are CDMA frames.

The CDMA frame includes the three different fields: a start of frame flag (SOF), a header and a payload. The two latter are obtained from the MII controller or the system controller. These three frames are serially concatenated in this order (SOF first, then the header and finally the payload), and encoded so as to protect them against error bursts when transmitted.

The Start of Frame Flag (SOF) is used at reception end to detect the beginning of a frame.

The header contains some key of the payload scrambler and has a specific structure (see below). This header is protected with a Reed-Solomon error correcting code and is sent directly on the channel without interleaving.

The payload encapsulates a whole Ethernet frame that is convolutionally encoded and interleaved (see below).

A multiplexer (see Fig 9, HDMUX block) then concatenates these three fields so as to generate a CDMA frame system information (data frame length, kind of payload encoding, initialization).

The block presented in Fig 10 produces the *start of frame* flag . The flag value is 011010010110. The description of the input and output signal of this block is following :

| Name | Description |
|---|---|
| SOF_flag_enable | If high, this blocks works. |
| SOF_flag_clock | Its rate is the output bit rate: $1/T_s$ |
| SOF_flag_out | The output. |
| SOF_flag_out_enable | If high, the output is enable. |

The CDMA frame header is composed of 36 bits. This header includes the following fields :

- the type of the forward error correcting code, used to protect the data (4 bits),
- payload scrambler initialization (4 bits)
- the length of the data frame (16 bits)
- an unused field of 12 bits (for future use)

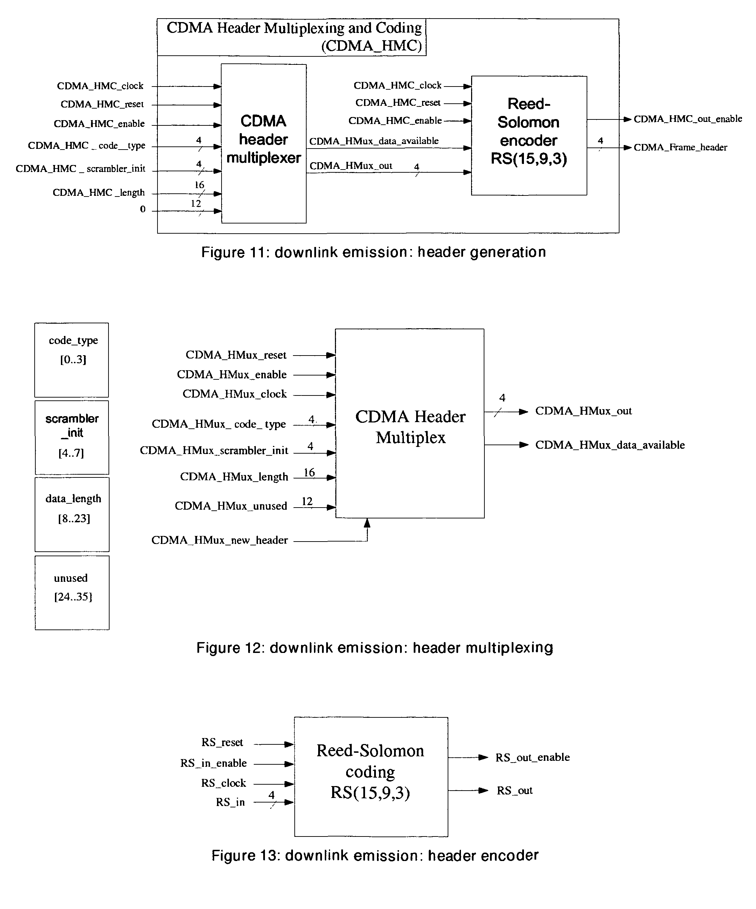

The header is received in parallel on a bus of size 36 bits and has to be sequentially output with 4-bit symbols. This is the role of the CDMA Header Multiplexer (CDMA_HMux). When multiplexed, the Header must be then encoded by a Reed-Solomon Encoder. As shown on Fig 11, the Reed Solomon Encoder works with 4-bit information words (see next paragraph for details). The global structure for downlink emission comprises a CDMA header multiplex, shown on Fig 12, and a downlink emission header encoder, Reed Solomon coding RS (15, 9, 3) shown on Fig 13.

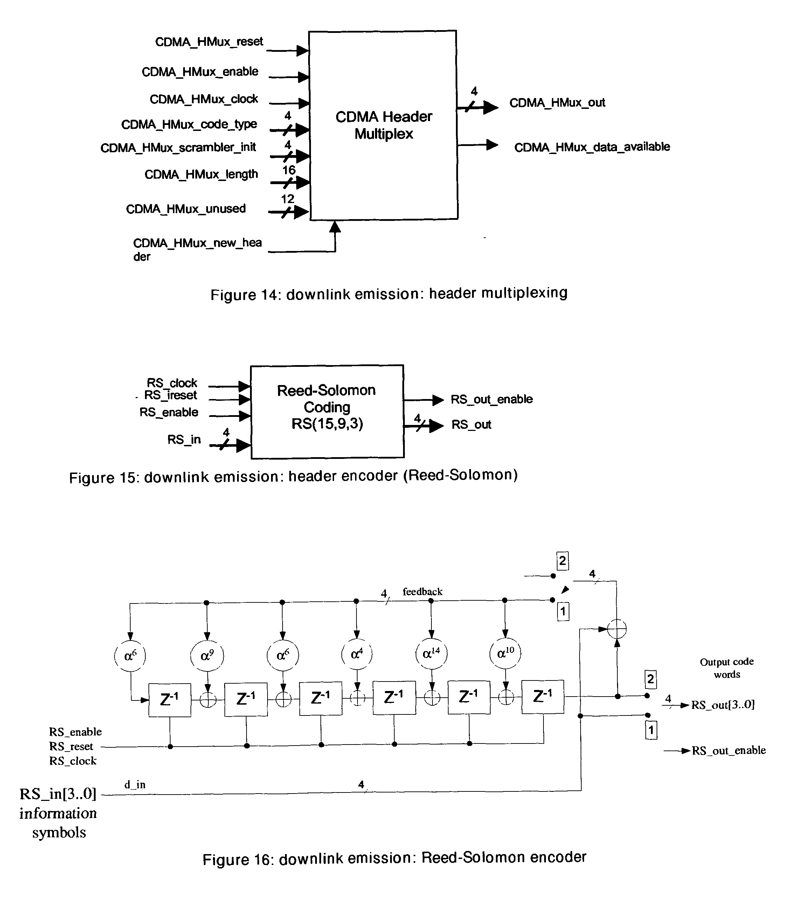

The goal of the CDMA Header Multiplexer is to sequentially output the header received on a 36-bit bus as shown on Fig 14.

The Functional Behavior of this multiplexer is the following :

```
if(CDMA_HMux_reset is low)
        •       the internal register are set to 0
        •       CDMA_HMux_data_available = 0
        •       wait_for_new_header =1   // internal state
        •       deliver_data =0          // internal state
else
        if(CDMA_HMux_enable is high)
                if(CDMA_HMux_new_header is high)&(wait_for_new_header =
                1)
                •       read new header on input
                •       wait_for_new_header = 0
                •       deliver_data = 1
                •       count = 0
                end // if new_header
                if(deliver_data=1)
                •       deliver data on output
                •       CDMA_HMux_data_available =1
                •       count = count+1
                •       if(count=36)




                        ○               wait_for_new_header =1
                        ○               deliver_data =0
                •       end // if count
                else // deliver_data =0
                        CDMA_HMux_data_available = 0
                end // if deliver_data
        elseif(CDMA_HMux_enable is low)
                •       CDMA_HMux_data_available =0
        end // elseif enable
        end // else reset
```

The input and output signals for this multiplexer are given below.

| Name | Description |
| --- | --- |
| CDMA_HMux_clock | This clock corresponds to the chip clock. Its rate is 1/Tc. |
| CDMA_HMux_reset | Reset the Frame Header Multiplexer |

(continued)

| Name | Description |
|---|---|
| CDMA_HMux_enable | A rising edge corresponds to the beginning of a frame. Therefore, the fields have to be read from the different input. |
| CDMA_HDR_code _type | Code Type field (4-bit bus) |
| CDMA_HMux_ scrambler_init | The initialization state of the scrambler (4 bits) |
| CDMA_HMux_length | Data Length field (16-bit bus) |
| CDMA_HMux_unused | Unused field (12-bit bus) |
| CDMA_HMux_out | Frame Header Output |
| CDMA_HMux_outenable | Enable for next DeMultiplex module |

The header is protected against error bursts through the use of a (systematic) Reed-Solomon(15,9,3) encoder, shown in Fig 15, whose parameters are :

- $m=4$      (dimension of the Galois Field GF(16))
- $n=2^m-1=15$
- $t=3$      (symbol-error correcting capability)
- $k=n-2t$      (number of information symbol)
- $dmin=n-k+1$ (minimum distance)

The Reed Solomon Encoder must be fed with 9 successive information symbols of m bits (m=4) on its input *RS_in*. The Encoder will output (on *RS_out*) the 9 input words (36 bits) as they are, and will produce 6 additional symbols of m bits leading thus to a an amount of 60 coded bits (structured as 4-bits words).

The representation of the encoder of Fig 15 is based on the extension Galois Field GF(16) created with the primitive polynomial $p(x) = x^4+x+1$ . The primary element of GF(16), denoted $\alpha$, is a root of p(x), i.e. $p(\alpha)= \alpha^4+ \alpha +1=0$ : the element $\alpha$ generates the Galois field GF(16) through the set of its powers :

$$GF(16) = \{0,1,\ \alpha\ ,\ \alpha^2\ ,...,\ \alpha^{14}\}$$

where $14 = 2^m-2$. Let recall that the primary element satisfies $\alpha^{15}=1$.

From $p(\alpha)=0$ property, each element of GF(16) can be represented as a polynomial of $\alpha$ of degree less or equal to 3 (m-1) by taking the remainder of an element, considered as a power of $\alpha$, modulo $p(\alpha)$. Equivalently we can take the binary coefficients of this polynomial representation so as to represent the elements of GF(16). For instance, as $\alpha^4+ \alpha +1=0$, we may write that $\alpha^4 = \alpha +1 = 0.\ \alpha^3 + 0.\ \alpha^2 + 1.\alpha +1.\ \alpha^0$, or [0011]. Each element $a \in$ GF(16) thus writes :

$$a = a_0 + a_1.\alpha + a_2.\ \alpha^2+ a_3.\ \alpha^3 = [a_3\ a_2\ a_1\ a_0]$$

with $a_i$, binary coefficients. We thus get the following binary representation table :

| Field element | Basis Representation [ $\alpha^3\ \alpha^2\ \alpha\ \alpha^0$ ] |
|---|---|
| 0 | [ 0000 ] |
| 1 | [ 0001 ] |
| $\alpha$ | [ 0010 ] |
| $\alpha^2$ | [ 0100 ] |
| $\alpha^3$ | [ 1000 ] |
| $\alpha^4$ | [ 0011 ] |
| $\alpha^5$ | [ 0110 ] |
| $\alpha^6$ | [ 1100 ] |
| $\alpha^7$ | [ 1011 ] |

| Field element | Basis Representation [ $\alpha^3\ \alpha^2\ \alpha\ \alpha^0$ ] |
|---|---|
| $\alpha^8$ | [ 0101 ] |
| $\alpha^9$ | [ 1010 ] |
| $\alpha^{10}$ | [ 0111 ] |
| $\alpha^{11}$ | [ 1110 ] |
| $\alpha^{12}$ | [ 1111 ] |
| $\alpha^{13}$ | [ 1101 ] |
| $\alpha^{14}$ | [ 1001 ] |

This representation is useful for hardware representation. The binary representation of the elements of GF (16) is particularly convenient when performing sums of elements : only modulo-2 additions of the binary vector representation coefficients have to be performed (without considering any carry).

In the sequence, either the binary representation of the elements of GF(16) or their representation in terms of powers of $\alpha$ are indistinctly used.

The systematic RS(15,9,3) encoder is defined by the following polynomial :

$$g(x) = \alpha^6 + \alpha^9.x + \alpha^6.x^2 + \alpha^4.x^3 + \alpha^{14}.x^4 + \alpha^{10}.x^5 + x^6$$

A codeword c(x), seen as a polynomial of degree n-1 with coefficients in GF(16), associated with the information word m(x) (of degree k-1) may be expressed as :

$$c(x) = x^{n-k}.m(x) + (x^{n-k}.m(x) \bmod g(x))$$

Thus, the codeword has n-k more symbols than the information message m(x). This encoder can be implemented according to the following scheme shown in Fig 16 with 6 shift registers.

On position 1 (position 1 is set when reset is active), the information symbols from *RS_input[3..0]* are passed through the linear feedback shift registers (LFSR), but the result of the LFSR is not of interest : the information message feeds the output.

When the whole information message has fed the encoder, then position 2 is set : the remainder of the division of $x^{n-k}$.m(x) by g(x) is contained in the LFSR and must be emptied to feed the output and complete the code word. At the same time, during position 2, the LFSR is fed back with null symbols.

Input and output signals of this Reed Solomon encoder are

| Name | Description |
|------|-------------|
| RS_clock | This clock corresponds to the chip clock. Its rate is 1/Tc. |
| RS_reset | Reset the Frame Header Multiplexer |
| RS_enable | If high, the encoder works. If low, the encoder does not work, and RS outenable must be set to low. |
| RS_ in | Input information words (4-bit bus) |
| RS _out | Ouput Coded Words. (4-bits bus) |
| RS_OutEnable | Output Enable for next module |

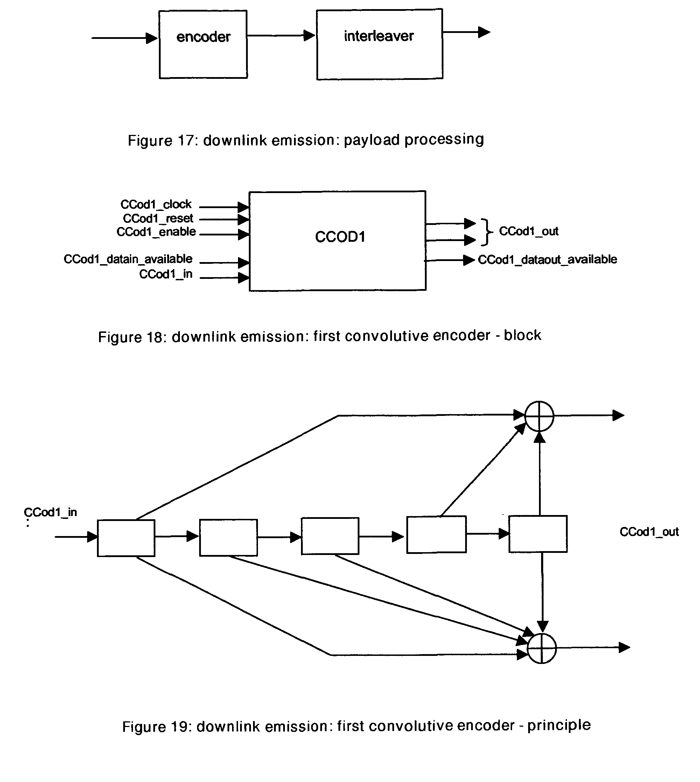

The received payload Ethernet Frame is first convolutionally encoded, then interleaved with a diagonal interleaver according to Fig 17.

Different kind of convolutional encoders are used. The first encoder CCOD1 shown in Fig 18 has the following parameters : k=1, n=2, v=2, and its generator matrix is:

$$G = \begin{pmatrix} 1 & 0 & 0 & 1 & 1 \\ 1 & 1 & 1 & 0 & 1 \end{pmatrix}$$

The principle coding structure of this first encoder is shown in Fig 19. with 5 shift registers. The data (1 bit) arrive bit per bit. The most recent data is stored into the first shift register. Then, it is shifted from the shift register to the next shift register (to the right side). The output data bits (2 bits) are computed using the content of the shift registers.

If the *reset* input is high, then the registers' content are reset.

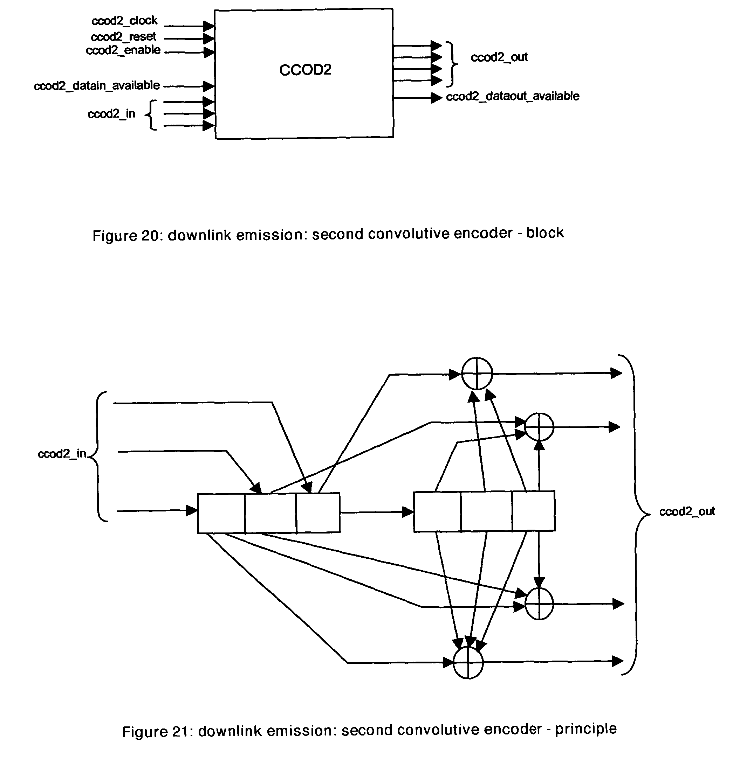

The second encoder CCOD2 is shown in Fig 20, has the following parameters : k=3, n=4, v =2, and its generator matrix is:

$$G = \begin{pmatrix} 0 & 0 & 1 & 0 & 1 & 1 \\ 0 & 1 & 0 & 1 & 0 & 1 \\ 1 & 1 & 0 & 0 & 0 & 1 \\ 1 & 0 & 0 & 1 & 1 & 1 \end{pmatrix}$$

The principle coding structure of this second encoder is shown in Fig 21 with two sets of three shift registers. The data are stored per block of three bits into the first three shift registers. The most recent data is stored into the rightmost shift register. The output data are calculated using the content of the six shift registers. Then, the three leftmost registers are shifted to the three rightmost registers. If the *reset* input is high, then the registers' content are reset.

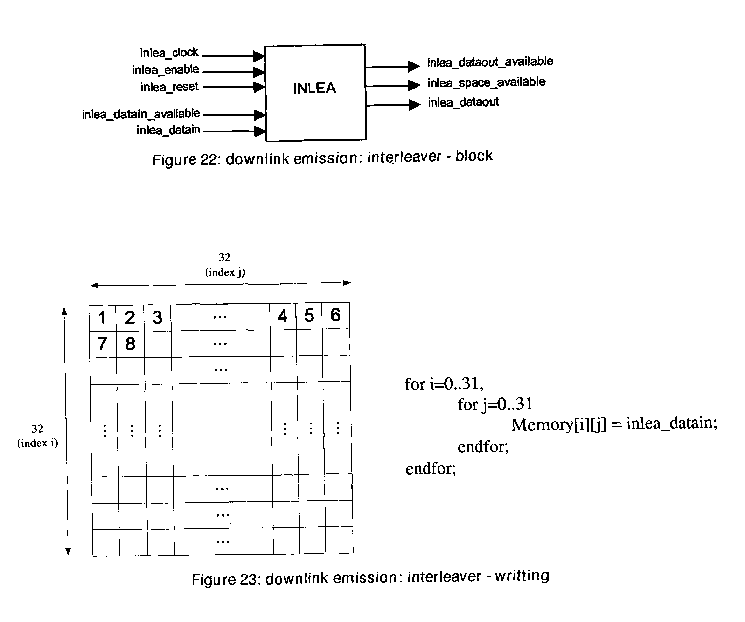

The interleaver block is shown on Fig 22. Its Interleaving Depth is 1024 bits. The purpose of this block is to interleave a block of data of size 1024. It uses a memory (of the same size) in which the data are written linearly (sequentially) and read in another specific order.

In a preferred example, the data are first read on the input and stored into the whole internal memory. While there is some space into the internal memory (the output *inlea_space_available* is high) and some data are available on the input (the input *inlea_data_available* is high), some data can be read from the pin *inlea_datain* and stored sequentially into the internal memory.

The input reading process is described in Fig 23, where the matrix represents the internal memory.

```
for i=0..31,
        for j=0..31
                Memory[i][j] = inlea_datain;
        endfor;
endfor;
```

When the memory is full, he output *inlea_space_available* is set at low level and he output signal *inlea_data_available* is set at high level. The data have to be interleaved and output onto the output signal *inlea_dataout*.

The data are read diagonally from the internal memory and set sequentially to the output in the following way :

The process to read the lower diagonal number d is :

```
read_lower_diagonal(d)
{
for k=0..32-d,
        inlea_dataout = Memory[k+d][k];
endfor
}
```

The first index denotes the line number (into the matrix form of the memory) and the second index denotes the column number.

To read the upper diagonal number d:

```
read_upper_diagonal(d)
{
for k=0..32-d,
        inlea_dataout = Memory[k][k+d];
endfor
}
```

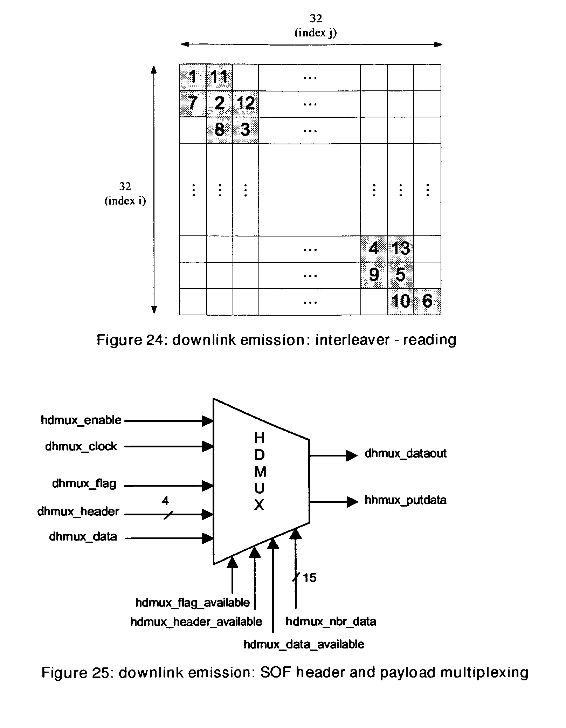

The algorithm used to read the whole memory and put the data onto the output pin *inlea_dataout* is, according to Fig 24 :

```
read_upper_diagonal(0);        // read the main diagonal
for d=1..31,                   // read the other diagonals

        read_lower_diagonal(d);
        read_upper_diagonal(d);
        endfor
```

When the reading is done - at the same time, the writing is done - then the two memory blocks - the one that stores the data read and the one that stores the data written - are switched. There is no reset done.

The input and output signals of this interleaver are

| Name | Description |
|---|---|
| inlea_datain | The bit to be stored into the internal memory of the interleaver. |
| inlea_datain_available | Input data available |
| inlea_clock | The processing clock |
| inlea_reset | If high, the whole the memory is erase. |
| inlea_enable | If high, this block is working. |
| inlea_dataout | The bit read from the internal memory of the interleaver. |
| inlea_space_available | If high, a new bit can be put onto the input signal *inlea_datain* and stored into the internal memory. |
| inlea_data_available | If high, a new data is read from the internal memory and present onto the output *inlea_dataout*. |

Fig 25 shows the downlink emission: SOF header and payload multiplexing block. The purpose of this block is to serially concatenate the start of frame (SOF) flag, the frame header and the payload data.

When a SOF flag is available - *hdmux_flag_available* is high - then the multiplexer reads the 8-bit flag.

After reading the SOF flag, the header have to be read. When a frame header is available - *hdmux_header_available* is high - then the multiplexer reads the 60-bit header per block of 4 bits. These data are placed onto the output - *dhmux_dataout* - and the pin *dhmux_putdata* is set high.

Finally, the data field is read. While the input *hdmux_data_available* is high, the multiplexer reads data from the *hdmux_data* input. The *hdmux_nbr_data* bits represent the length of the CDMA frame (SOF flag + header + data). The input and output signals are :

| Name | Description |
|---|---|
| hdmux_flag | Bits from the flag. |
| hdmux_header | Bits from the Data Header. |
| hdmux_data | Bits from the Data Frame. |

(continued)

| Name | Description |
| --- | --- |
| hdmux_flag_available | If high, a bit from the flag is available. |
| hdmux_header_available | If high, a block of 4 bits from the Frame Header is available. |
| hdmux_data_available | If high, a bit from the Data Frame is available. |
| hdmux_nbr_data | The number of bits of the Data Frame. |
| hdmux_enable | If high, the block works. |
| hdmux_clock | The processing clock. |
| hdmux_dataout | The output data. |
| hdmux_putdata | High if there is some bits on the output (*dhmux_dataout*). |

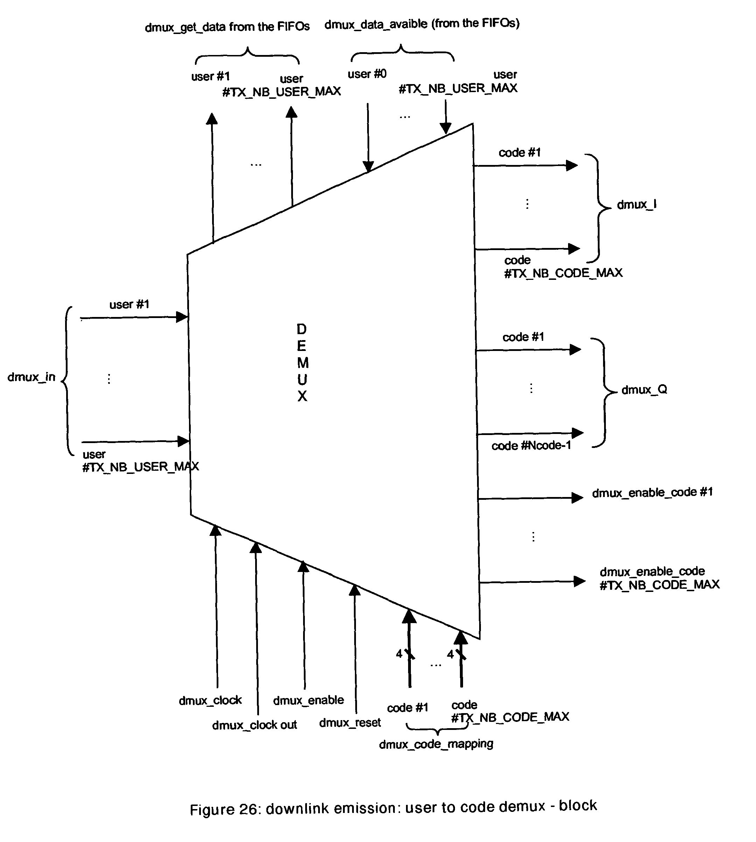

For the Demultiplexing (SSCode_Demux), the CDMA frames have been generated for each user and they are stored into a FIFO for each user. The aim of this block, shown on Fig 26, is to distribute these data on the set of codes for each user. Each code is QPSK modulated - I channel and Q channel - and thus each code can emit two bits each Tc. For each user, there is a set of codes. This set codes is defined by the system controller. The mapping between the user number and the code number is stored into the memory *code to user mapping*.

At each Ts, there must be two bits (I and Q) for each code (or the code is not active). There are Tx_NB_CODES inputs to work out, and Tx_NB_CODES_MAX is theoretically set to 61. For a particular code, the corresponding active user, if one, is defined through its corresponding *dmux_code_mapping bus :* this bus is 4-bit wide. For this code, 2 bits of data are solicited from the user FIFO, using the index of the allocated user. In response, the user FIFO indicates if any data are available or not (*dmux_data_available* inputs). If available, the user FIFO delivers 2 bits of data (*dmux_in* inputs), and the *Demux* delivers these data onto the corresponding I&Q outputs. If no data are available in FIFO, then the code is set *inactive* by the Demux (*dmux_enable_code* outputs).

The algorithm which is performed by this Demux is following :

```
        for code_index = 1:Tx_NB_CODES_MAX-1,
   - get user index :
        read the code_index th dmux_code_mapping input (4-bit) ,
        decode it so as to store the user index into the variable UserNbr,
            ▪           if UserNbr = 0 then
                        the code #code_index is set to inactive,
                        the output dmux_enable_code #code_index is set to low
            ▪           else
                        get the data from the FIFO corresponding to the user
                        UserNbr :
                                set to high state the output dmux_get_data
                                #UserNbr
                        wait for response from the corresponding #UserNbr FIFO
                        if the input dmux_data_available #UserNbr is low
                                set to low the output dmux_enable_code
                                #code_index
                                (the code #code_index is thus inactive)
                        else
                                enable the code #code_index : set the output
                                dmux_enable_code #code_index to high
                        read the data from input dmux_in #UsrNbr
                        output it onto the ouput dmux_I #code_index
   - the same process as above is performed to get the data for the ouput
   dmux_Q #code_index
   end for
```

The input and output signals thereof are following :

| Name | Description |
|---|---|
| dmux_in | For each user, the symbols to be sent. |
| dmux_code mapping | For each code, the number of the corresponding user. |
| dmux_data available | If, for the corresponding user, there is no more data to be transmitted, then, this input is high. |
| dmux_reset | If high, reset all the memories. |
| dmux_enable | If low, the demux does not work. |
| output data (I&Q) | The data to be sent using the corresponding code. |
| dmux_enable_code | If low, the corresponding code is deactivated. |
| dmux_get_data from the FIFOs | Command to the corresponding FIFO to deliver some new data. |

The output clock's rate is 1/Ts. A rising edge corresponds to a new data on the outputs. It is the processing clock.

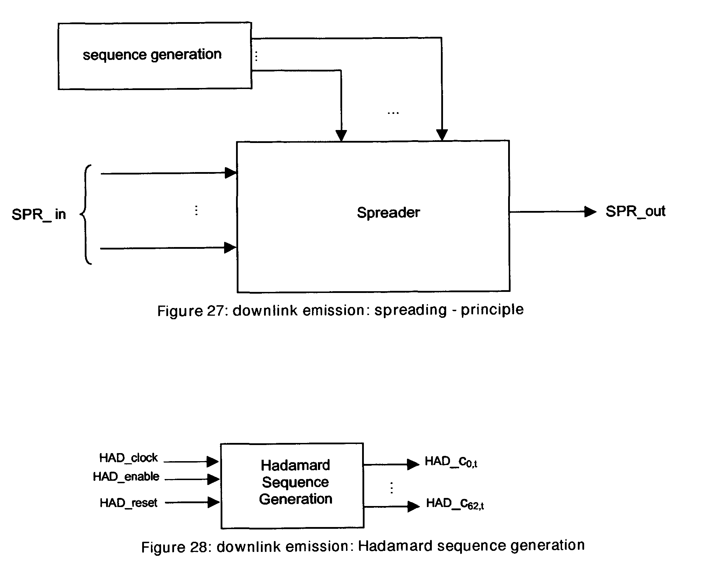

For spreading and modulation, the spreading principle is following as shown on Fig 27 for downlink emission. The *sequence generation* generates the chips of each code. The *spreader* codes the data using the chips from the *sequence generation,* and the output signal is formed.

The spreading sequences used for the downlink are the Hadamard sequences.

All the Hadamard sequences are 64-chip sequences. To generate the matrix of the $2^k$-chip Hadamard sequences, $H_k$, the following iterative property is used:

- $H_0 = 1$

-

$$H_k = \begin{bmatrix} H_{k-1} & H_{k-1} \\ H_{k-1} & -H_{k-1} \end{bmatrix}$$

To generate the i-th Hadamard sequence of length $2^k$ - i.e. the i-th line of $H_k$ - the binary representation of i is required : let $[a_{k-1} \dots a_0]$ the binary representation of index i where $i = a_{k-1}.2^{k-1} + \dots a_1.2 + a_0$. In the sequel, the ith Hadamard sequence is denoted $C_i = [c_{i,0} \dots c_{i,63}]$:

- $c_{i,0} = 1$
- if $a_0 = 0$ : $c_{i,1} = c_{i,0}$ else $c_{i,1} = 1 - c_{i,0}$ ($[c_{i,0}\ c_{i,0}]$ or $[c_{i,0}\ 1 - c_{i,0}]$)
- for l=1 to k-1

  o stage l :

  - code is already defined up to $[c_{i,0} \dots c_{i,2^l-1}]$
  - code up to $[c_{i,0} \dots c_{i,2^{l+1}-1}]$ is defined as follows :
  - if $a_l = 0$ : $[c_{i,0} \dots c_{i,2^{l+1}-1}] = [[c_{i,0} \dots c_{i,2^l-1}]\ [c_{i,0} \dots c_{i,2^l-1}]]$
  - if $a_l = 1$ : $[c_{i,0} \dots c_{i,2^{l+1}-1}] = [[c_{i,0} \dots c_{i,2^l-1}]\ [1 - c_{i,0} \dots 1 - c_{i,2^l-1}]]$

The first Hadamard sequence is constant. Therefore, this sequence is discarded.

These 63 Hadamard sequences are stored into a memory and delivered in parallel, chips per chips, at the rate 1/Tc by the circuit shown on Fig 28.

The signal input, in this Hadamard sequence generator, are :

| Name | Description |
|---|---|
| HAD_clock | This clock corresponds to the chip clock. Its rate is 1/Tc. |
| HAD_enable | If high, this block works normally. |
| HAD_reset | If it high, then the internal memory and all the shift registers are reset. |

The output signals are the chips. Their rate is 1/Tc.

The spreader of Fig 27 receives TX_NB_CODES binary input streams (maximum 63) and spreads these inputs with the Hadamard spreading codes read from the spreading code generation module. The maximum number of inputs is equal to 63. Each input i must be considered as active if the signal *spr_enable[i]* is set to high.

There are two particular codes which are dedicated to the synchronization. These codes are the code #31 and the code #63. For these codes, a constant symbol "1" is BPSK modulated (no data on the Q channel).

The spreader first performs a binary chip-by-chip logical spreading (a binary logical sum) of the active inputs using the available spreading codes. Two nodes are used so as to count respectively the number of "1"'s (first node) and "0"'s (second node) in the digital spread signals. The result of each counter is unsigned and is coded on 6 bits. In order to generate a global BPSK modulated signal, the output of node 2 is subtracted to the output : the result is thus a signed integer on 8 bits.

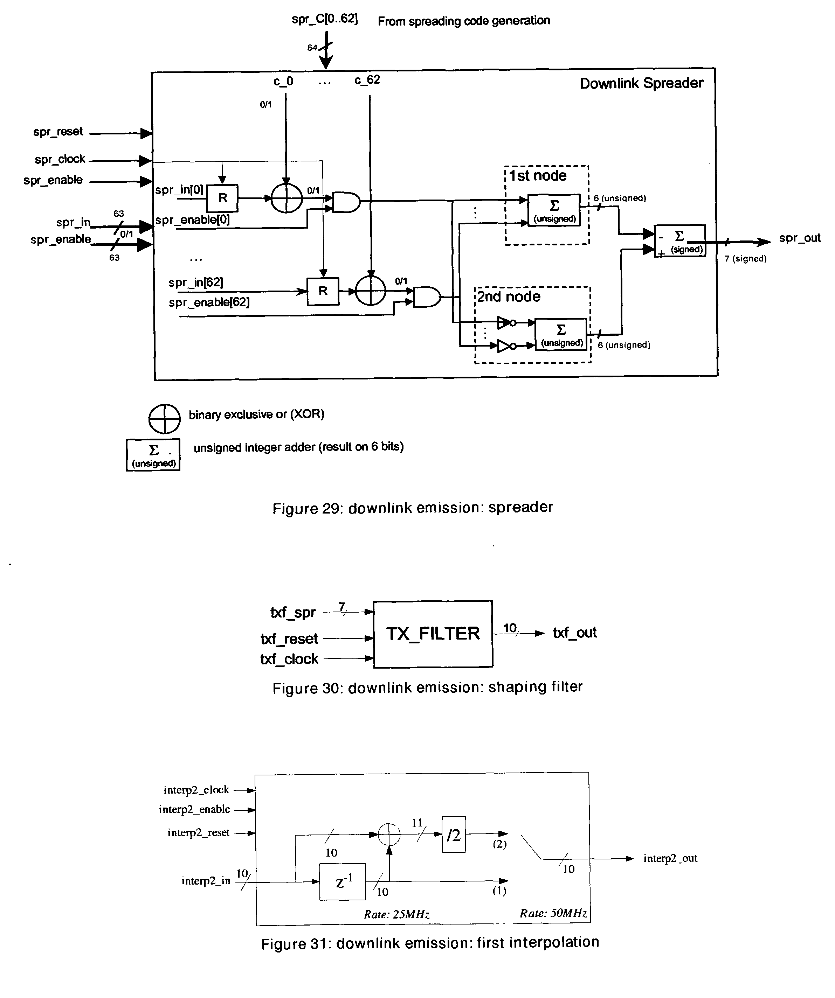

The functional description of the spreader is given below on Fig 29.

The input and output signals for this spreader are :

| Name | Description |
|---|---|
| spr_in[0..62] | Binary symbols' input bus of size 64 of binary symbols (0/1) |
| spr_enable[0..62] | Bus of active inputs' flags used to specify which inputs are active or not |
| spr_C[0..62] | Binary Hadamard Spreading Codes |
| spr_clock | Processing clock (Tc) |
| spr_reset | Reset the memory. |
| spr_enable | Active low state input used to specify the active state of the spreader |
| spr_out[0..6] | Output signal : the output signal is the modulated and spread signal coded on 8-bit signed integers. |

The following parameters are utilized :

TX_NB_CODES : the number of active inputs.
TX_NB_CODES_MAX : = 63 (maximum number of active inputs)

The in out timing is :

- Input bits (in_1,...,in_63) occur at rate Ts=64.Tc
- Output bits occur at rate Tc
- Code chips (c_1,...,c_63) occur at rate Tc

The Tx shaping filter shown on Fig 30 performs the filtering of the digital input data with a square root FIR raised cosine filter with a roll-off factor of 0.22. The filter's coefficients are stored into an internal memory (half filter is stored due to its symmetry) in a 10-bit fixed point format. The input data rate is 5 Mhz (Fc in downlink,) and the output data rate is 25 MHz. Thus, for a given input sample, 5 output samples are produced in the following time. The input data are first over-sampled by a factor 5 (insertion of 4 "0"s between two data), and then passed into the shift registers at rate 25 Mhz.

A *reset* signal is used to initialize the internal shift registers to the null value.

As a certain number of shift registers are zero valued at a given time, only the non-null valued shift registers will be processed at each time to compute the filter output. In other words, during a chip period, all the 5 phases components of the filter are processed sequentially and independently using the same state of the shift register.

The input and output signals are :

| Name | Description |
|---|---|
| txf_reset | Active low state input : initializes the internal state of the filter (null values for the shift register) |
| txf_dock | Processing clock (25MHz) |
| txf_enable | Active low state input : specify the active state of the filter |
| txf_in[7..0] | Input data |
| txf_out[0..9] | Output signal : the output signal is coding the modulated and spread signal on 10-bits signed integers. |

The output data rate is 25MHz. The output data are formatted in a 10-bit fixed point format.

The number of filter's coefficient is : N_coef= 13.

The filter's coefficients are formatted in a 10-bit signed format. There are 13 filter's coefficients.

| Filter's coefficient value (real) | Filter's coefficient value (fixed point) |
|---|---|
| 1 | 0111111111 (511) |
| 0.92566898454465 | 0111011001 (473) |
| 0.72303324392894 | 0101110001 (369) |

(continued)

| Filter's coefficient value (real) | Filter's coefficient value (fixed point) |
|---|---|
| 0.44636778638057 | 0011100100 (228) |
| 0.16599777270489 | 0001010100 (84) |
| - 0.05407304737984 | 1111100101 (-27) |
| - 0.17501812439354 | 1110100111 (-89) |
| - 0.19215861829932 | 1110011110 (-98) |
| - 0.13167851017065 | 1110111101 (-67) |
| - 0.03738655434622 | 1111101101 (-19) |
| 0.04670069727227 | 0000010111 (23) |
| 0.09119747809226 | 0000101110 (46) |
| 0.08855908308856 | 0000101101 (45) |

The input data rate is 5 Mhz. The output data rate is 25 MHz.
Just after the *Tx FIR* filter block, the data are interpolated by a factor 2, according to Fig 31, in order to get a sampling rate of 50MHz. The interpolator compute the mean sample between two consecutive input samples and insert this sample between these two samples to the output. Thus the output rate is twice the input rate.
The input and output signals of this interpolator are:

| Name | Description |
|---|---|
| interp2_clock | Processing clock |
| interp2_enable | Active low state input: specify the active state of the interpolator |
| interp2_reset | Active low state input : initializes the internal state of the interpolator (null values for the shift registers) |
| interp2_in | Input data. It is coded on n bits. |
| interp2_out | Input data. It is coded on n bits. |

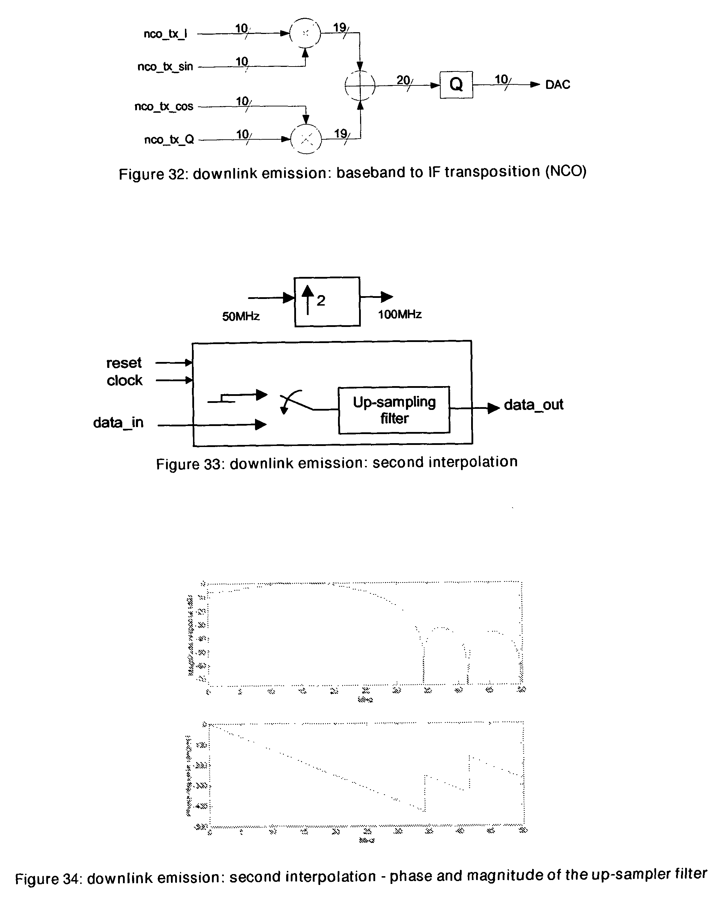

n : represents the input and the output dynamic.
The NCO block of Fig 4 is shown in details on Fig 32. This block delivers an in-phase and in-quadrate carrier for the Tx path. Considering the PLNC side, Tx is downlink. The carrier frequency is defined as 15 MHz. The input and output sampling rate is 50MHz. It performs a baseband to IF transposition.
Input I&Q data are coming from the interpolator and are quantified on 10 bits. The input data rate is 50 MHz.
Tabulated values of the sine and cosine functions are given in the table below. These values are stored into an internal memory. Carrier frequency is set to 15MHz and values are generated at rate 50 MHz and quantified using a signed 10-bit format.
To compute these values:

$$\cos \text{table}(k) = \cos(2\pi v_c(k/F_s)) = \cos(2\pi k.3/10)$$

$$\sin \text{table}(k) = \sin(2\pi v_c(k/F_s)) = \sin(2\pi k.3/10)$$

where:

$v_c$, the carrier frequency (15 MHz)
$F_s$, the sampling frequency (50 MHz)

Only one period and a half is stored into the internal memory. To compute three periods:

cos(k) = cos table(k) if k∈ [[0; 4]]

cos(k) = -cos table(k-5) if k∈ [[5; 9]]

where:

Cos table(k) the tabulated values of the cosine stored into the internal memory
sin(k) = sin table(k) if k∈ [[0; 4]]
sin(k) = -sin table(k-5) if k∈ [[5; 9]]

where: Sin table(k) the tabulated values of the sine stored into the internal memory

As the cosine and the sine are periodical functions with of period of 2π, only these values are useful : sin (k+10) = sin(k) and cos(k+10) = cos(k)

Then, the result is: out(k) = I(k).sin(k)+Q(k).cos(k)

| Cos (real) | Cos (fixed point) | Sin (real) | Sin (fixed point) |
|---|---|---|---|
| 1.00000000000000 | 0111111111(511) | 0 | 0000000000 (0) |
| - 0.30901699437495 | 1101100010 (-158) | 0.95105651629515 | 0111100110 (486) |
| - 0.80901699437495 | 1001100011 (-413) | -0.58778525229247 | 1011010100 (-300) |
| 0.80901699437495 | 0110011101 (413) | -0.58778525229247 | 1011010100 (-300) |
| 0.30901699437495 | 0010011110 (158) | 0.95105651629515 | 0111100110 (486) |

After the NCO Tx, the signal, which is around the carrier frequency (15 MHz), is up-sampled by a factor of 2, according to Fig 4, in order to have an output sampling frequency of 100MHz. To do so, a linear up-sampler according to Fig 33 is applied.

First, a "0" bit is inserted between two data bits. Then, the signal is interpolated using a linear filter. This filter just delete the image signal around the frequency 35MHz (input sampling rate-carrier frequency = 50MHz-15MHz = 35MHz). This filter is a FIR filter. Its coefficients are:
-110 -174 99 511 511 99 -174 -110

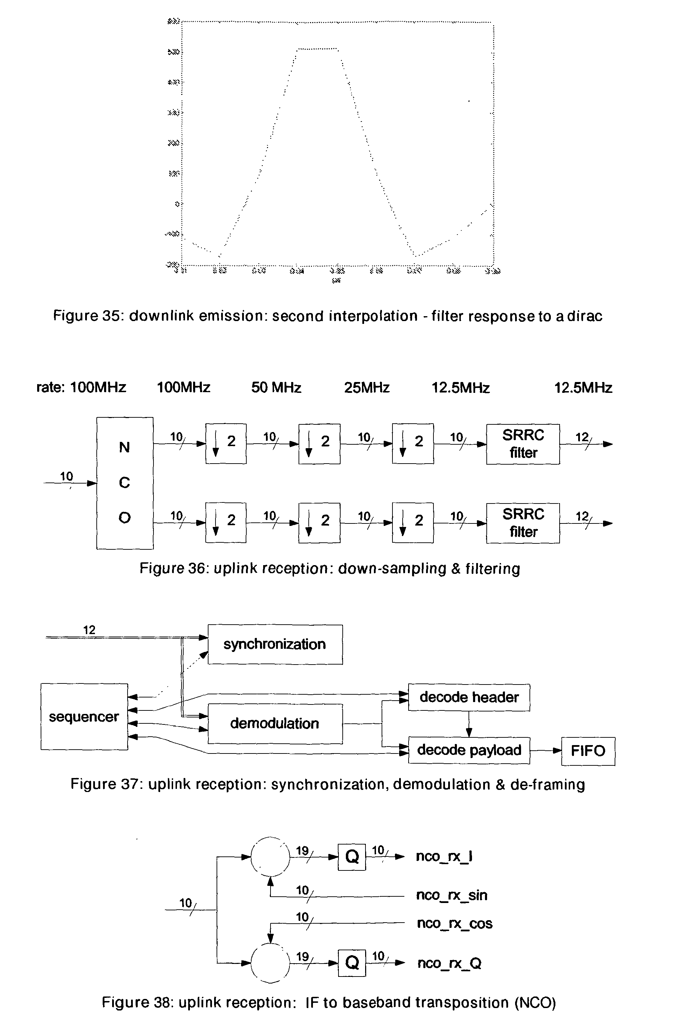

The filter obtained has a magnitude and a phase response shown on fig 34. Its timing response to a Dirac is shown on Fig 35.

MASTER LK12001 UPLINK RECEPTION

Herein below, the specification of the RX uplink is given since it is included in the MASTER Chip LK12001. For the uplink - reception side, intermediate frequency (IF) transposition, down sampling and filtering according to Fig 36 and a synchronization, demodulation and de-framing according to Fig 37 are performed.

The goal of the signal processing subsystem is to perform

o    IF to baseband transposition (NCO block)
o    down-sampling
o    filtering (SRRC filter)

The input sample rate is 100MHz. The samples are quantified on 10 bits. The central frequency is 20MHz. The output sample rate is 12.5MHz. The samples are quantified on 12 bits. The output signal is a baseband signal.

For IF to baseband transposition, the NCO_Rx of Fig 36 is shown in details on Fig 38. It delivers the in-phase and in-quadrate signals calculated from the input carrier signal. Considering the PLNC side, Rx is uplink. The carrier frequency is defined at 20 MHz for Rx uplink. The sample rate for the input and output samples is 100MHz.

Tabulated values of the sine and cosine functions are given in the table below. These values are stored into an internal memory. Carrier frequency is set to 20MHz for the Rx uplink and values are generated for a 100 MHz sample rate and quantified using a signed 10-bit format.

To compute these values:

$$\text{Cos table(k)} = \cos(2\pi v_c(k/F_s)) = \cos(2\pi k/5)$$

$$\text{Sin table(k)} = \sin(2\pi v_c(k/F_s)) = \sin(2\pi k/5)$$

where:

$v_c$, the carrier frequency (20 MHz)
$F_s$, the sampling frequency (100 MHz)

Only one period and a half is stored into the internal memory. To compute three periods:

$$\text{Cos(k)} = \text{Cos table(k) if } k \in [[0; 4]]$$

where: Cos table(k) the tabulated values of the cosine stored into the internal memory

$$\text{Sin(k)} = \text{Sin table(k) if } k \in [[0; 4]]$$

where: Sin table(k) the tabulated values of the sine stored into the internal memory

As the cosine and the sine are periodical functions with of period of $2\pi$, only these values are useful : Sin (k+5) = Sin(k) and Cos(k+5) = Cos(k)

Then, the result is: out(k) = I(k).Sin(k)+Q(k).Cos(k)

| Cos (real) | Cos (fixed point) | Sin (real) | Sin (fixed point) |
|---|---|---|---|
| 1.00000000000000 | 0111111111(511) | 0 | 0000000000 (0) |
| 0.30901699437494 | 0010011110 (158) | 0.95105651629515 | 0111100110 (486) |
| -0.80901699437495 | 1001100011 (-413) | 0.58778525229247 | 0100101100 (300) |
| -0.80901699437495 | 1001100011 (-413) | -0.58778525229247 | 1011010100 (-300) |
| 0.30901699437495 | 0010011110 (158) | -0.95105651629515 | 1000011010 (-486) |

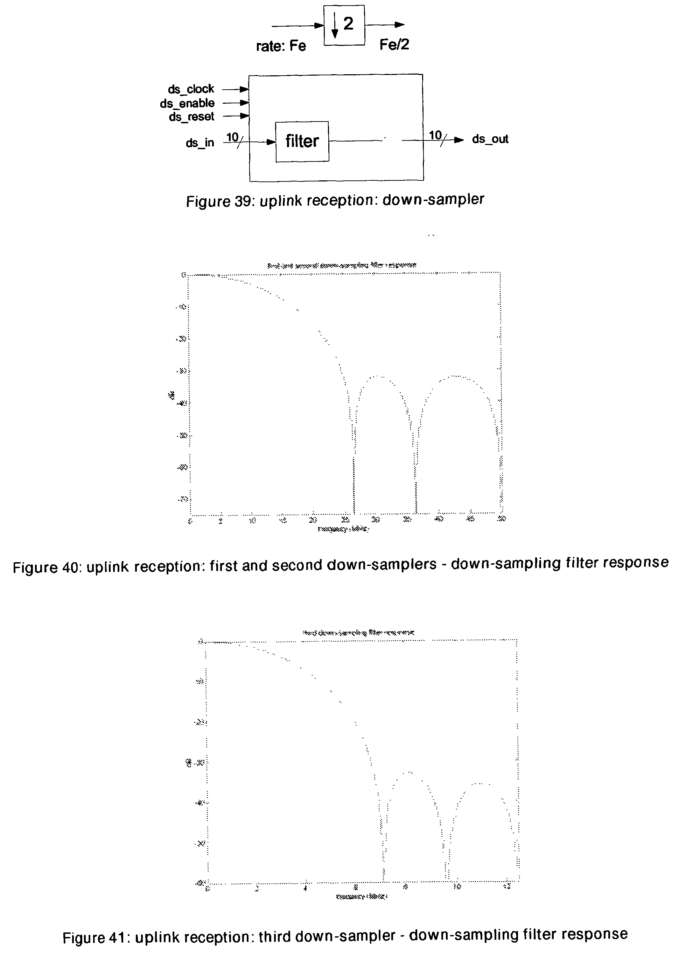

The down sampling blocks of Fig 36 are shown in detail on Fig 39. This block decreases the sampling rate by a factor of 2. A filter is applied just before the down sampling to avoid the aliasing effects. Three down-samplers are used between the NCO_Rx and the SRRC filter. The signal is a baseband signal, whose max frequency is 1.525MHz.

The main purpose of the filter is to avoid the aliasing effects. It keeps only the baseband frequency (between -1.55MHz and 1.55MHz) and attenuate all the other frequencies. The attenuation must be high for the frequencies above Fe/2, where Fe is the input sampling rate.

For the two first down-samplers, the filter's coefficients are: 136, 341, 511, 511, 341, 136. Their response is shown on Fig 40.

For the third down-sampler, the filter's coefficients are: -13, 94, 316, 511, 511, 316, 94, -13. Their response is shown on fig 41.

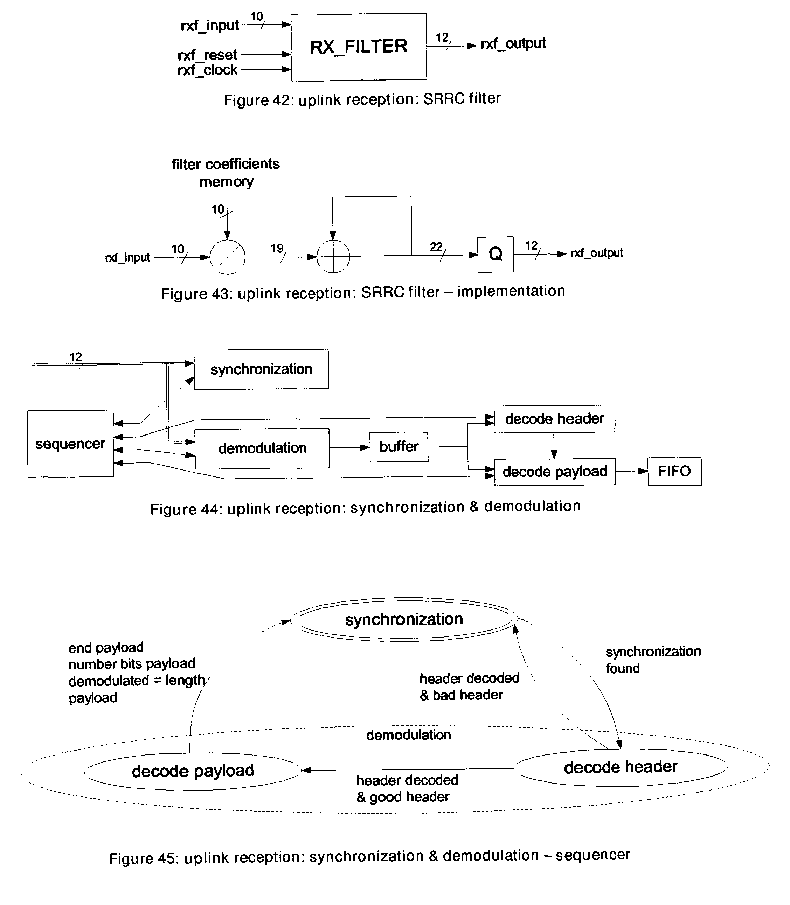

The Rx SRRC filter of Fig 36 are shown in principle and as an example on Fig 42 and 43 respectively. this filter performs the filtering of the digital input signal with a square root FIR raised cosine filter with a roll-off factor of 0.22. The filter's coefficients are stored into an internal memory (half filter is stored, due to symmetry) in a 10-bit fixed point format. The input and output data rate is symbol rate/5, that is 12.5MHz in uplink,. The input signal is passed into the shift registers.

A *reset* signal is used to initialize the internal shift registers to the null value.

The number of filter's coefficient is : N_coef = 13.

The filter's coefficients are formatted in a 10-bit signed format. There are 13 filter's coefficients.

| Filter's coefficient value (real) | Filter's coefficient value (fixed point) |
|---|---|
| 1 | 0111111111 (511) |
| 0.92566898454465 | 0111011001 (473) |
| 0.72303324392894 | 0101110001(369) |
| 0.44636778638057 | 0011100100 (228) |
| 0.16599777270489 | 0001010100(84) |
| -0.05407304737984 | 1111100101 (-27) |
| -0.17501812439354 | 1110100111 (-89) |
| -0.19215861829932 | 1110011110 (-98) |
| -0.13167851017065 | 1110111101 (-67) |
| -0.03738655434622 | 1111101101 (-19) |
| 0.04670069727227 | 0000010111 (23) |
| 0.09119747809226 | 0000101110 (46) |
| 0.08855908308856 | 0000101101 (45) |

For the synchronization, demodulation and de-framing, once the signal is received, the CDMA frame must be decoded according to Fig 44. First, the CDMA frame must be synchronized. To do this, the SOF flag is detected. This function is done by the *synchronization* block. This function allows to find the synchronization position and the phase of the channel.

Then, as soon as the SOF flag is detected, the signal is demodulated. During the demodulation, the synchronization position and the phase of the channel is updated.

Using the bits demodulated, the rest of the CDMA frame is decoded. First, the header is decoded using a Reed-Solomon decoder. Then, using the result from the header decoder, the payload is decoded by a Viterbi decoder. The result from this *payload decoder* is the ethernet frame transmitted to the external controller using the MII controller. The sequencer handle the succession of the operations.

The sequencer implements a state machine shown on Fig 45. First, the synchronization is found (state *synchronization*). Then, the data are demodulated. During this demodulation, first the header is decoded. This header contains key information like the frame length. Then, if the header is correct the payload is decoded. As soon as *length payload* bits from the payload are demodulated, a new synchronization pattern as to be found.

As the time to decode the header is longer than the length of the header, a buffer is used. In this buffer, the data from the payload demodulated are stored waiting for the result from the *header decoder* block. If the header is correct, then these bits stored in this buffer are delivered to the *payload decoder* block. If the header is incorrect, then this buffer is reset and a new synchronization pattern is searched (state *synchronization*).

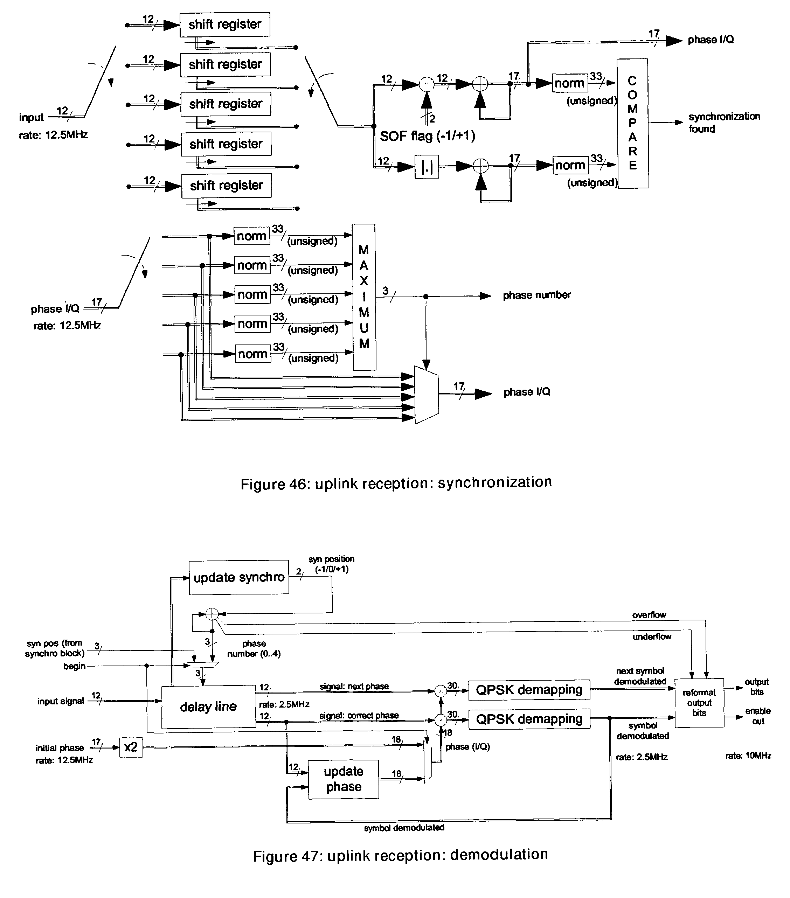

To do the synchronization of the Fig 44 circuit, according to Fig 46, a correlation between the SOF flag and the signal received sampled at the rate Tsymbol is done. In parallel, the sum of the absolute values of the input signal sampled at the rate Tsymbol is done. The result from this sum gives a level. If the norm of the result from the correlation is close to the norm of the level, then the SOF flag as been found.

The comparison between the level and the result from the correlation is: if

$$\frac{7}{8} < \left| \frac{\text{correlation}}{\text{level}} \right| \leq 1$$

then the SOF flag is found

After having found a synchronization position, the *synchronization* block is still enabled in order to find the optimum synchronization position. This block compares the norm of the correlation (*phase I/Q* signal) with the 4 consecutive norms of the correlation. The maximum of these norm will give the final synchronization position.

To do the demodulation of the Fig 44 circuit, according to Fig 47, first the signal is re-sampled at the rate 1/Tsymbol (2.5MHz). This is done by the *delay line* block. Then, the phase of the signal is corrected. Finally, the symbols are de-mapped.

During this demodulation process, the phase and the synchronization position are updated using the signal received and the symbols demodulated. These blocks computes the phase of the signal (on a window of 32 samples) or the synchronization position (on a window of 128 samples). At the really beginning, the phase and the synchronization position of the signal used are the phase and synchronization position delivered by the *synchronization* block.

The *update synchro* block actually delivers the synchronization position delta: -1, 0 or +1. Then, an adder computes the actual synchronization position (modulo 5). It generates as well two signals:

ο   underflow: if the synchronization position reaches a minimum (-1) and becomes 4 (4 = -1 modulo 5)
ο   overflow: if the synchronization position reaches a maximum (5) and becomes 0 (0 = 5 modulo 5)

If the signal *underflow* is set, then the demodulated sample has to be dropped. If the signal *overflow* is set, then the symbol *symbol demodulated* and the symbol *next symbol demodulated* has to be taken into account (2 symbols) in this order. To handle these two cases, the *delay line* block generates a signal (*signal: correct phase*) at the correct phase corresponding with the *phase number* input in order to generate the symbol *symbol demodulated* and one signal (*signal: next phase*) at the phase number -1 in order to generate the symbol *next symbol demodulated* in case an underflow (signal *underflow* set).

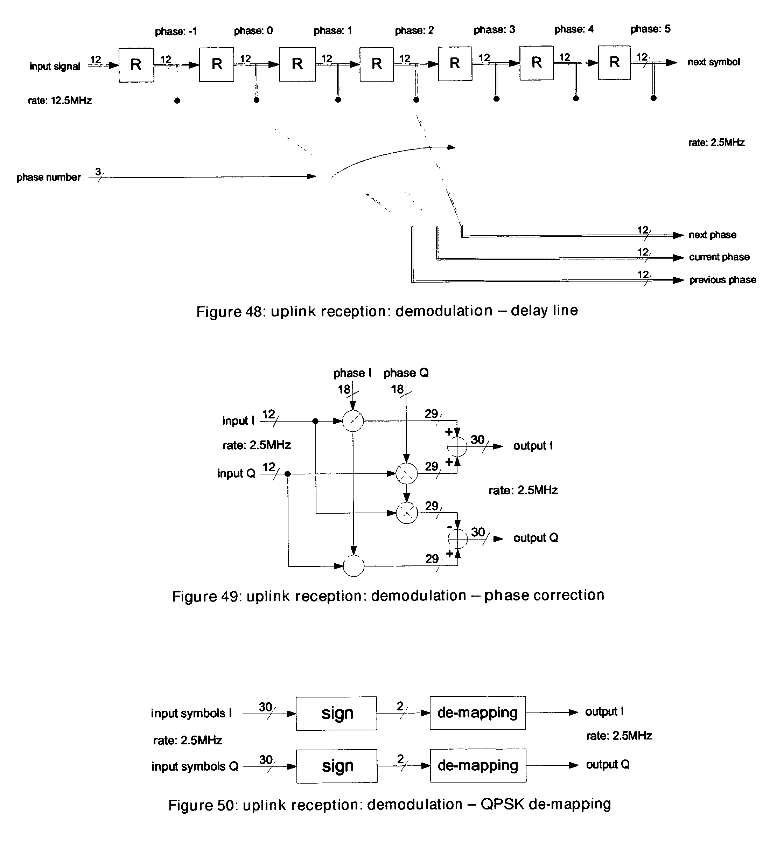

The goal of the *delay line* of Fig 47, shown in details on Fig 48 is to resample the input signal from 12.5MHz to 2.5MHz. The correct phase is given by the input *phase number.* The output signal *correct phase* is used to demodulate the symbols. The two others signals *previous phase* and *next phase* along with the signal *correct phase* are used to find if the synchronization position moved (signals used by the *update synchro* block) and represents indeed the previous phase and the next phase (from the current phase delivered on the *current phase* signal). The signal *next symbol* is used in order to handle the case when the synchronization position changes from 4 to 0.

The *phase number* represents the phase number of the signal. The *current phase* output signal is plugged on the *phase: phase number* signal. The *next phase* output signal is plugged on the *phase: phase number+ 1* signal. The *previous phase* output signal is plugged on the *phase: phase number-1* signal. These output signals symbol rate is 2.5MHz (5 times lower than the input signal symbol rate).

The signal phase has to be corrected according to the block of Fig 49. To correct this phase, an estimation of the channel's phase delivered by the *update phase* block is used.

Using the symbols after the phase correction, the symbols are then de-mapped. QPSK demapping of fig 47 is shown in details on Fig 50. To do this, first the sign of the signal I/Q is computed and then the following mapping is used:

$$+1 \rightarrow 0$$

$$-1 \rightarrow 1$$

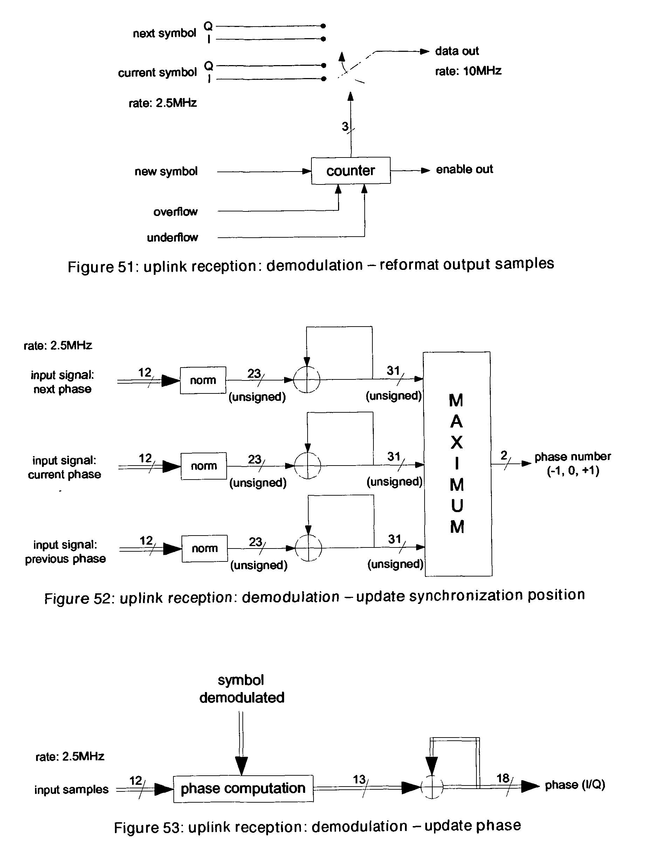

The reformat output bits block of Fig 47 is shown in detail on Fig 51. The input bits arrive at the rate 2.5MHz. When *new symbol* is set, then the data on the inputs *current symbol* and *next symbol* are valid. When neither the *overflow* signal nor the *underflow* signal are set, then only the *current symbol* is used and delivered to the *data out* (2 bits). When the *overflow* signal is set, then *current symbol* and *next symbol* are used and delivered to the *data out* (4 bits). When the *underflow* signal is set, then no bits are delivered to the *data out*.

To implement this, a mux and a counter is used. The counter gives the index of the input bits. The counter is reset to 0 when new symbols are valid *(new symbol* input signal is set). The counter upper limits is:

ο   when the *underflow* signal is set: upper limit = 0
ο   when the *overflow* signal is set: upper limit = 4
ο   when neither the *underflow* signal nor the *overflow* signal are set: upper limit = 2

The two LK12011 and LK12001 are not perfectly synchronized. Therefore, the position of the synchronization has to be updated. The block *update synchro* of Fig 47, shown in details on Fig 52, has to follow the position of the synchronization. To do this, an accumulation of the norm of the signal is done. Using the results from this accumulation, the optimum synchronization position is found. Then this synchronization position is used by the *delay line.* The delta between the old synchronization position and the new synchronization position is constrained to be -1, 0 or +1.

To do the synchronization position update, a window of 128 symbols is used. The assumption used is that, during this window, the synchronization position is the same (a change of the synchronization position is only due to noise).

The update the phase block of Fig 47 is shown in details on Fig 53. The phase of the signal can change rapidly due to: the channel and the unaccuracy of the clocks. Therefore, the phase value has to be updated. The approximation used is: during a window of 32 samples, the phase of the signal is constant.

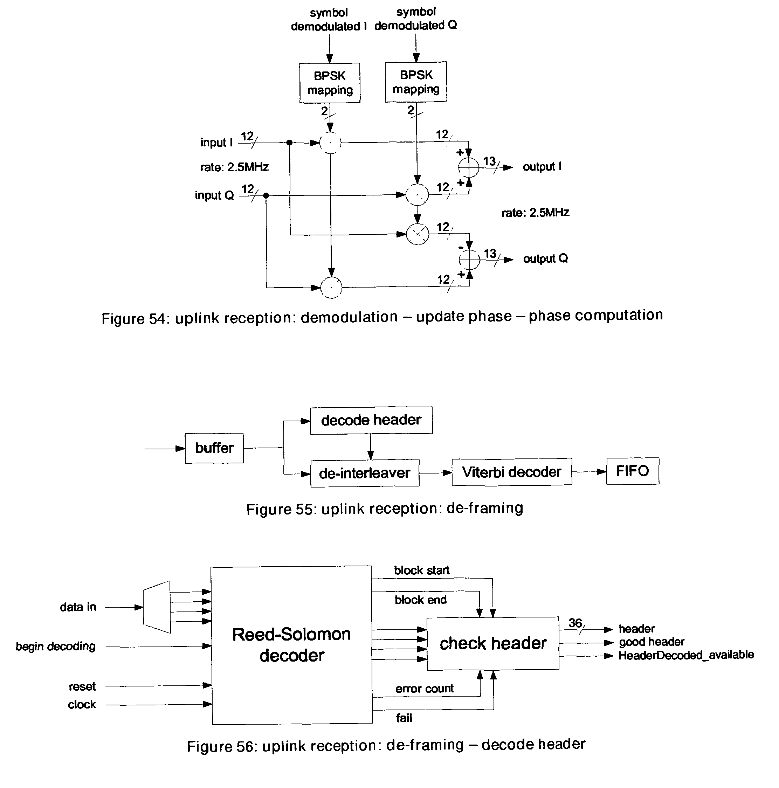

The phase computation is given by the Fig 54 circuit.. Remark: the BPSK mapping corresponds to the following mapping:

$$0 \rightarrow +1$$

$$1 \rightarrow -1$$

The deframing and the Viterbi decoding are performed according to Fig 55. After having detected the start of a frame by detecting the SOF flag, the header has to be decoded with the block of Fig 56. The encoded header is 60-bit long. The Reed-Solomon decoder is used. The input of this block is 4-bit width bus. The result of this decoder is given on a 4-bit width bus. Then, the number of errors (number of bits) detected and corrected is counted. Afterwards, the resulting header (36 bits) has to be checked:

- the *kind of payload encoder* has to be 0 or 1 (4 bits)
- The scrambler initialization is not checked (4 bits)
- the *length of payload* has to be between 512 and 12144 (16 bits)
- the *undefined field* has to be 0 (12 bits)

If the number of errors is low enough (lower than 3 bits) and the resulting decoded header is correct, then the header is delivered with the output *good header* set to high. Otherwise, the *bad header* output is set to high.

First, the received data have to be de-interleaved. The time to process the header - *state 2*: *decode header*- is longer than the length of the header. Therefore, prior to this block, there is a buffer in order to store the data and wait for the result from the *Header decoder* block.

To do the de-interleaver operation, the same block as for the emission RENVFUSIONFORMAT is used except that, the reading and writing operations are switched: this block writes the data diagonally and read them line by line. Some extra outputs and extra inputs are added. An output - *data available* pin - indicates to the Viterbi decoder that new data are available. Two extra inputs - *kind of encoder* pin and *payload length* - gives information about the current frame and allow to compute the encoded payload length. These two last inputs are indeed the values of two fields' header of the actual frame. They allow to compute the length of the encoded payload - *LengthPayloadEncoded* variable:

> if kind of encoder is 0,
>
> LengthPayloadEncoded = 2xLengthPayload+4;
>
> else,
>
> LengthPayloadEncoded = ceil (4/3xLengthPayload+5);
>
> end;
>
> A ceil function finds the nearest integer towards +infinity. ex: ceil(2.3) = 3

As soon as *LengthPayloadEncoded* bits have been sent from the *de-interleaver* block to the *Viterbi decoder,* the *de-interleaver* block stops sending bits and reset its internal memory and set to high the output pin *last block read.*

Then, the data is decoded. The Viterbi decoder is used. There are two different decoders. The value of the header (the field *kind of encoder)* selects the correct decoder. The resulting bits are stored into the FIFO memory. During the processing, the pin *start decoder* stays high.

Using the values of the header's fields, the length of the encoded payload can be processed (variable *Length-PayloadEncoded*). After the *Payload Decoder* block has received *LengthPayloadEncoded* bits, all the data has been received by the *Payload Decoder* block. The *last block read* pin becomes high. The receiver have to change its state in order to search for *a* new SOF flag. Therefore, the pin *start* decoder becomes low. After having process the whole payload - the number of bits of the payload before encoding is given inside the header, *constraint length* bits set at "0" are sent to the Viterbi decoder, where *constraint length* is the constraint length of the Viterbi decoder.

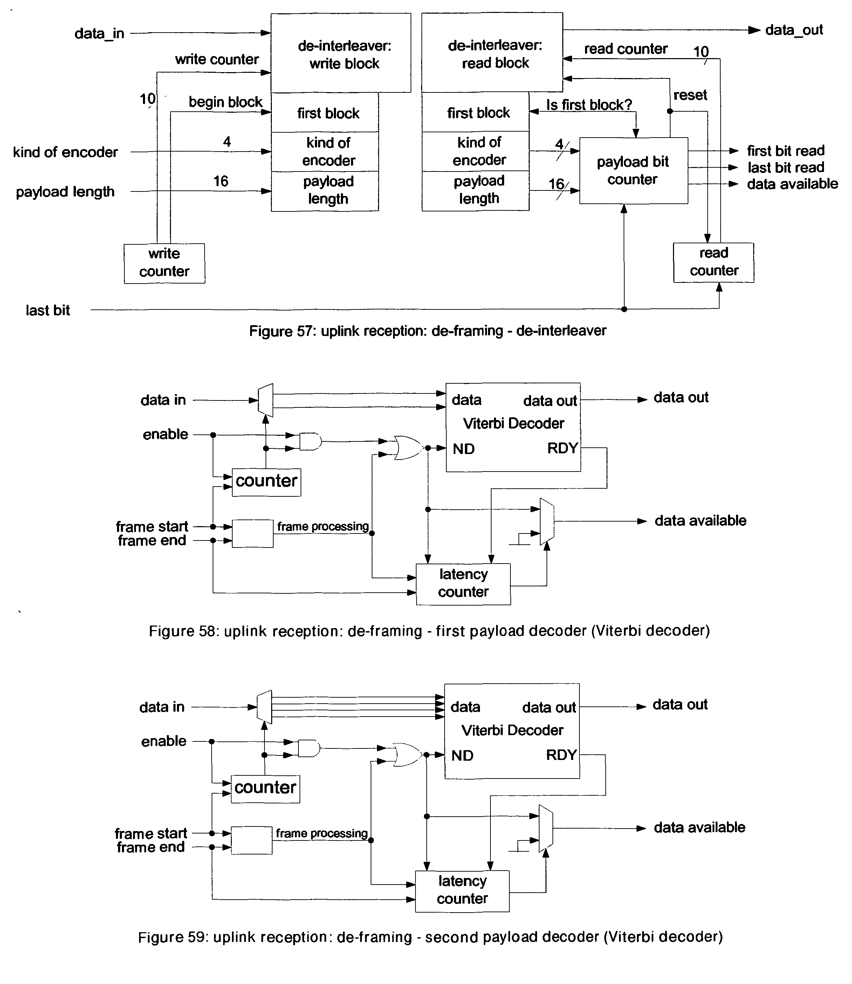

A possible implementation of the de-interleaver of Fig 55 is given in details on Fig 57.

The incoming data - *data_in* pin - are stored in the write memory block. The *write counter* manages the address where the data are stored in. When there is a beginning of a frame - *first data* pin high, the *write counter* is reset and a "1" is stored in the *first block* memory. The *Kind of encoder* and the *payload length* are stored into their associated memory blocks. As soon as the last bit is written, then the input *last bit* becomes high.

In the same time, data are read from the read memory block and placed to the output *data_out* pin. The *read counter* manages the address where the data are read from. The counter *payload bit counter* counts the number of bits which have been sent from the *de-interleaver* block to the *Viterbi decoder* block. As soon as this number reaches its maximum, *encoded payload length,* which depends on the *kind of encoder* and *payload length* values, the both counter - *payload bit counter* and *read counter* - are reset and no more bits are sent to the *Viterbi decoder* until a new block begins. If the *first block* memory block is set to "1", it indicates the beginning of a new frame. Then this memory block is set to "0" and the counters *read counter* and *payload bit counter* are reset, the *encoded payload length* is computed. Two output pins indicates if it is the first output bit - *first bit read* output pin - or the last bit read - *last bit read* output pin.

As soon as the *write counter* and *read counter* reaches their maximum - normally at the same time, which is 1024, the write block memory with its associated *first block* is switched with the read block memory with its associated *first block, kind of encoder* and *payload length* memory blocks and the both counters - *write counter and read counter* - are reset.

Then, the data is decoded. The Viterbi decoder is used. There are two different decoders shown on Fig 58 and 59. The value of the header - the field *kind of encoder* - selects the correct decoder. The resulting bits are stored into the FIFO memory.

After the *Payload Decoder* block has received *LengthPayloadEncoded* bits, all the data has been received by the *Payload Decoder* block. The receiver have to change its state in order to search for a new SOF flag. After having process the whole payload - the number of bits of the payload before encoding is given inside the header, all the internal memories are reset.

In order to increase the speed of the Viterbi decoder, the bit rate between the *de-interleaver* block and the *Viterbi decoder* is increased. Therefore, the time needed to decode a 1024-bit block is lower than 1024 bits.

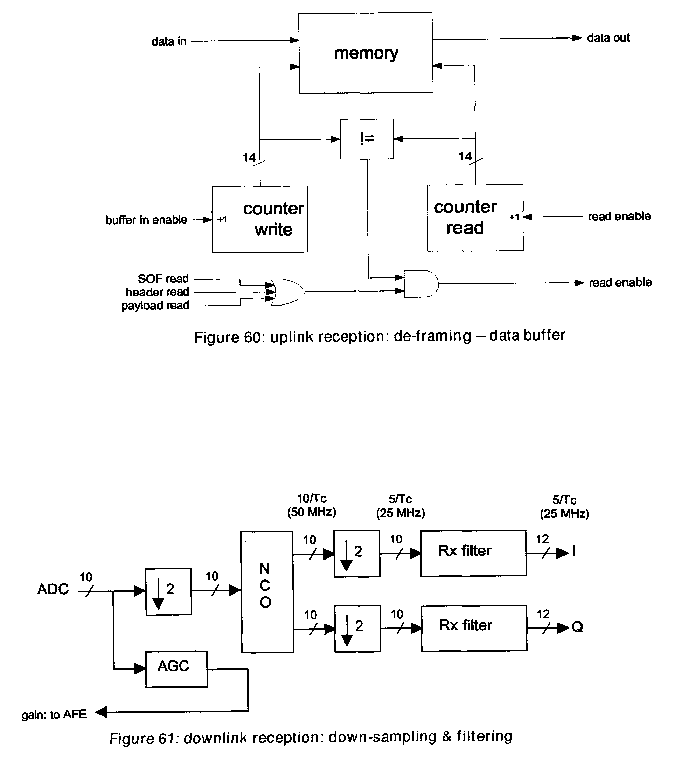

The data are buffered in a block shown on Fig 60. As the time to process the header is longer than the length of the header. Therefore, this buffer allows not to lose payload data, while waiting for the result of the *decode header* block.

Furthermore, if a wrong SOF is detected, this memory allows to search for a new SOF, which could be just after the wrong SOF. Indeed, after receiving the result from the *header decoder* block that the header is incorrect, the *data buffer* has to read again previous data and send them to *SOF detect* block.

The memory is a 18-kbit long FIFO. The memory is a dual port memory. The addresses - for writing and reading - are managed by two counters.

The *counter write* and the *counter read* are a 0 to 16383 counter. These counters are increased by 1 after each read or write operation (indicated by the signals *buffer in enable* and *read enable*). After having read the header, the *counter read* waits for the end of *header decoder* and delivers the payload to the *payload decoder.*

SLAVE LK12011 DOWNLINK RECEPTION CHIP

Now is given a detailed specification of the LK12011 Network Slave.

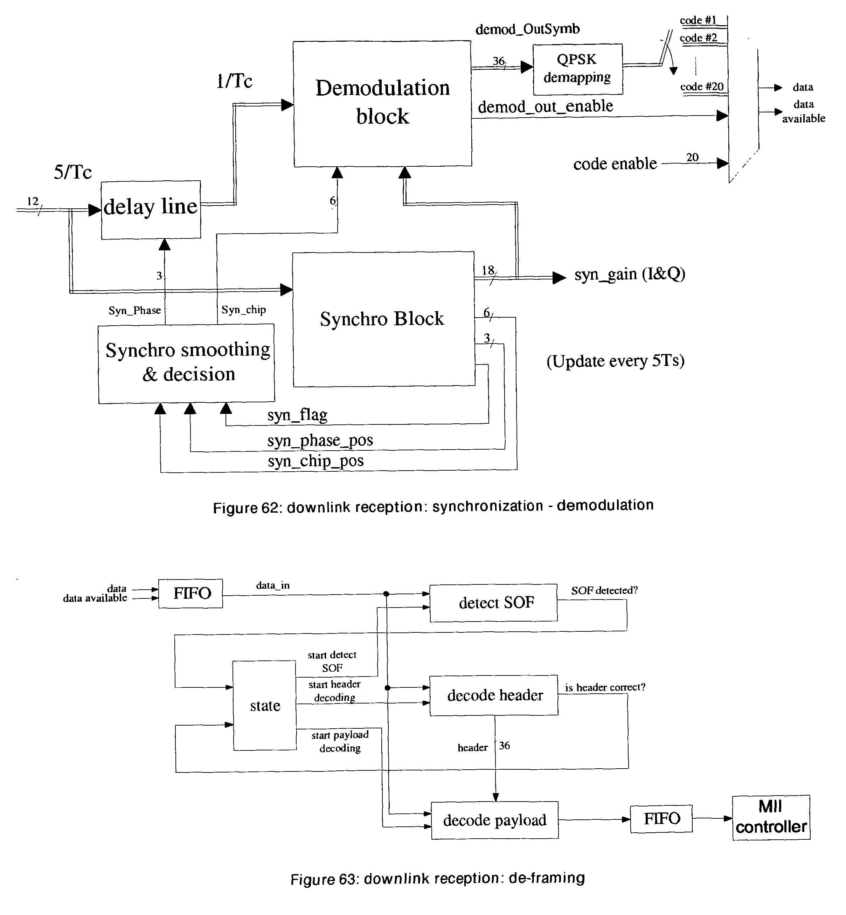

The principle of the downlink reception is shown on Fig 61, while synchronization-demodulation and deframing thereof are shown on Fig 62 and 63 respectively.

The block MII controller of the LK12011 chipset is the same as for the LK12001.

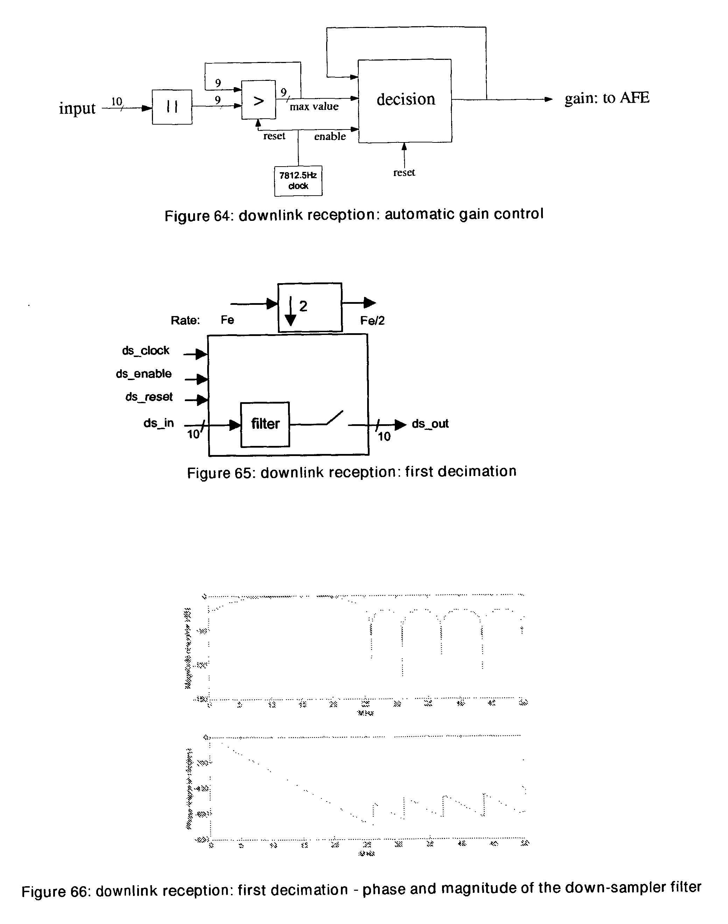

Before doing any process, the gain value must be checked by the automatic gain control (AGC), of Fig 61. It is shown in detail on Fig 64. It ensures that the signal has a significant level for a correct demodulation. It prevents from any overflows. The number of samples taken into account in order to compute the gain corresponds to a time duration of 10Ts - 128μs - which is 12800 samples, which corresponds to a frequency of 7812.5Hz. Therefore, every 128μs, the *MaxBlock* block is reset and a decision is taken.

First, the maximum absolute value on a window of 12800 samples. Using this maximum value, a gain is computed *(decision* block) and transmitted to the AFE.

The output gain is coded on 4 bits. This output codes the amplification (in dB): 0001 corresponds to 1 dB, 0010 corresponds to 2dB, ...

The policy for the *decision* block is:

- if *MaxValue* is lower than 58, add 7dB to the current gain
- if *MaxValue* is between 58 and 73, add 6dB to the current gain
- if *MaxValue* is between 73 and 92, add 5dB to the current gain
- if *MaxValue* is between 92 and 115, add 4dB to the current gain

- if *MaxValue* is between 115 and 145, add 3dB to the current gain
- if *MaxValue* is between 145 and 183, add 2dB to the current gain
- if *MaxValue* is between 183 and 230, add 1dB to the current gain
- if *MaxValue* is between 230 and 289, do not change the gain value
- if *MaxValue* is between 289 and 364, subtract 1dB to the current gain
- if *MaxValue* is between 364 and 458, subtract 2dB to the current gain
- if *MaxValue* is greater than 458, subtract 3dB to the current gain

Just after reset the gain value is set to 0.

For the signal processing, a first down sampler by 2 of Fig 61 is shown in detail on Fig 65. This block decreases the sampling rate by a factor of 2. A filter is applied just before the down sampling to avoid the aliasing effects. This down-sampler is used just before the NCO. The signal is centered around the frequency 15MHz. The signal's bandwidth is 6.1 MHz. Its sampling rate is 100MHz.

The main purpose of the filter is to avoid the aliasing effects. It keeps only the band around the carrier frequency, 15MHz (between 11.95MHz and 18.05MHz) and attenuate all the other frequencies, which are higher than 25MHz.

The filter is a Remez FIR filter. Its coefficients are:

   -89 6 24 -85 -245 -197 151 511 511 151 -197 -245 -85 24 6 -89

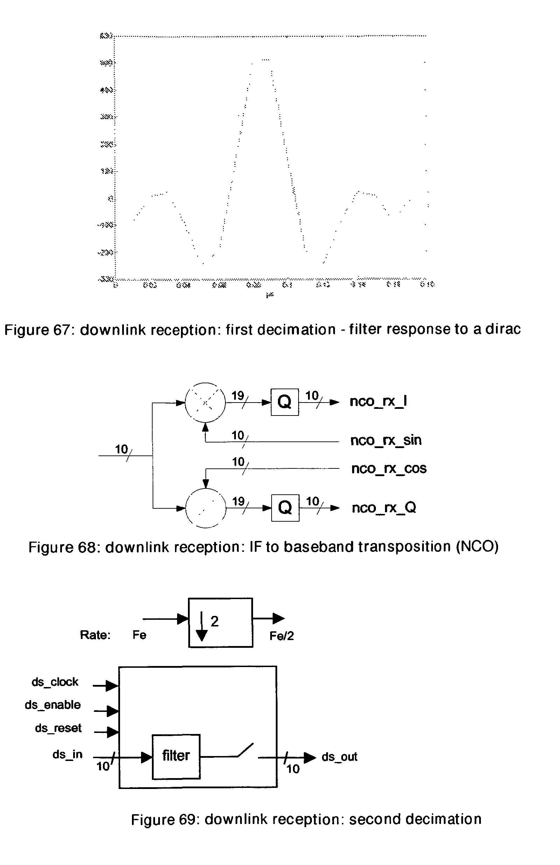

The filter obtained has a magnitude and a phase response shown on Fig 66 and a Dirac response shown on Fig 67.

The input signal is generated by the DAC with a sampling rate of 1 00MHz. The input and output signals are :

| Name | Description |
|---|---|
| ds_reset | Active low state input : initializes the internal state of the filter (null values for the shift register) |
| ds_dock | Processing clock |
| ds_enable | Active low state input: specify the active state of the filter |
| ds_in[m-1..0] | Input data. It is coded on m bits. |
| ds_out[0..m+1] | Output signal : the output signal is coded on m+2 bits. |

The NCO_Rx block of Fig 61; shown in details on Fig 68, delivers the in-phase and in-quadrate signals calculated from the input carrier signal. Considering the PLNIC side, Rx is downlink. The carrier frequency is defined at 15 MHz for Rx downlink. The input and output sampling rate is 50MHz.

The input signal is generated by the down-sampler and is quantified on10 bits. The input data rate is 50Mhz.

Tabulated values of the sine and cosine functions are given in the table below. These values are stored into an internal memory. Carrier frequency is set to 15MHz for the RX Downlink and values are generated for a 50 MHz sample rate and quantified using a signed 10-bit format.

To compute these values:

$$\text{Cos table}(k) = \cos(2\pi v_c(k/F_s)) = \cos(2\pi k.3/10)$$

$$\text{Sin table}(k) = \sin(2\pi v_c(k/F_s)) = \sin(2\pi v k.3/10)$$

   where:

$v_c$, the carrier frequency (15 MHz)
$F_s$, the sampling frequency (50 MHz)

Only one period and a half is stored into the internal memory. To compute three periods:

$$\text{Cos}(k) = \text{Cos table}(k) \text{ if } k \in [[0; 4]]$$

$$Cos(k) = -Cos\ table(k-5)\ if\ k \in [[5;\ 9]]$$

where: Cos table(k) the tabulated values of the cosine stored into the internal memory

$$Sin(k) = Sin\ table(k)\ if\ k \in [[0;\ 4]]$$

$$Sin(k) = -Sin\ table(k-5)\ if\ k \in [[5;\ 9]]$$

where: Sin table(k) the tabulated values of the sine stored into the internal memory

As the cosine and the sine are periodical functions with of period of $2\pi$, only these values are useful : Sin(k+10) = Sin(k) and Cos(k+10) = Cos(k)

Then, the result is: out(k) = I(k).Sin(k)+Q(k).Cos(k)

| Cos (real) | Cos (fixed point) | Sin (real) | Sin (fixed point) |
|---|---|---|---|
| 1.00000000000000 | 0111111111(511) | 0 | 0000000000 (0) |
| -0.30901699437495 | 1101100010 (-158) | 0.95105651629515 | 0111100110 (486) |
| -0.80901699437495 | 1001100011 (-413) | -0.58778525229247 | 1011010100 (-300) |
| 0.80901699437495 | 0110011101 (413) | -0.58778525229247 | 1011010100 (-300) |
| 0.30901699437495 | 0010011110 (158) | 0.95105651629515 | 0111100110 (486) |

Two second down sampler by 2 of Fig 61, shown in details on Fig 69, decrease the sampling rate by a factor of 2. A filter is applied just before the down sampling to avoid the aliasing effects. This down-sampler is used just before the *shaping filter*. The signal is a baseband signal, whose max frequency is 3.05 MHz. The sampling frequency of the input signal is 50MHz.

The main purpose of the filter is to avoid the aliasing effects. It keeps only the baseband frequency (between -3.05MHz and 3.05MHz) and attenuate all the other frequencies. The attenuation must be high for the frequencies above Fe/2.

The filter is a Remez FIR filter. Its coefficients are:

➢ 102 349 511 511 349 102

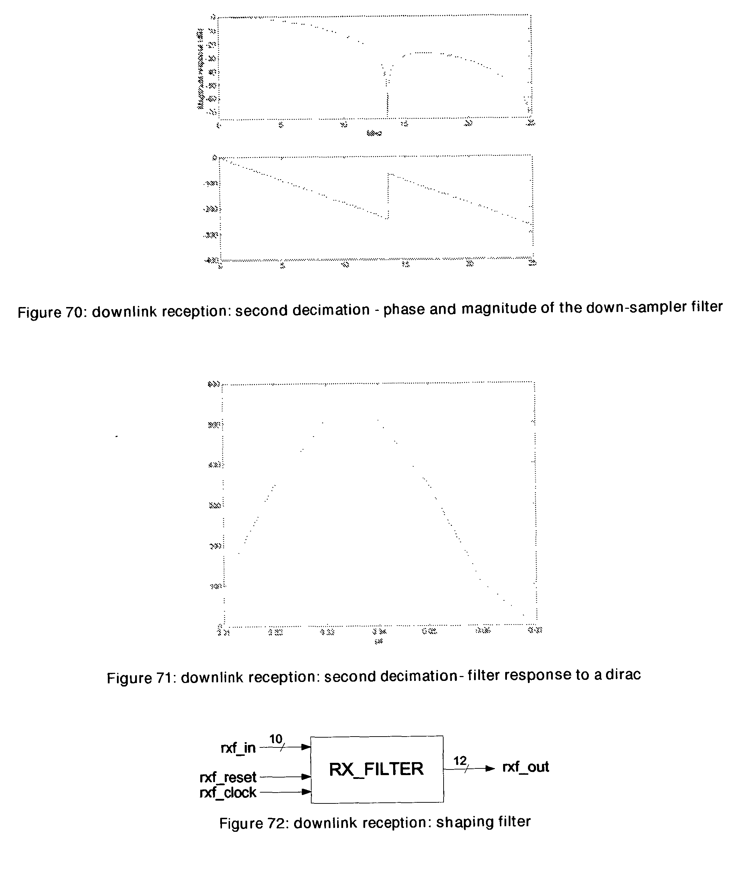

The filter obtained has a magnitude and phase response shown on Fig 70 and a response to a Dirac shown on Fig 71.

The signals input in and output from these second down sampler are :

| Name | Description |
|---|---|
| ds_reset | Active low state input : initializes the internal state of the filter (null values for the shift register) |
| ds_clock | Processing clock |
| ds_enable | Active low state input: specify the active state of the filter |
| ds_in[m-1..0] | Input data. It is coded on m bits. |
| ds_out[0..m+1] | Output signal : the output signal is coded on m+2 bits. |

The RX FIR filter (Rx_FILTER) of Fig 61, shown in details on Fig 72, performs the filtering of the digital input signal with a square root FIR raised cosine filter with a roll-off factor of 0.22. The filter's coefficients are stored into an internal memory (half filter is stored, due to symmetry) in a 10-bit fixed point format. The input and output data rate is chip rate/5, that is 25 MHz in downlink. The input signal is passed into the shift registers.

A *reset* signal is used to initialize the internal shift registers to the null value.

Their input and output signals are :

| Name | Description |
|---|---|
| rxf_reset | Active low state input : initializes the internal state of the filter (null values for the shift register) |
| rxf_dock | Processing clock (25MHz) |
| rxf_enable | Active low state input : specify the active state of the filter |
| rxf_in[9..0] | Input data |
| rxf_out[0..11] | Output signal : the output signal is coding the modulated and spread signal on 12-bits signed integers. |

The output data rate is Tc/5 MHz. The output data are formatted in a 12-bit fixed point format.

The number of filter's coefficient is : N_coef= 13.

The filter's coefficients are formatted in a 10-bit signed format. There are 13 filter's coefficients.

| Filter's coefficient value (real) | Filter's coefficient value (fixed point) |
|---|---|
| 1 | 0111111111 (511) |
| 0.92566898454465 | 0111011001 (473) |
| 0.72303324392894 | 0101110001 (369) |
| 0.44636778638057 | 0011100100(228) |
| 0.16599777270489 | 0001010100(84) |
| - 0.05407304737984 | 1111100101 (-27) |
| - 0.17501812439354 | 1110100111 (-89) |
| - 0.19215861829932 | 1110011110 (-98) |
| - 0.13167851017065 | 1110111101 (-67) |
| - 0.03738655434622 | 1111101101 (-19) |
| 0.04670069727227 | 0000010111 (23) |
| 0.09119747809226 | 0000101110 (46) |
| 0.08855908308856 | 0000101101 (45) |

The input and output data rate is Tc/5 (25 Mhz).

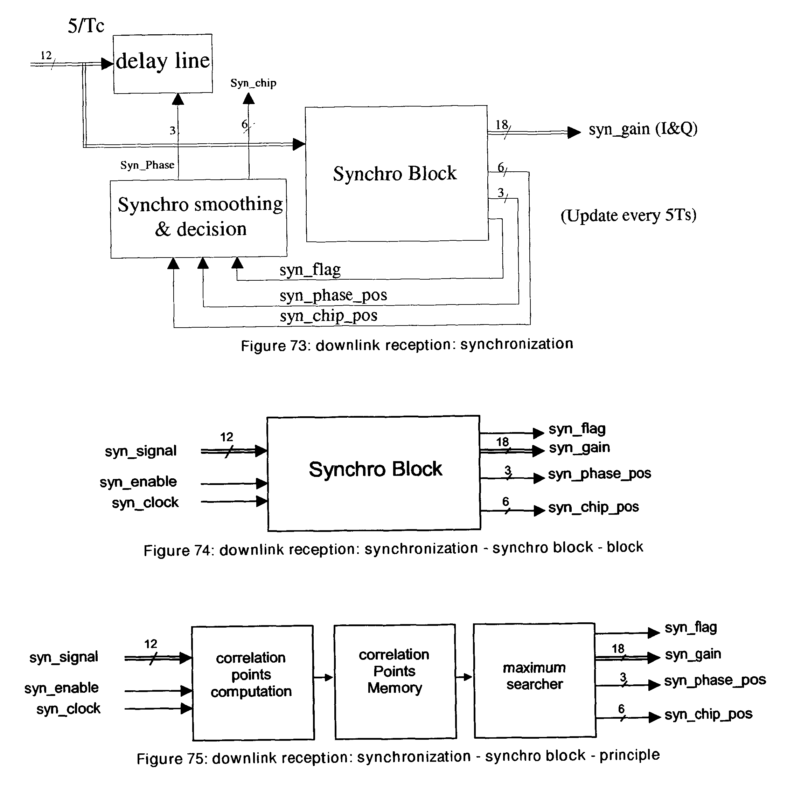

The synchronization block of Fig 62 is again shown on Fig 73. The *synchro block* performs the synchronization process. The accuracy of this synchronization is Tc/5 (0.04µs). It finds the chip synchronization position without any prior. This synchronization is based on the estimation of a correlation window defined at the rate of 25MHz (i.e. Tc/5 in downlink) and with duration of one symbol (64-Tc period), and is estimated through the synchronization's codes (S0). The *synchro block* computes all the correlation points in 5 Symbol Period (5Ts), finds the maximum within the estimated points, and deduces from it the chip synchronization position.

A whole window contains 64*5=320 points. The estimation of such window is done in five runs. Each run do the computation for a window of length Ts (64*Tc) but defined at rate 1/Tc and with a shift on the input signal of n.Tc/5 with n between 0 and 4.

After these calculations, the correlation peak is searched. It corresponds to the maximum of the magnitude of all the points previously computed (complex numbers). Its position corresponds to the synchronization position. To avoid any perturbations on this position due to the background noise on the channel or the Inter Symbol Interference (ISI), this position is filtered (*synchro smoothing & decision* block). The result of this calculation is then used to delay the signal (*delay line* block) of *syn_phase* Tc/5-defined samples, and to shift the demodulated spreading codes of *Syn_chip*.

The synchronization process uses two steps to demodulate the signal, there :

➢ synchronization acquisition : there is no previously acquired synchronization position. The *synchro block* have to be run several times until the synchronization position computed settles down.
➢ synchronization tracking and demodulation: the synchronization position has been already acquired and has to be updated. The *synchro block* is used to compute the new synchronization position value and then this value is filtered and used to delay the input signal.

The synchro block of Fig 62, shown on Fig 74, has, as a purpose, to compute all the correlation points for a correlation window of duration 1Ts defined at rate of 5/Tc (5.64=320 points) and to find from these points the maximum value and its position. All the correlation points (320 points) are computed in 5.Ts (5 Tc-defined windows are consecutively estimated for each Tc/5 phase in 1 Ts). The background noise is also computed by estimating a mean correlation point computed on each 64 Tc-defined correlation window and by selecting the minimum value over the 5 consecutive windows . If the correlation peak is well above (4 or 5 times higher) than the estimated background noise, then it is assumed that a synchro signal is present, otherwise, noise only is assumed. The principle of this synchro block is shown in detail on Fig 75.

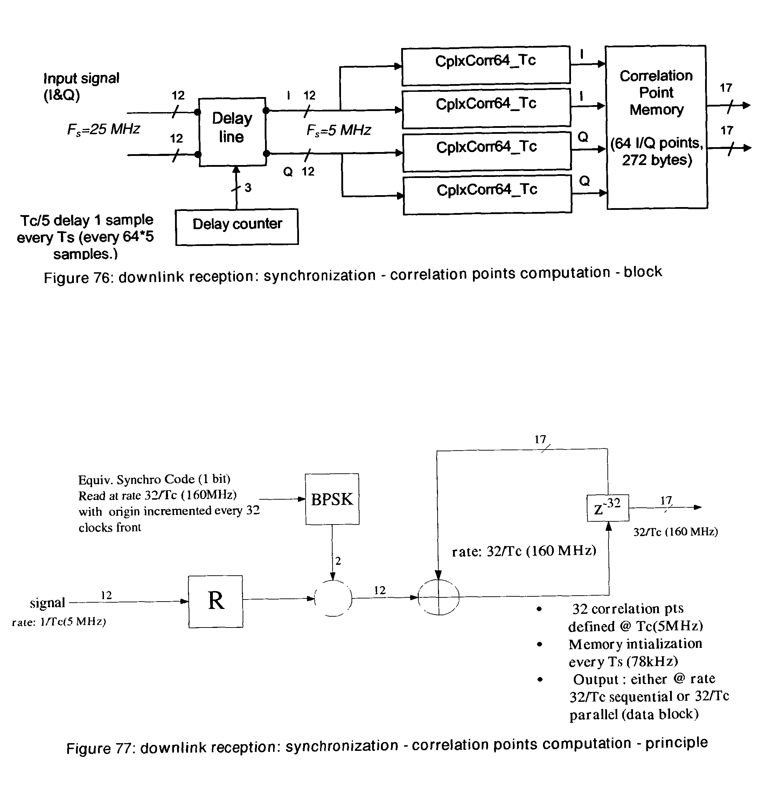

Fig 76 shows the correlation points computation block of Fig 75. All the correlation points (320 points) are computed in 5.Ts : the whole estimation process is split into 5 consecutive steps (each of duration 1 Ts). Only a phase of the 5 Tc/5-defined polyphase components of the whole window is estimated during 1 Ts. A window of length Ts and defined at rate 1/Tc (64 correlation points) is thus estimated in Ts. From a window (Tc-defined) to a consecutive one, the input signal is delayed of Tc/5 and the calculation is done again leading to a new Tc/5 phase. Therefore, after 5 runs, the whole window defined at the rate of 5/Tc is computed, the maximum value can be found and the position of this value is delivered at the output pins.

The estimation of Tc-defined windows is performed thanks to two blocks *CplxCorr64_Tc,* each of these blocks is computing 64 correlation points for either the I channel or the Q channel. As half of the synchronization code's chips are null (the 32 last chips), in order to compute one correlation point only 32 multiplication-accumulations are needed. Therefore, 32 correlation points are computed in Ts/2. Then, each block compute the whole Tc-defined window in Tc. After the computation, all the correlation points are stored into a memory block and then delivered to the *maximum searcher* block.

The *CplxCorr64_Tc* block of Fig 76, which performs the correlations, is defined in Fig 77.

The value of the synchronization code's chips is -2, or 0 or 2. The null chips are the 32 last chips. The purpose of the synchronization block is to find the maximum of the correlation points. Therefore, the chips divided by two can be used. Then, the value of the chips used to compute the correlation points are -1 or 0 or 1.

Thanks to this block, the half window defined at the rate of 1/Tc is computed in Ts, either for the I channel or for the Q channel of the input signal. The resulting correlation points are stored into a memory block. With 4 blocks like this one, a whole window (length: Ts) of correlation points defined at the rate 1/Tc is computed (for the I channel and the Q channel).

Then, correlation point of maximum amplitude and its position has to be found by the *maximum searcher* block (see below).

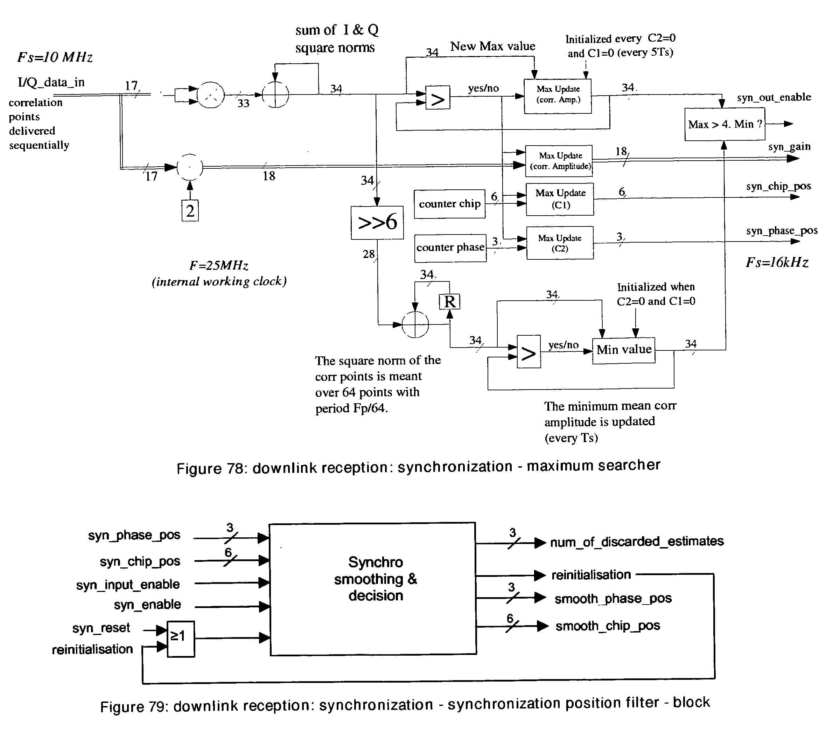

The maximum searcher of the synchro block of Fig 75 is shown on Fig 78. The max has to be searched within the 320 estimated correlation points. As monophase windows defined at rate Tc are estimated sequentially, the max only need to be updated when a new Tc-defined window is in memory. After 5.Ts, the entire window defined at the rate 5/Tc has been computed, and the maximum value and its position can be delivered.

A register C2 counts the Tc/5 phase of the current window and is incremented when a new Tc-defined window is in memory : this register is the delay of the input signal between 0 and 4Tc/5, and is incremented at each Ts (modulo 5). A register C1 counts the chip index of the correlation point under examination (modulo 64).

The outputs of this block are:

> ➢ the position of the synchronization. It divided into two fields: the position within a chip, *syn_phase_pos* output, (between 0 and 4) and the synchronization position in number of chips (between 0 and 63), *syn_chip_pos* output.
> ➢ *syn_flag* output: the result of the comparison between the maximum value and the noise level (minimum of the 5 mean values). If high, then the chip synchronization position is valid.
> ➢ the value of the correlation peak. This value is used to demodulate the signal.

The correlation points are computed for a window (length: Ts) defined at the rate 1/Tc (64 points). The maximum value and its position are then updated between two consecutive window (the position is stored within the registers C1 and C2).

Note also that the mean value of the 64 correlation points of the current window is calculated. This value is used to find an estimate of the noise level . The minimum of the 5 consecutive means is used as a rough estimate of the noise level. If the maximum correlation point amplitude is 4 times higher than the criterion, it is then assumed that a synchronization signal is present on the channel otherwise, noise only is assumed.

The background noise and the Inter Symbol Interference (ISI) can altered the computation of this synchronization's position. Therefore, this position has to be filtered in order to minimize the effect of the noise.

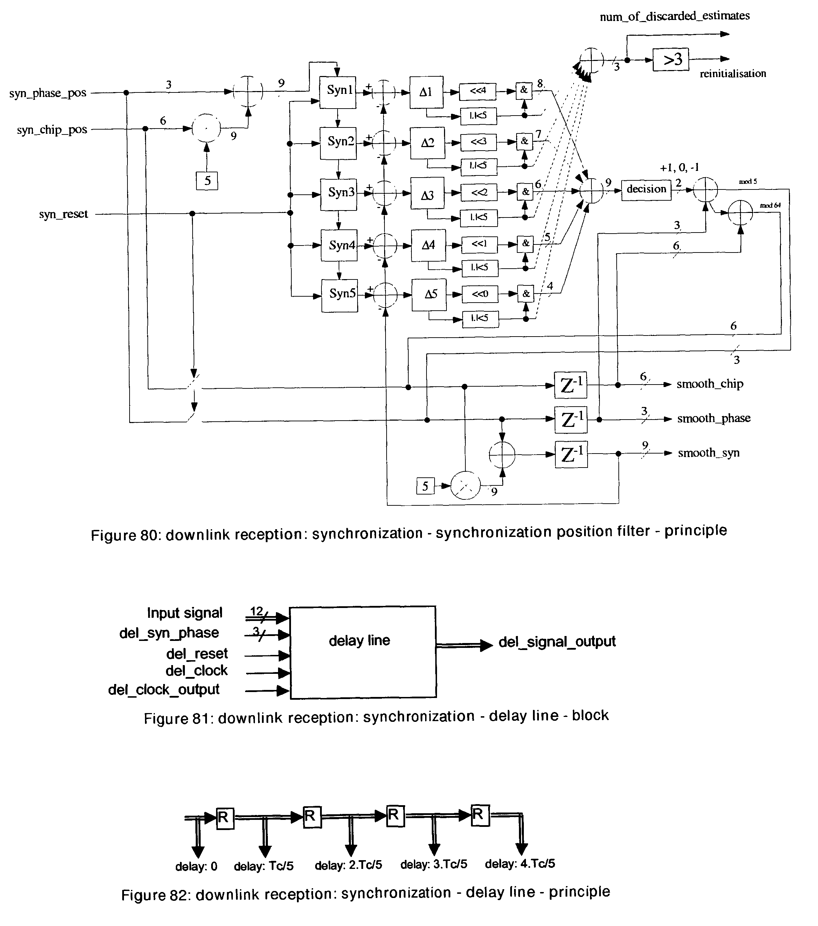

The synchro smoothing and filtering of Fig 73 is shown functionally on Fig 79 and in details on Fig 80.

In order to minimize the effect of the noise, the synchronization position has to be filtered. The input pins are the two fields for the synchronization position:

> ➤ *syn_chip_pos:* the position of the synchronization in number of chips (between 0 and 63).
> ➤ *syn_phase_pos:* the position of the synchronization within a chip (between 0 and 4).

The synchronization update is constrained to be -Tc/5 or 0 or Tc/5. This policy limits the effects of the impulsive noise. The synchronization update filtering consists in a smoothing process with forgetting factor of 0.5.

$$syn\_pos\_update = 1/2*syn\_pos(t)+1/4*syn\_pos(t-1)+1/8*syn\_pos(t-2)$$

$$+1/16*syn\_pos(t-3)+1/32*syn\_pos(t-4)$$

Actually, the synchronization positions are not directly filtered. First, the difference between the current synchronization estimate and the *syn_pos* numbers (computed by the previous block) are computed. This difference (aka *deltas*) is filtered.

If the magnitude of this *delta* is too high (i.e. greater than 5), this value is discarded. Typically, this indicates the presence of high level of noise.

Then, all the deltas are added together. This value is compared with the value 0.5: if it is higher than 0.5 then the delta value is 1, if it is lower than - 0.5, then the delta value is -1, otherwise the delta value is 0.

Finally, the new value of the synchronization position is computed by adding the delta value found with the previous value of the synchronization position. This value is divided into 2 fields: *smooth_chip_pos* and *smooth_phase_pos*.

The output of this block is the synchronization position updated and the number of value discarded *(num_of_discarded_estimates)*. If the number of value discarded is too high(higher than 3), it can indicates a loss of the synchronization or a bad initialization and therefore the signal has to be resynchronized.

The output fields of the synchronization position is then used by two different blocks:

- *smooth_phase_pos* is the position of the synchronization within a chip. It is used by a delay line, which delays the signal. The delay can be between 0 and 4.Tc/5 with a step of Tc/5.
- *smooth_chip_pos* is the position of the synchronization in number of chips. The demodulation block uses this number. The CDMA user codes (used to demodulate the signal) are delayed by this number.

Initialization Period :

When syn_reset is low, an initialization of the module is performed. This initialization consists in :

- Resetting all sync buffers (syn1,...,syn5) and the output registers to zeros.
- Propagating the first incoming synchronization value (when syn_input_enable is set to high). This initial value must be propagated into all sync buffers and into the output registers. Thus, all the deltas registers are initialized to zero.

Enable Period :

When signal syn_enable is high the module can perform synchro filtering, and when low, the module is frozen.

The aim of the delay line block of Fig 73 shown on Fig 81 is to delay the signal. The delay can be between 0 and 4Tc/5 by step of Tc/5. It is a 5 registers line as shown on Fig 82.

The input signal is defined at a rate of 5/Tc (25MHz). This block is used also to resample the signal at the rate of 1/Tc (5MHz).

The output of this block depends on the value of the input *del_syn_phase*. This value indicates where the output signal has to be plugged:

For example: if *del_syn_phase*=1, then the output is plugged onto the signal *delay: Tc/5*.

Then, the value is hold during Tc. Therefore the output signal is sampled at the rate of 1/Tc (5MHz). The clock of the output signal is given by the input *del_clock_output*.

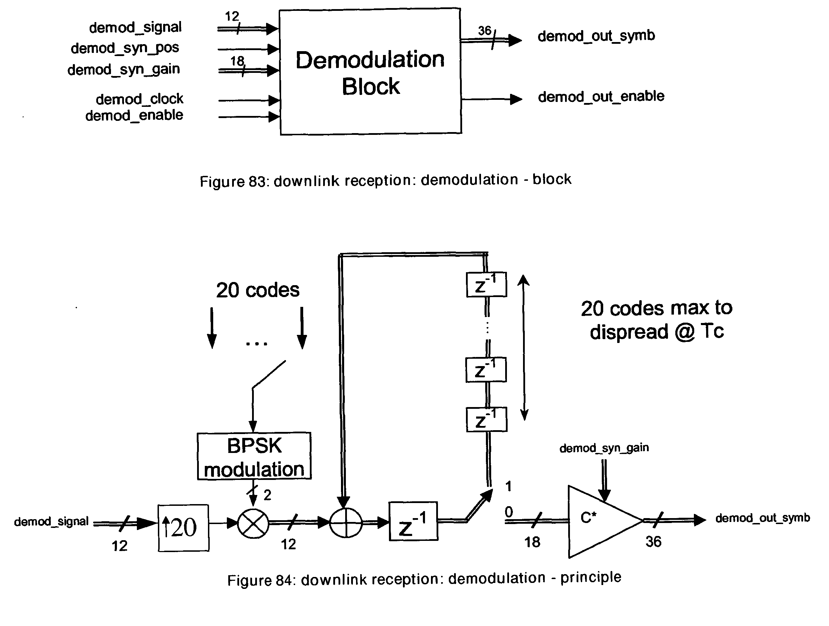

The demodulation block of Fig 77 is functionally shown on Fig 83 and with its principle on Fig 84. Once the synchronization was acquired, the signal can be demodulated. To do this, two kind of information are used:

> ➤ the *smooth_chip_pos* number that gives the position of the synchronization in number of chips (between 0 and 63) and is used to delay the CDMA codes.

➤ the *syn_gain* value that gives the gain of the channel (complex number). Only the phase of this gain is used.

The input signal is sampled at the rate of 1/Tc. This signal is correlated with the CDMA user codes(for every active CDMA codes). The CDMA codes are BPSK modulated (-1/+1). These codes are stored as binary codes (0/1). The BPSK modulation block corresponds to the following mapping: $0 \rightarrow 1$ and $1 \rightarrow -1$.

The result from this correlation (a complex number) is multiplied by the conjugate of the gain of the channel (complex number):

let $corr_i$ the result from the correlation for the CDMA code *i* (complex number)
let *gain* the gain of the channel (complex number)
then the output symbol is:

$$demod\_out\_symb = corr_i \text{ x gain*}$$

$$= Re(corr_i)xRe(gain) + Im(corr_i)xIm(gain)$$

$$+ j\ Im(corr_i)xRe(gain) - Re(corr_i)xIm(gain))$$

The sign of this multiplication is the demodulated symbol: the real part corresponds to the I channel and the imaginary part corresponds to the Q channel.

This block can process up to 20 active codes at the same time. This is supposed to be the maximum number of active code for a specific user. To use the same structure for all the active codes, the processing frequency is increased (100 MHz) and all the operations are done sequentially. The input signal is read at the rate of 1/Tc (5MHz) and then, the sample is hold during Tc to do all the multiplications with the 20 active codes. The CDMA codes used are all the active CDMA codes delayed by the quantity *demod_syn_pos*. Then, the result from this multiplication is accumulated into the registers (one register per active code $\rightarrow$ 20 registers). Finally, after 64.Tc, the correlation is done and all the 20 results are multiplied by the channel gain (*demod_syn_gain*) and then delivered to the output (the output *demod_out_enable* is raised to indicate the presence of valid outputs).

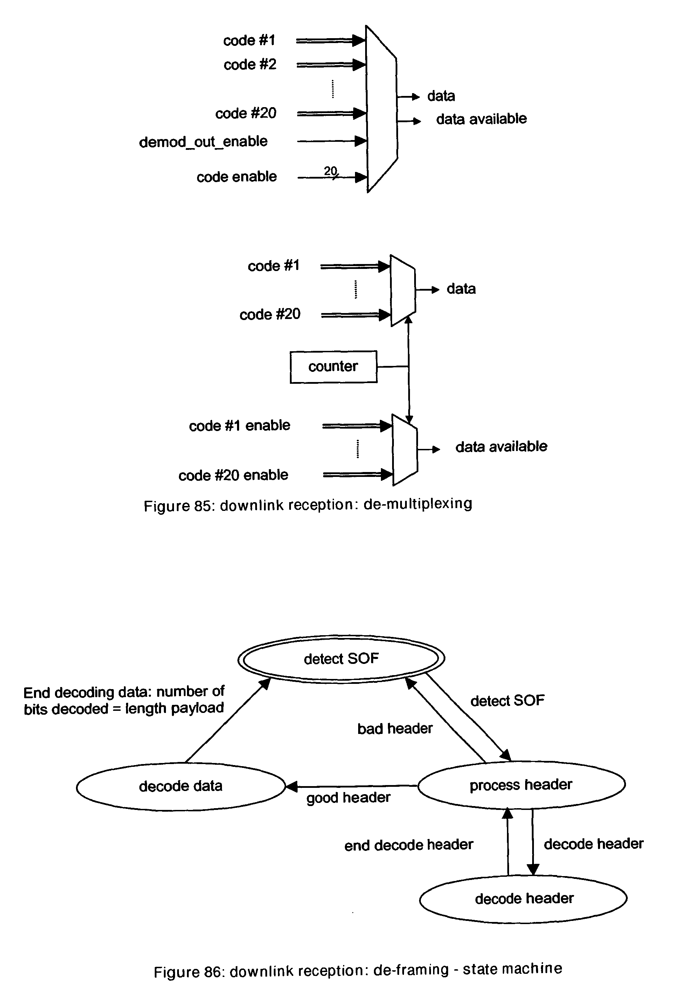

Fig 85 shows the downlink reception de-multiplexing block .The *demodulation block* demodulates 20 CDMA codes on both the I channel and the Q channel. This block enable data from the active codes and discard the data from the inactive codes. This block serialize the data too.

The principle of the state machine of downlink reception de-framing is shown on Fig 86. It decodes the CDMA frames. After having received and demodulated the signal, the CDMA frames have to be detected and decoded. To do this, a state machine is used. There are three different states:

- state 1: detect the Start Of Frame (SOF) flag.
- state 2: decode the header
- state 3: decode the payload

First, - *state 1: detect the Start Of Frame* - the beginning of a frame has to be detected. The beginning of a frame corresponds with the flag SOF (011010010110). A correlation between the bits received and the sequence is done. If the result is high enough (higher than 10), it states that it corresponds with the beginning of a frame and change the state to "*state 2: decode the header*".

Then, - *state 2: decoded the header*- the header has to be decoded. To do this, the Reed-Solomon decoder is used. The number of errors (number of bits) detected and corrected is counted. If this number is too high (higher than 3 bits), it states that the header is incorrect. Then the values of the header is checked:

- The kind of payload encoder field has to be 0 or 1 (4 bits)
- The scrambler initialization is not checked (4 bits)
- The length of the payload has to be between 512 and 12144 (16 bits)
- The unused field has to be 0 (12 bits)

If the header is correct, then the state becomes "*state 3:decode the payload*". Otherwise the state becomes "*state 1: detect the Start Of Frame*".

Finally, - *state 3: decode the payload* - the payload has to be decoded. The data are de-interleaved. Then, the resulting data are decoded using a Viterbi decoder.

The resulting algorithm is:

```
// ceil function finds the nearest integer towards +infinity
// ex: ceil(2.3) = 3;
// Initialization:
state = 1;
SOF detected = 0;
for(;;) // infinite loop
{
        switch(state)
        {
```

```
case 1:// look for the SOF flag
        SOF detected = Detect SOF flag();// run the
        Detect SOF flag block
        If SOF detected == 1       // look the outputs
        {
                state = 2;// SOF detected => go to state 2
                CountBitsHeader = 0;
                Reset decode header internal memories();
                // reset the internal memory of the decode
                header block
        }
        break;
case 2:// decode the header
        Place the received bit on the input data_in pin of
        the header decoder block();
        CountBitsHeader++;
        // CountBitsHeader = number of bits received and
        placed on the input of
        // the header decoder block;
        if (CountBitsHeader == 1)
        {
                Place an impulse signal on the input pin
                begin decoding of the header decoder
                block();
                // Begin to decode the header
        }
        // After having placed the 60-bit long header on
        the input of Decode
        // header block, begin to process the payload
        if(CountBitsHeader >= 60)
        {
                while(HeaderDecoded _available == 0)
                {
                        Store received data();
                        // in order not to lose the received
```

```
                data while waiting for
                // result of the header decoding
                header, store the received
                // bits
}
// wait for the result from the header
decoder block
if (good_header == 1)
{
                // the header is correct, so do the
                payload decoding
                state = 3;
                // Compute the length of the encoded
                payload using the
                // fields of the header decoded
                if (KindOfEncoder == 0)
                {
                        LengthPayloadEncoded =
                        1024xceil((2xLengthPayload+
                        4)/1024);
Select Viterbi decoder number 0();
                        // Select the Viterbi decoder
                        number 0
                }
                if (KindOfEncoder == 1)
                {
                        LengthPayloadEncoded =
                        1024xceil((4/3xLengthPayload
                        +5)/1024);
Select Viterbi decoder number 1();
                        // Select the Viterbi decoder number
                        1
                }
CountBitsPayload = 0;
Reset decode payload interleaver internal
```

```
                    memories();
                    // reset the internal memory of the
                    interleaver.
                    // The interleaver has two blocks of
                    memory: one for
                    // writing and one for reading. Only the
                    block which is done
                    // for writing is reset.
            }
            else // bad header
            {
                    state = 1;
                    // The header was corrupted so stop the
                    payload
                    // processing and look for another SOF flag
            }
    }
    break;
    case 3:                         // decode the payload
            if (CountBitsPayload == 0)
            {
                    Wait four bits();
                    // Discard the first 4 bits
            }
            Place the received bit on the input data_in of the
            payload decoder block();
            CountBitsPayload++;
            // CountBitsPayload = number of bits received and
            sent to the input of
            // the payload decoder block;
            if (CountBitsPayload == 1)
            {
                    Place an impulse signal on the input first
                    data of the payload decoder block();
                    // begin to process the payload
```

```
                                    }
                                    if(CountBitsPayload >= LengthPayloadEncoded)
                                    {
                                            state = 1;
                                            // received all the payload. The processing
                                            is not finished but it
                                            // does not need extra inputs.
                                            Reset Detect SOF internal memory();
                                            // Reset the internal memory of the detect
                                            SOF block in order to
                                            // process a new frame
                                    }
                            }
                    }
```

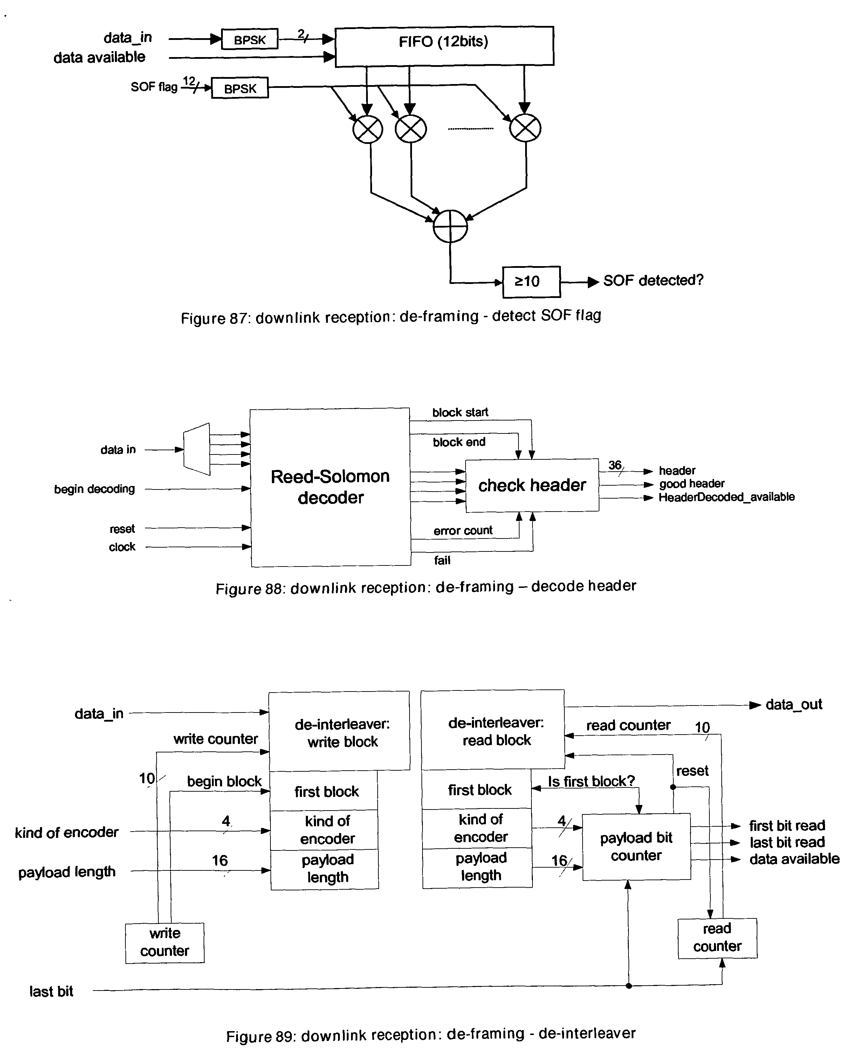

The detection of the start of frame flag is performed by block of Fig 87.

This block makes a correlation between the bits received and the SOF flag. The SOF flag is 011010010110. To do this, first the received bits are BPSK encoded:

$$0 \rightarrow +1$$

$$1 \rightarrow -1$$

Then, the result is multiplied with the corresponding BPSK encoded SOF flag bit and summed. As the BPSK encoded SOF flag bits are -1 or +1, the multiplication operation corresponds with a simple XOR operation and no BPSK encoding is needed. The sum of the results from the multipliers is compared with 10:

- if higher than 10: a SOF has been detected (SOF detected output set to high)
- otherwise: no SOF detected (SOF detected output set to low)

The decoding of the header is performed by circuit of Fig 88. After having detected the start of a frame, the header has to be decoded. The encoded header is 60-bit long. The Reed-Solomon decoder is used. The input of this block is 4-bit width bus. The result of this decoder is given on a 4-bit width bus. Then, the number of errors (number of bits) detected and corrected is counted. Afterwards, the resulting header (36 bits) has to be checked:

- the kind of payload encoder has to be 0 or 1 (4 bits)
- The scrambler initialization is not checked (4 bits)
- the length of payload has to be between 512 and 12144 (16 bits)
- the undefined field has to be 0 (12 bits)

If the number of errors is low enough (lower than 3 bits) and the resulting decoded header is correct, then the header is delivered with the output good header set to high. Otherwise, the bad header output is set to high.

The time to process the header is longer than the header: the header is 60-bit long and the time to process the header is at least 66 bits.

For decoding the payload, first, the received data have to be de-interleaved. The time to process the header - state 2: decode header - is longer than the length of the header. Therefore, prior to this block, there is a buffer in order to store the data and wait for the result from the Header decoder block.

To do the de-interleaver operation, the same block as for the emission is used except that, the reading and writing operations are switched: this block writes the data diagonally and read them line by line. Some extra outputs and extra inputs are added. An output - *data available* pin - indicates to the Viterbi decoder that new data are available. Two extra inputs - *kind of encoder* pin and *payload length* - gives information about the current frame and allow to compute the encoded payload length. These two last inputs are indeed the values of two fields' header of the actual frame. They allow to compute the length of the encoded payload - *LengthPayloadEncoded* variable:

if kind of encoder is 0,

    LengthPayloadEncoded = 2xLengthPayload+4;

else,

    LengthPayloadEncoded = ceil (4/3xLengthPayload+5);

end;

A ceil function finds the nearest integer towards +infinity. ex: ceil(2.3) = 3. As soon as *LengthPayloadEncoded* bits have been sent from the *de-interleaver* block to the *Viterbi decoder,* the *de-interleaver* block stops sending bits and reset its internal memory and set to high the output pin *last block read.*

Then, the data is decoded. The Viterbi decoder is used. There are two different decoders. The value of the header (the field *kind of encoder)* selects the correct decoder. The resulting bits are stored into the FIFO memory. During the processing, the pin *start decoderstays* high.

Using the values of the header's fields, the length of the encoded payload can be processed (variable *Length-PayloadEncoded*). After the *Payload Decoder* block has received *LengthPayloadEncoded* bits, all the data has been received by the *Payload Decoder* block. The *last block read* pin becomes high. The receiver have to change its state in order to search for *a* new SOF flag. Therefore, the pin *start* decoder becomes low. After having process the whole payload - the number of bits of the payload before encoding is given inside the header, *constraint length* bits set at "0" are sent to the Viterbi decoder, where *constraint length* is the constraint length of the Viterbi decoder.

A possible implementation of the de-interleaver is shown on Fig 89.

The incoming data - *data_in* pin - are stored in the write memory block. The *write counter* manages the address where the data are stored in. When there is a beginning of a frame - *first data* pin high, the *write counter* is reset and a "1" is stored in the *first block* memory. The *Kind of encoder* and the *payload length* are stored into their associated memory blocks. As soon as the last bit is written, then the input *last bit* becomes high.

In the same time, data are read from the read memory block and placed to the output *data_out* pin. The *read counter* manages the address where the data are read from. The counter *payload bit counter* counts the number of bits which have been sent from the *de-interleaver* block to the *Viterbi decoder* block. As soon as this number reaches its maximum, *encoded payload length,* which depends on the *kind of encoder* and *payload length* values, the both counter - *payload bit counter* and *read counter-* are reset and no more bits are sent to the *Viterbi decoder* until a new block begins. If the *first block* memory block is set to "1", it indicates the beginning of a new frame. Then this memory block is set to "0" and the counters *read counter* and *payload bit counter* are reset, the *encoded payload length* is computed. Two output pins indicates if it is the first output bit - *first bit read* output pin - or the last bit read - *last bit read* output pin.

As soon as the *write counter* and *read counter* reaches their maximum - normally at the same time, which is 1024, the write block memory with its associated *first block* is switched with the read block memory with its associated *first block, kind of encoder* and *payload length* memory blocks and the both counters - *write counter* and *read counter-* are reset.

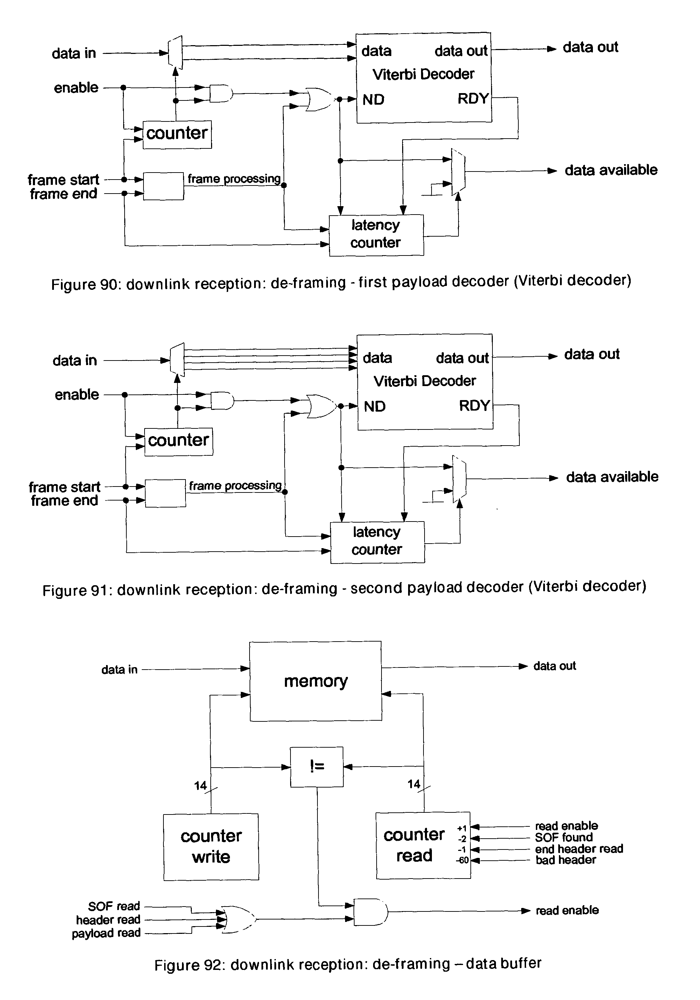

Then, the data is decoded. The Viterbi decoder is used. There are two different decoders shown on Fig 90 and 91 respectively. The value of the header - the field *kind of encoder* - selects the correct decoder. The resulting bits are stored into the FIFO memory.

After the *Payload Decoder* block has received *LengthPayloadEncoded* bits, all the data has been received by the *Payload Decoder* block. The receiver have to change its state in order to search for a new SOF flag. After having process the whole payload - the number of bits of the payload before encoding is given inside the header, all the internal memories are reset.

In order to increase the speed of the Viterbi decoder, the bit rate between the *de-interleaver* block and the *Viterbi decoder* is increased. Therefore, the time needed to decode a 1024-bit block is lower than 1024 bits.

The data are buffered in the block of Fig 92. As the time to process the header is longer than the length of the header. Therefore, this buffer allows not to lose payload data, while waiting for the result of the *decode header* block.

Furthermore, if a wrong SOF is detected, this memory allows to search for a new SOF, which could be just after the wrong SOF. Indeed, after receiving the result from the *header decoder* block that the header is incorrect, the *data buffer* has to read again previous data and send them to *SOF detect* block.

The memory is a 18-kbit long FIFO. The memory is a dual port memory. The addresses - for writing and reading - are managed by two counters.

The *counter write* and the *counter read* are a 0 to 16383 counter. These counters are increased by 1 after each read or write operation. When a SOF is found, the *counter read* is decreased in order to take the latency into account. When a bad header is found, the *counter read* is decreased by 60 in order to search for a new SOF.

SLAVE LK12011 UPLINK TRANSMISSION

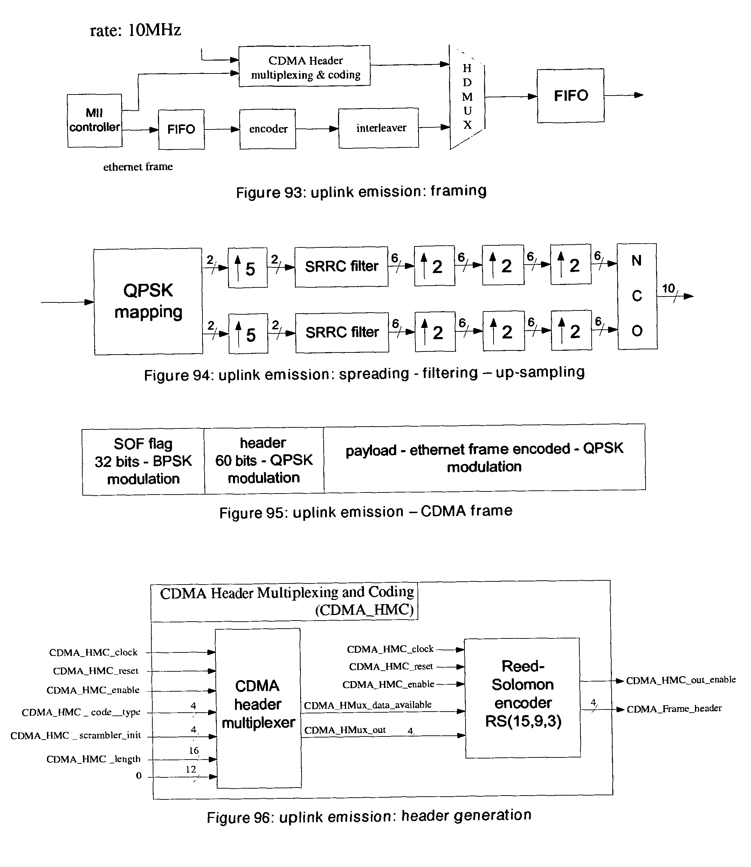

Below is given the description of the Uplink emission developed in the LK12011. The principle of the framing, spreading, filtering, up-sampling of the uplink emission are now shown on Fig 93 and 94. The LK12011 communicates with the gateway (LK12001) by sending some frames. The frames emitted on the PLC medium are CDMA frames.

The CDMA frame includes the three different fields: a start of frame flag (SOF), a header and a payload. The two latter are obtained from the MII controller or the system controller. These three frames are serially concatenated in this order (SOF first, then the header and finally the payload), and encoded so as to protect them against error bursts when transmitted.

Fig 95 shows uplink emission CDMA frame.

The Start of Frame Flag (SOF) is used at reception end to detect the beginning of a frame and to synchronize the gateway (LK12001). It is a specific pattern, which is modulated only on the I channel. Therefore, the modulation of the SOF flag is a BPSK modulation (on the contrary, the header and the payload are QPSK modulated). This SOF flag is not generated in the *framing* block. It is appended to the CDMA frame within the *QPSK mapping* block.

The header contains some key system information (data frame length, kind of payload encoding, initialization of the payload scrambler). This header is protected with a Reed-Solomon error correcting code and is sent directly on the channel without interleaving.

The payload encapsulates a whole Ethernet frame that is convolutionally encoded and interleaved (see Fig 94).

Firstly, the header and the payload are concatenated by a multiplexer within the block *HDMUX* (see Fig 93, *HDMUX* block). Then, within the block *QPSK mapping,* the SOF flag is appended (seeRENVFUSIONFORMAT *QPSK mapping* block).

The generation of a CDMA frame is the same as for the downlink emission except that the *SOF flag* is not generated and concatenated with the header and payload of the CDMA frame. This will be done later during the *QPSK mapping.*

The CDMA Header multiplexing and coding block is shown on Fig 95. The header is composed of 36 bits. This header includes the following fields :

1. the type of the forward error correcting code, used to protect the data (4 bits)
2. payload scrambler initialization (4 bits)
3. the length of the data frame (16 bits)
4. an unused field of 12 bits (for future use)

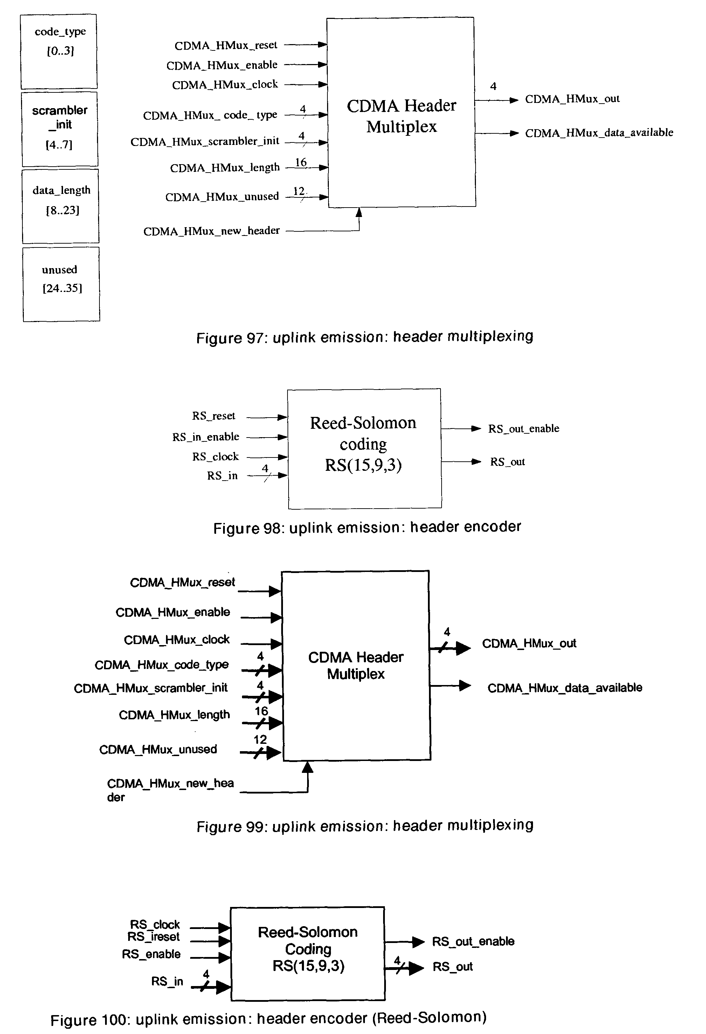

The header is received in parallel on a bus of size 36 bits and has to be sequentially output with 4-bit symbols. This is the role of the CDMA Header Multiplexer (CDMA_HMux). When multiplexed, the Header must be then encoded by a Reed-Solomon Encoder. As shown in the Fig 96, the Reed Solomon Encoder works with 4-bit information words (see next paragraph for details). The global structure is given on Fig 97 - 99. MA_HMux)

The goal of the CDMA Header Multiplexer is to sequentially output the header received on a 36-bit bus.

The Functional Behaviour of this multiplexer is the following :

```
if(CDMA_HMux_reset is low)
        the internal register are set to 0
        CDMA_HMux_data_available = 0
        wait_for_new_header =1   // internal state
        deliver_data =0          // internal state
    else
        if(CDMA_HMux_enable is high)
            if(CDMA_HMux_new_header is
            high)&(wait_for_new_header=1)
            read new header on input
            wait_for_new_header = 0
            deliver_data = 1
            count = 0
        end // if new_header
        if(deliver_data=1)
            deliver data on output
            CDMA_HMux_data_available =1
            count = count+1
            if(count=36)
                    wait_for_new_header =1



                deliver_data =0
                end // if count
            else // deliver_data =0
                CDMA_HMux_data_available = 0
            end // if deliver_data
        elseif(CDMA_HMux_enable is low)
                CDMA_HMux_data_available =0
        end // elseif enable
    end // else reset
```

The header is protected against error bursts through the use of a (systematic) Reed-Solomon(15,9,3) encoder of Fig 100 whose parameters are :

- m=4        (dimension of the Galois Field GF(16))
- n=$2^m$-1=15
- t=3        (symbol-error correcting capability)
- k=n-2t        (number of information symbol)
- dmin=n-k+1        (minimum distance)

The Reed Solomon Encoder must be fed with 9 successive information symbols of m bits (m=4) on its input *RS_in.* The Encoder will output (on *RS_out*) the 9 input words (36 bits) as they are, and will produce 6 additional symbols of m bits leading thus to a an amount of 60 coded bits (structured as 4-bits words).

The representation of the encoder (see Fig 15) is based upon the extension Galois Field GF(16) created with the primitive polynomial p(x) = $x^4+x+1$ . The primary element of GF(16), denoted $\alpha$, is a root of p(x), i.e. p($\alpha$)= $\alpha^4+ \alpha +1=0$ : the element $\alpha$ generates the Galois field GF(16) through the set of its powers :

$$GF(16) = \{0,1, \alpha , \alpha^2,...,\alpha^{14}\}$$

where 14 = $2^m$-2. Let recall that the primary element satisfies $\alpha^{15}$=1.

From p($\alpha$)=0 property, each element of GF(16) can be represented as a polynomial of $\alpha$ of degree less or equal to 3 (m-1) by taking the remainder of an element, considered as a power of $\alpha$, modulo p($\alpha$). Equivalently we can take the binary coefficients of this polynomial representation so as to represent the elements of GF(16). For instance, as $\alpha^4+ \alpha +1=0$, we may write that $\alpha^4 = \alpha +1 = 0. \alpha^3 + 0. \alpha^2 + 1.\alpha +1. \alpha^0$, or [0011]. Each element a$\in$ GF(16) thus writes :

$$a = a_0 + a_1.\alpha + a_2. \alpha^2 + a_3. \alpha^3 = [a_3\ a_2\ a_1\ a_0]$$

with $a_i$, binary coefficients. We thus get the following binary representation table :

| Field element | Basis Representation [ $\alpha^3$ $\alpha^2$ $\alpha$ $\alpha^0$ ] |
| --- | --- |
| 0 | [ 0000 ] |
| 1 | [ 0001 ] |
| $\alpha$ | [ 0010 ] |
| $\alpha^2$ | [ 0100 ] |
| $\alpha^3$ | [ 1000 ] |
| $\alpha^4$ | [ 0011 ] |
| $\alpha^5$ | [ 0110 ] |
| $\alpha^6$ | [ 1100 ] |
| $\alpha^7$ | [ 1011 ] |
| $\alpha^8$ | [ 0101 ] |
| $\alpha^9$ | [ 1010 ] |
| $\alpha^{10}$ | [ 0111 ] |
| $\alpha^{11}$ | [ 1110 ] |
| $\alpha^{12}$ | [ 1111 ] |
| $\alpha^{13}$ | [ 1101 ] |
| $\alpha^{14}$ | [ 1001 ] |

This representation is useful for hardware representation. The binary representation of the elements of GF (16) is particularly convenient when performing sums of elements : only modulo-2 additions of the binary vector representation coefficients have to be performed (without considering any carry).

In the sequence, either the binary representation of the elements of GF(16) or their representation in terms of powers of $\alpha$ are indistinctly used.

The systematic RS(15,9,3) encoder is defined by the following polynomial :

$$g(x) = \alpha^6 + \alpha^9.x + \alpha^6.x^2 + \alpha^4.x^3 + \alpha^{14}.x^4 + \alpha^{10}.x^5 + x^6$$

A codeword c(x), seen as a polynomial of degree n-1 with coefficients in GF(16), associated with the information word m(x) (of degree k-1) may be expressed as :

$$c(x) = x^{n-k}.m(x) + (x^{n-k}.m(x) \bmod g(x))$$

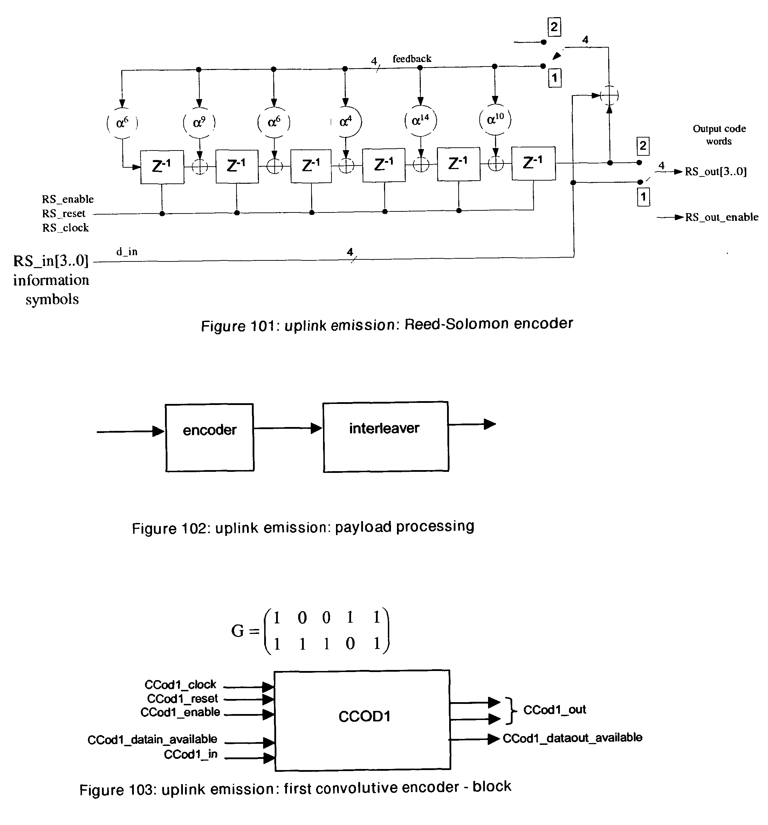

Thus, the codeword has n-k more symbols than the information message m(x). This encoder can be implemented according to the scheme of Fig 101 with 6 shift registers.

On position 1 (position 1 is set when reset is active), the information symbols from *RS_input[3..0]* are passed through the linear feedback shift registers (LFSR), but the result of the LFSR is not of interest : the information message feeds the output.

When the whole information message has fed the encoder, then position 2 is set : the remainder of the division of $x^{n-k}$.m(x) by g(x) is contained in the LFSR and must be emptied to feed the output and complete the code word. At the same time, during position 2, the LFSR is fed back with null symbols.

The received Ethernet Frame, for payload processing is first convolutionally encoded, then interleaved with a diagonal interleaver. according to Fig 102.

Different kind of convolutional encoders are used. A first encoder has the following parameters : k=1, n=2, ν=2, and its generator matrix is:

$$G = \begin{pmatrix} 1 & 0 & 0 & 1 & 1 \\ 1 & 1 & 1 & 0 & 1 \end{pmatrix}$$

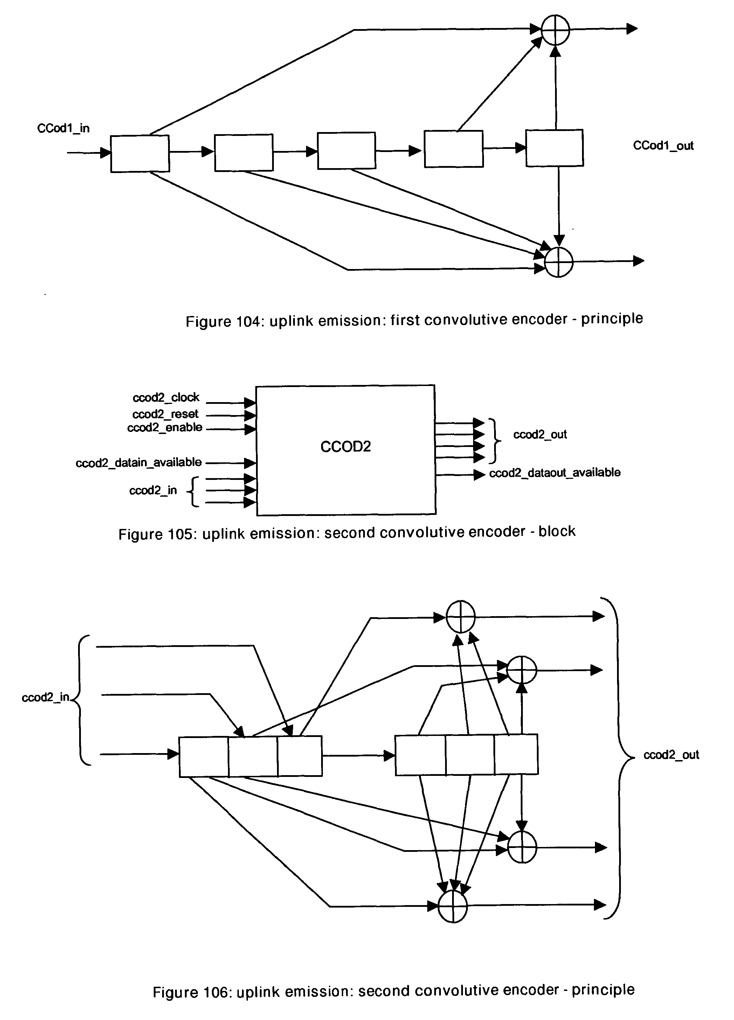

It is shown on Fig 103, its principle is shown on Fig 104.

The data (1 bit) arrive bit per bit. The most recent data is stored into the first shift register. Then, it is shifted from the shift register to the next shift register (to the right side). The output data bits (2 bits) are computed using the content of the shift registers.

If the *reset* input is high, then the registers' content are reset.

A second encoder has the following parameters : k=3, n=4, ν=2, and

$$G = \begin{pmatrix} 0 & 0 & 1 & 0 & 1 & 1 \\ 0 & 1 & 0 & 1 & 0 & 1 \\ 1 & 1 & 0 & 0 & 0 & 1 \\ 1 & 0 & 0 & 1 & 1 & 1 \end{pmatrix}$$

its generator matrix is:

It is shown on Fig 105, its principle is shown on Fig 106.

The data are stored per block of three bits into the first three shift registers. The most recent data is stored into the rightmost shift register. The output data are calculated using the content of the six shift registers. Then, the three leftmost registers are shifted to the three rightmost registers.

If the *reset* input is high, then the registers' content are reset.

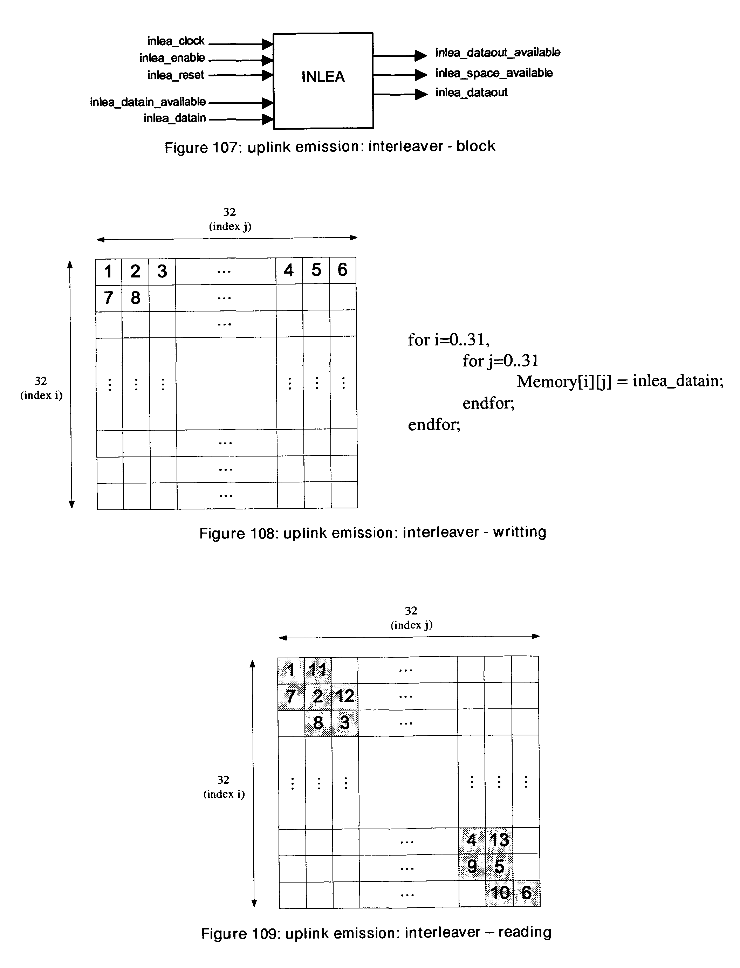

The block of Fig 102 comprises the interleaver of Fig 107. with an interleaving depth of 1024 bits.

The purpose of this block is to interleave a block of data of size 1024. It uses a memory (of the same size) in which the data are written linearly (sequentially) and read in another specific order.

The data are first read on the input and stored into the whole internal memory. While there is some space into the internal memory (the output *inlea_space_available* is high) and some data are available on the input (the input *inlea_data_available* is high), some data can be read from the pin *inlea_datain* and stored sequentially into the internal memory.

The input reading process is described in the Fig 23, where the matrix of Fig 108 represents the internal memory.

...

```
for i=0..31,
        for j=0..31
                Memory[i][j] = inlea_datain;
        endfor;
endfor;
```

When the memory is full, he output *inlea_space_available* is set at low level and he output signal *inlea_data_available* is set at high level. The data have to be interleaved and output onto the output signal *inlea_dataout*.
The data are read diagonally from the internal memory and set sequentially to the output in the following way :
The process to read the lower diagonal number d is :

```
read_lower_diagonal(d)
{
        for k=0..32-d,
                inlea_dataout = Memory[k+d][k];
        endfor
}
```

The first index denotes the line number (into the matrix form of the memory) and the second index denotes the column number.
To read the upper diagonal number d:

```
read_upper_diagonal(d)
{
        for k=0..32-d,
                inlea_dataout = Memory[k][k+d];
        endfor
}
```

The algorithm used to read the whole memory and put the data onto the output pin *inlea_dataout*, according to Fig 109, is :

```
read_upper_diagonal(0);   // read the main diagonal
```

```
for d=1..31,                    // read the other diagonals

        read_lower_diagonal(d);
        read_upper_diagonal(d);
        endfor
```

When the reading is done - at the same time, the writing is done - then the two memory blocks - the one that stores the data read and the one that stores the data written - are switched. There is no reset done.

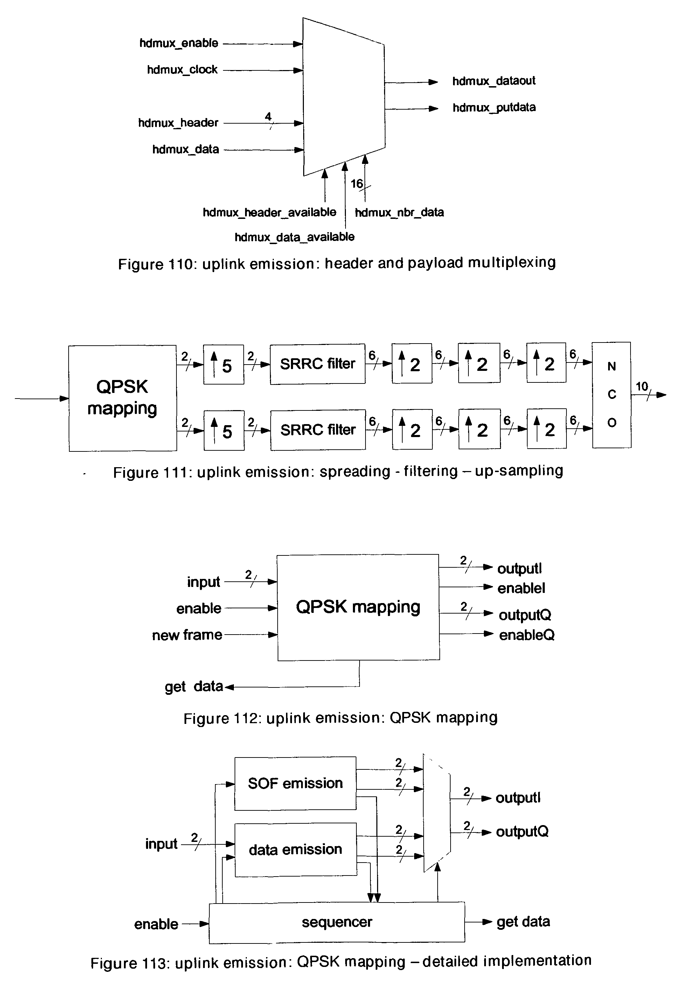

A Header Data Multiplexer (HDMUX), shown on Fig 110 has, as a purpose, to serially concatenate the frame header and the payload data (the SOF flag will be added later).

When a frame header is available - *hdmux_header_available* is high - then the multiplexer reads the 60-bit header per block of 4 bits. These data are placed onto the output - *dhmux_dataout* - and the pin *dhmux_putdata* is set high.

Finally, the data field is read. While the input *hdmux_data_available* is high, the multiplexer reads data from the *hdmux_data* input. The *hdmux_nbr_data* bits represent the length of the CDMA frame (header + data).

The goal of the blocks shown on Fig 111 is to first modulate the signal using a QPSK modulation, to add the SOF flag BPSK modulated. Then, the symbols generated are filtered and up-sampled. Finally, the signal is transposed from the baseband to the IF frequency - the center frequency Do is 20MHz.

The goal of the QPSK mapping block of Fig 112 is to modulate the input data (2 bits) using the QPSK modulation. The first bit of the *input* pin goes to the *outputI* pin and the second bit goes to the *outputQ* pin. It also add the SOF flag at the beginning of a frame - signaled by the *new frame* pin - BPSK modulated (only modulated on the I channel).

The SOF flag is, before BPSK modulation:

1, 1, 0, 1, 0, 1, 0, 1, 0, 0, 1, 1, 1, 1, 1, 0, 1, 0, 0, 1, 0, 0, 1, 1, 1, 1, 1, 1, 1, 1, 0, 0

To do this, the implementation of Fig 113 is used.

When this block is enabled, it generates the SOF flag BPSK modulated on the I channel. The Q channel remains at 0. The BPSK modulation consists into the following mapping:

$$0 \rightarrow +1$$

$$1 \rightarrow -1$$

The SOF flag is the following pattern:

1, 1, 0, 1, 0, 1, 0, 1, 0, 0, 1, 1, 1, 1, 1, 0, 1, 0, 0, 1, 0, 0, 1, 1, 1, 1, 1, 1, 1, 1, 0, 0

When this block is enabled, it emits the bits on the *input* pin, 2 bits. The bits are first BPSK modulated and then, the first BPSK symbol is placed onto the I channel and the second symbol is placed onto the Q channel.

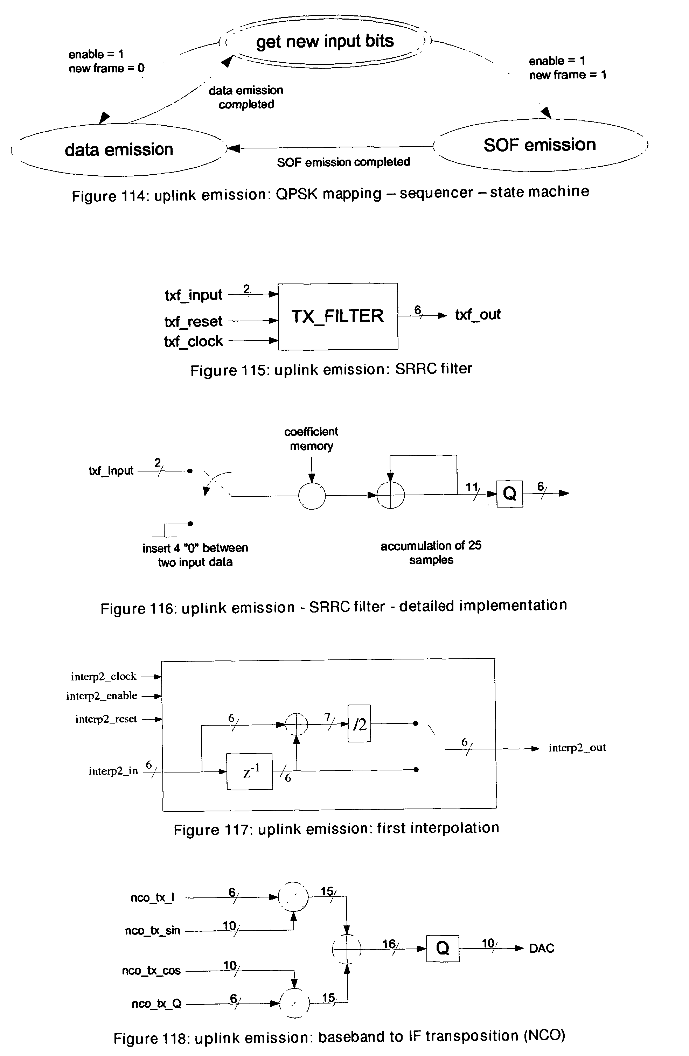

The sequencer implements the state machine of Fig 114.

During the *get new inputs* state, the output pin *get data* is set during one bit period.

The Tx filter of Fig 115, shown in details on Fig 116, performs the filtering of the digital input data with a square root FIR raised cosine filter with a roll-off factor of 0.22. The filter's coefficients are stored into an internal memory (half filter is stored due to its symmetry) in a 10-bit fixed point format. The input data rate is 2.5Mhz and the output data rate is 12.5MHz. Thus, for a given input sample, 5 output samples are produced in the following time. The input data are first over-sampled by a factor 5 (insertion of 4 "0"s between two data), and then passed into the shift registers at rate 25 Mhz.

A *reset* signal is used to initialize the internal shift registers to the null value.

As a certain number of shift registers are zero valued at a given time, only the non-null valued shift registers will be processed at each time to compute the filter output. In other words, during a chip period, all the 5 phases components of the filter are processed sequentially and independently using the same state of the shift register.

The number of filter's coefficient is : N_coef = 13.

The filter's coefficients are formatted in a 10-bit signed format. There are 13 filter's coefficients.

| Filter's coefficient value (real) | Filter's coefficient value (fixed point) |
|---|---|
| 1 | 0111111111 (511) |
| 0.92566898454465 | 0111011001 (473) |
| 0.72303324392894 | 0101110001 (369) |
| 0.44636778638057 | 0011100100 (228) |
| 0.16599777270489 | 0001010100 (84) |
| -0.05407304737984 | 1111100101 (-27) |
| -0.17501812439354 | 1110100111 (-89) |
| -0.19215861829932 | 1110011110 (-98) |
| -0.13167851017065 | 1110111101 (-67) |
| -0.03738655434622 | 1111101101 (-19) |
| 0.04670069727227 | 0000010111 (23) |
| 0.09119747809226 | 0000101110 (46) |
| 0.08855908308856 | 0000101101 (45) |

Just after the *SRRC* filter block, the data are interpolated by a factor 2 by the block of Fig 117 in order to increase the sampling rate. The interpolator computes the mean sample between two consecutive input samples and insert this sample between these two samples to the output. Thus the output rate is twice the input rate.

On each channel (I or Q), there are 3 consecutive interpolators. The sampling rate just after the SRRC filter is 12.5MHz. Therefore, the output sampling rate after the 3 successive interpolations is 8x12.5MHz = 100MHz.

The block NCO Tx (nco_tx) of Fig 118 delivers an in-phase and in-quadrate carrier for the Tx path. Considering the PLNIC side, Tx is uplink. The carrier frequency is defined as 20 MHz. The input and output sampling rate is 100MHz.

Tabulated values of the sine and cosine functions are given in the table below. These values are stored into an internal memory. Carrier frequency is set to 20MHz and values are generated at rate 100MHz and quantified using a signed 10-bit format.

To compute these values:

$$\text{Cos table}(k) = \cos(2\pi v_c(k/F_s)) = \cos(2\pi k/5)$$

$$\text{Sin table}(k) = \sin(2\pi v_c(k/F_s)) = \sin(2\pi k/5)$$

where:

$v_c$, the carrier frequency (20M Hz)

$F_s$, the sampling frequency (100MHz)

Only one period is stored into the internal memory. To compute this period:

$$Cos(k) = Cos\ table(k)\ if\ k \in [[0;\ 4]]$$

where: Cos table(k) the tabulated values of the cosine stored into the internal memory

$$Sin(k) = Sin\ table(k)\ if\ k \in [[0;\ 4]]$$

where: Sin table(k) the tabulated values of the sine stored into the internal memory

As the cosine and the sine are periodical functions with of period of $2\pi$, only these values are useful : $Sin(k+5) = Sin(k)$ and $Cos(k+5) = Cos(k)$

Then, the result is: $out(k) = I(k).Sin(k)+Q(k).Cos(k)$

| Cos (real) | Cos (fixed point) | Sin (real) | Sin (fixed point) |
|---|---|---|---|
| 1.00000000000000 | 0111111111(511) | 0 | 0000000000 (0) |
| 0.30901699437494 | 0010011110 (158) | 0.95105651629515 | 0111100110 (486) |
| - 0.80901699437495 | 1001100011 (-413) | 0.58778525229247 | 0100101100 (300) |
| - 0.80901699437495 | 1001100011 (-413) | -0.58778525229247 | 1011010100 (-300) |
| 0.30901699437495 | 0010011110 (158) | -0.95105651629515 | 1000011010 (-486) |

**Claims**

1. A Digital data distribution system comprising :

   - an electric power lines network, and
   - inductive couplers distributed in different locations of the network for coupling data processing units to this network for transmission, and
   - in these couplers, a master coupler and a set of slave couplers wherein

   - the master coupler comprises a coding emitter, of the CDMA type, with a spreading factor, for transmitting CDMA coded data on the network after such a coding, and
   - each slave coupler comprises a receiver, for receiving this CDMA coded data from the master coupler and for decoding it, and a QAM modulation emitter, without spreading factor, for transmitting coded data on the network to said master coupler.

2. A digital system according to the claim 1, wherein

   - said master coupler comprises means for emitting chips by a multiplication, within the coding emitter, of binary symbols by binary spreading sequences, at least one of these binary spreading sequences being dedicated to the transmission of a permanent regular signal serving as a synchronisation signal for the system.

3. A digital system according to claim 2, wherein

   - two binary coding sequences are dedicated to the transmission of a permanent regular signal serving as a synchronisation signal for the system.

4. A digital system according to anyone of the claims 2 to 3, wherein it comprises means for said permanent regular signal is formed by sequence of binary states, all the same, directly coded by said CDMA coding.

5. A digital system according to anyone of the claims 1 to 6, wherein

- said master coupler comprises means for emitting chips by a multiplication, within the coding emitter, of binary symbols by binary spreading sequences, at least one of these binary spreading sequences being dedicated to the transmission of a managing signal, said managing signal serving for the parameterisation of the slave couplers.

6. A digital system according to anyone of the claims 1 to 5, wherein

- said master coupler comprises means for emitting chips by a multiplication, within the coding emitter, of binary symbols by binary coding sequences, and for allocating a variable number of binary spreading sequences to a transmission between said master coupler and a slave coupler, said variable number being function of needed throughput by said slave coupler.

7. A digital system according to anyone of the claims 1 to 6, wherein

- a slave coupler comprises an emitter emitting n-QAM modulated signals, preferably 64 QAM, said n modulation factor being function of the performance of the channel and of a wanted transmission rate.

8. A digital system according to anyone of the claims 1 to 7, wherein - said spreading factor is 64.

9. A digital data system according to anyone of the claims 1 to 8, wherein said slave couplers comprises means for emitting a sequence in uplink transmission.
   which is:
   1, 1, 0, 1, 0, 1, 0, 1, 0, 0, 1, 1, 1, 1, 1, 0, 1, 0, 0, 1, 0, 0, 1, 1, 1, 1, 1, 1, 1,1,0,0

10. A digital data system according to anyone of the claims 1 to 9, wherein said QAM modulation is a BPSK modulation.

11. A digital data system according to anyone of the claims 1 to 10, wherein said CDMA coded data are further QPSK modulated.

12. A digital signal according to any one of the claims 1 to 11, wherein the CDMA coded data are transmitted in a low bandwidth between 15 and 18 MHz which is separated from a high bandwidth between 18 and 22 MHz in which are transmitted the QAM transmissions.

**Patentansprüche**

1. Vorrichtung zur Verteilung von digitalen Daten umfassend:

- ein Netzwerk aus elektrischen Stromleitungen und
- induktive Koppler, die auf verschiedene Orte des Netzwerks verteilt sind, um Datenverarbeitungseinheiten an das Netzwerk zur Übertragung anzukoppeln, und
- unter den Kopplern einen Hauptkoppler und einen Satz von Nebenkopplern,

   wobei

- der Hauptkoppler einen Codiersender vom Typ CDMA umfasst mit einem Verteilungsfaktor zur Übermittlung von CDMA codierten Daten über das Netzwerk nach dem Codieren, und
- jeder Nebenkoppler einen Empfänger umfasst zum Empfangen dieser CDMA codierten Daten vom Hauptkoppler und zum Decodieren davon, und einen QAM Modulationssender ohne Verteilungsfaktor zur Übermittlung codierter Daten über das Netzwerk zum Hauptkoppler.

2. Digitale Vorrichtung gemäß Anspruch 1 wobei

- der Hauptkoppler innerhalb des Codiersenders Mittel umfasst, durch Multiplikation von binären Symbolen mit binären Verteilungssequenzen Chips auszusenden, wobei zumindest eine von diesen binären Verteilungssequenzen bestimmt ist zur Übermittlung eines gleichmäßigen Dauersignals, das als Synchronisationssignal für die Vorrichtung dient.

3. Digitale Vorrichtung gemäß Anspruch 2, wobei

   - zwei binäre Codiersequenzen der Übertragung eines regelmäßigen Dauersignals zugewiesen sind, das als Synchronisationssignal für die Vorrichtung dient.

4. Digitale Vorrichtung gemäß Anspruch 2 oder 3, die Mittel zum Erstellen des regelmäßigen Dauersignals durch Sequenzen von binären Zuständen umfasst, die alle direkt verschlüsselt sind durch besagte CDMA Codierung.

5. Digitale Vorrichtung gemäß einem der Ansprüche 1 bis 6, wobei

   - der Hauptkoppler innerhalb des Codiersenders Mittel umfasst, durch Multiplikation von binären Symbolen mit binären Verteilungssequenzen Chips auszusenden, wobei zumindest eine von diesen binären Verteilungssequenzen bestimmt ist zur Übermittlung eines Steuersignals, das zur Parametrisierung der Nebenkoppler dient.

6. Digitale Vorrichtung gemäß einem der Ansprüche 1 bis 5, wobei

   - der Hauptkoppler innerhalb des Codiersenders Mittel umfasst, durch Multiplikation von binären Symbolen mit binären Codiersequenzen Chips auszusenden, und zur Zuordnung einer variablen Anzahl von binären Verteilungssequenzen zu einer Übertragung zwischen dem Hauptkoppler und einem Nebenkoppler, wobei die variable Anzahl eine Funktion des benötigten Durchsatzes durch den Nebenkoppler ist.

7. Digitale Vorrichtung gemäß einem der Ansprüche 1 bis 6, wobei

   - ein Nebenkoppler einen Sender umfasst, der n-QAM modulierte Signale aussendet, vorzugsweise 64 QAM, und wobei der n Modulationsfaktor eine Funktion der Leistung des Kanals und der gewünschten Übermittlungsrate ist.

8. Digitale Vorrichtung gemäß einem der Ansprüche 1 bis 7, wobei der Verteilungsfaktor 64 beträgt.

9. Digitale Vorrichtung gemäß einem der Ansprüche 1 bis 8, wobei besagte Nebenkoppler Mittel zur Sendung einer Sequenz zur Uplink Übertragung umfassen, die wie folgt lautet:
   1, 1, 0, 1, 0, 1, 0, 1, 0, 0, 1, 1, 1, 1, 1, 0, 1, 0, 0, 1, 0, 0, 1, 1, 1, 1, 1, 1, 1,1,0,0

10. Digitale Vorrichtung gemäß einem der Ansprüche 1 bis 9, wobei die QAM Modulation eine BPSK Modulation ist.

11. Digitale Vorrichtung gemäß einem der Ansprüche 1 bis 10, wobei die CDMA kodierten Daten außerdem QPSK moduliert sind.

12. Digitales Signal gemäß einem der Ansprüche 1 bis 11, wobei die CDMA kodierten Daten in einer schmalen Bandbreite zwischen 15 und 18 MHz übertragen werden, die beabstandet ist von einer hohen Bandbreite zwischen 18 und 22 MHz, in der die QAM Übertragung übertragen wird.


**Revendications**

1. Système de distribution de données numériques comportant un réseau de conducteurs électriques de puissance et des coupleurs inductifs répartis en différents endroits du réseau pour coupler en transmission des unités de traitement de données à ce réseau, et dans les coupleurs, un coupleur maître et un ensemble de coupleurs esclaves, **caractérisé en ce que** le coupleur maître comporte un émetteur codeur de type CDMA à étalement de spectre pour transmettre des données codées CDMA sur le réseau après un tel codage, et **en ce que** chaque coupleur esclave comporte un récepteur pour recevoir ces données codées CDMA depuis le coupleur maître et pour les décoder et un émetteur en modulation QAM, sans étalement de spectre, pour émettre des signaux codés sur le réseau vers le coupleur maître.

2. Système numérique selon la revendication 1, **caractérisé en ce que** le coupleur maître comporte des moyens pour émettre des chips par multiplication, dans le codeur émetteur, de symboles binaires par des séquences binaires d'étalement, au moins une de ces séquences binaires d'étalement étant dédiée à la transmission d'un signal régulier permanent servant de signal de synchronisation du système.

**3.** Système numérique selon la revendication 2, **caractérisé en ce que** deux séquences binaires de codage sont dédiées à la transmission d'un signal régulier permanent servant de signal de synchronisation du système.

**4.** Système numérique selon l'une des revendications 2 à 3, **caractérisé en ce que** le signal régulier comporte une suite d'états binaires, tous identiques, subissant directement le codage du codeur de type CDMA.

**5.** Système numérique selon l'une des revendications 1 à 4, **caractérisé en ce que** le coupleur maître comporte des moyens pour émettre des chips par multiplication, dans le codeur émetteur, de symboles binaires par des séquences binaires d'étalement, et **en ce qu'**une séquence binaire d'étalement est dédiée à la transmission d'un signal de gestion, ce signal de gestion étant utilisé pour paramétrer les coupleurs esclaves.

**6.** Système numérique selon l'une des revendications 1 à 5, **caractérisé en ce que** le coupleur maître comporte des moyens pour émettre des chips par multiplication, dans le codeur émetteur, de symboles binaires par des séquences binaires de codage, et pour allouer un nombre variable de séquences binaires d'étalement à une communication entre le coupleur maître et un coupleur esclave, ce nombre variable étant fonction des besoins de débit de ce coupleur esclave.

**7.** Système numérique selon l'une des revendications 1 à 6, **caractérisé en ce qu'**un coupleur esclave comporte un émetteur en modulation de type n QAM, de préférence de type 64 QAM, dans lequel le facteur n de modulation dépend des performances du canal et du débit souhaité.

**8.** Système numérique selon l'une des revendications 1 à 7, **caractérisé en ce que** le facteur d'étalement de spectre CDMA vaut 64.

**9.** Système numérique selon l'une des revendications 1 à 8, **caractérisé en ce que** chaque coupleur esclave comporte des moyens pour émettre une séquence qui est :
1, 1, 0, 1, 0, 1, 0, 1, 0, 0, 1, 1, 1, 1, 1, 0, 1, 0, 0, 1, 0, 0, 1, 1, 1, 1, 1, 1, 1, 1, 0, 0

**10.** Système numérique selon l'une des revendications 1 à 9, **caractérisé en ce que** ladite modulation QAM est une modulation BPSK.

**11.** Système numérique selon l'une des revendications 1 à 10, **caractérisé en ce que** lesdites données codées CDMA sont en outre modulées QPSK

**12.** Système numérique selon l'une des revendications 1 à 11, **caractérisé en ce que** les données codées CDMA sont transmises dans une bande basse entre 15 et 18 MHz qui est séparée d'une bande haute entre 18 et 22 MHz dans laquelle sont transmises les émissions QAM.

Figure 1: System configuration

Figure 2: Spectrum occupancy

parameters:
TX_NB_CODE_MAX = 61 : maximum number of spreading codes
TX_NB_USER : number of active users
TX_NB_USER_MAX = 10: maximum number of active users
TX_NB_CODE_Ui: number of active codes for the user i

Figure 3: downlink emission: framing

Figure 4: downlink emission: spreading - filtering – up-sampling

Figure 5: MII controller

Figure 6: MII controller: state machine

| interframe gap | preamble | sfd | data | interframe gap |
|---|---|---|---|---|

Figure 7: ethernet frame format

| | PRE | ST | OP | PHYAD | REGAD | TA | data | idle |
|---|---|---|---|---|---|---|---|---|
| read | 11....1 | 01 | 10 | AAAAA | RRRRR | Z0 | DDDDDDD | Z |
| write | 11....1 | 01 | 01 | AAAAA | RRRRR | 10 | DDDDDDD | Z |

Figure 8: MII interface: management frame

Figure 9: downlink emission: formation of a CDMA frame

Figure 10: downlink emission: SOF flag generation

EP 1 432 138 B1

Figure 11: downlink emission: header generation

Figure 12: downlink emission: header multiplexing

Figure 13: downlink emission: header encoder

Figure 14: downlink emission: header multiplexing

Figure 15: downlink emission: header encoder (Reed-Solomon)

Figure 16: downlink emission: Reed-Solomon encoder

Figure 17: downlink emission: payload processing

Figure 18: downlink emission: first convolutive encoder - block

Figure 19: downlink emission: first convolutive encoder - principle

Figure 20: downlink emission: second convolutive encoder - block

Figure 21: downlink emission: second convolutive encoder - principle

Figure 22: downlink emission: interleaver - block

```
for i=0..31,
        for j=0..31
                Memory[i][j] = inlea_datain;
        endfor;
endfor;
```

Figure 23: downlink emission: interleaver - writting

Figure 24: downlink emission: interleaver - reading

Figure 25: downlink emission: SOF header and payload multiplexing

dmux_get_data from the FIFOs    dmux_data_avaible (from the FIFOs)

user #1    user    user #0    user
#TX_NB_USER_MAX    #TX_NB_USER_MAX

...    ...

D
E
M
U
X

code #1

dmux_I

code
#TX_NB_CODE_MAX

user #1

code #1

dmux_in

dmux_Q

user
#TX_NB_USER_MAX

code #Ncode-1

dmux_enable_code #1

dmux_enable_code
#TX_NB_CODE_MAX

4    4

dmux_clock    dmux_enable    code #1    code
#TX_NB_CODE_MAX

dmux_clock out    dmux_reset

dmux_code_mapping

Figure 26: downlink emission: user to code demux - block

Figure 27: downlink emission: spreading - principle

Figure 28: downlink emission: Hadamard sequence generation

Figure 29: downlink emission: spreader

Figure 30: downlink emission: shaping filter

Figure 31: downlink emission: first interpolation

Figure 32: downlink emission: baseband to IF transposition (NCO)

Figure 33: downlink emission: second interpolation

Figure 34: downlink emission: second interpolation - phase and magnitude of the up-sampler filter

Figure 35: downlink emission: second interpolation - filter response to a dirac

Figure 36: uplink reception: down-sampling & filtering

Figure 37: uplink reception: synchronization, demodulation & de-framing

Figure 38: uplink reception: IF to baseband transposition (NCO)

Figure 39: uplink reception: down-sampler

Figure 40: uplink reception: first and second down-samplers - down-sampling filter response

Figure 41: uplink reception: third down-sampler - down-sampling filter response

rxf_input —10/—► 

RX_FILTER —12/—► rxf_output

rxf_reset ——►

rxf_clock ——►

Figure 42: uplink reception: SRRC filter

filter coefficients
memory

10/

rxf_input —10/—► ⊗ —19/—► ⊕ —22/—► Q —12/—► rxf_output

Figure 43: uplink reception: SRRC filter – implementation

12/

synchronization

sequencer

demodulation —► buffer —► decode header

decode payload —► FIFO

Figure 44: uplink reception: synchronization & demodulation

synchronization

end payload
number bits payload
demodulated = length
payload

header decoded
& bad header

synchronization
found

demodulation

decode payload ◄— decode header

header decoded
& good header

Figure 45: uplink reception: synchronization & demodulation – sequencer

Figure 46: uplink reception: synchronization

Figure 47: uplink reception: demodulation

Figure 48: uplink reception: demodulation – delay line

Figure 49: uplink reception: demodulation – phase correction

Figure 50: uplink reception: demodulation – QPSK de-mapping

Figure 51: uplink reception: demodulation – reformat output samples

Figure 52: uplink reception: demodulation – update synchronization position

Figure 53: uplink reception: demodulation – update phase

EP 1 432 138 B1

Figure 54: uplink reception: demodulation – update phase – phase computation

Figure 55: uplink reception: de-framing

Figure 56: uplink reception: de-framing – decode header

72

EP 1 432 138 B1

Figure 57: uplink reception: de-framing - de-interleaver

Figure 58: uplink reception: de-framing - first payload decoder (Viterbi decoder)

Figure 59: uplink reception: de-framing - second payload decoder (Viterbi decoder)

Figure 60: uplink reception: de-framing – data buffer

Figure 61: downlink reception: down-sampling & filtering

Figure 62: downlink reception: synchronization - demodulation

Figure 63: downlink reception: de-framing

Figure 64: downlink reception: automatic gain control

Figure 65: downlink reception: first decimation

Figure 66: downlink reception: first decimation - phase and magnitude of the down-sampler filter

Figure 67: downlink reception: first decimation - filter response to a dirac

Figure 68: downlink reception: IF to baseband transposition (NCO)

Figure 69: downlink reception: second decimation

Figure 70: downlink reception: second decimation - phase and magnitude of the down-sampler filter

Figure 71: downlink reception: second decimation - filter response to a dirac

Figure 72: downlink reception: shaping filter

5/Tc

12

delay line

Syn_chip

3

6

Syn_Phase

Synchro smoothing
& decision

Synchro Block

18

syn_gain (I&Q)

6

3

(Update every 5Ts)

syn_flag

syn_phase_pos

syn_chip_pos

Figure 73: downlink reception: synchronization

syn_signal

12

syn_enable

syn_clock

**Synchro Block**

18

syn_flag

syn_gain

3

syn_phase_pos

6

syn_chip_pos

Figure 74: downlink reception: synchronization - synchro block - block

syn_signal

12

syn_enable

syn_clock

correlation
points
computation

correlation
Points
Memory

maximum
searcher

syn_flag

18

syn_gain

3

syn_phase_pos

6

syn_chip_pos

Figure 75: downlink reception: synchronization - synchro block - principle

Figure 76: downlink reception: synchronization - correlation points computation - block

Figure 77: downlink reception: synchronization - correlation points computation - principle

Figure 78: downlink reception: synchronization - maximum searcher

Figure 79: downlink reception: synchronization - synchronization position filter - block

Figure 80: downlink reception: synchronization - synchronization position filter - principle

Figure 81: downlink reception: synchronization - delay line - block

Figure 82: downlink reception: synchronization - delay line - principle

Figure 83: downlink reception: demodulation - block

Figure 84: downlink reception: demodulation - principle

Figure 85: downlink reception: de-multiplexing

Figure 86: downlink reception: de-framing - state machine

Figure 87: downlink reception: de-framing - detect SOF flag

Figure 88: downlink reception: de-framing – decode header

Figure 89: downlink reception: de-framing - de-interleaver

Figure 90: downlink reception: de-framing - first payload decoder (Viterbi decoder)

Figure 91: downlink reception: de-framing - second payload decoder (Viterbi decoder)

Figure 92: downlink reception: de-framing – data buffer

rate: 10MHz

Figure 93: uplink emission: framing

Figure 94: uplink emission: spreading - filtering – up-sampling

| SOF flag<br>32 bits - BPSK<br>modulation | header<br>60 bits - QPSK<br>modulation | payload - ethernet frame encoded - QPSK<br>modulation |
|---|---|---|

Figure 95: uplink emission – CDMA frame

Figure 96: uplink emission: header generation

code_type
[0..3]

scrambler
_init
[4..7]

data_length
[8..23]

unused
[24..35]

CDMA_HMux_reset

CDMA_HMux_enable

CDMA_HMux_clock

CDMA_HMux_ code_ type — 4

CDMA_HMux_scrambler_init — 4

CDMA_HMux_length — 16

CDMA_HMux_unused — 12

CDMA_HMux_new_header

CDMA Header
Multiplex

4
CDMA_HMux_out

CDMA_HMux_data_available

Figure 97: uplink emission: header multiplexing

RS_reset

RS_in_enable

RS_clock

RS_in — 4

Reed-Solomon
coding
RS(15,9,3)

RS_out_enable

RS_out

Figure 98: uplink emission: header encoder

CDMA_HMux_reset

CDMA_HMux_enable

CDMA_HMux_clock

CDMA_HMux_code_type — 4

CDMA_HMux_scrambler_init — 4

CDMA_HMux_length — 16

CDMA_HMux_unused — 12

CDMA_HMux_new_hea
der

CDMA Header
Multiplex

4
CDMA_HMux_out

CDMA_HMux_data_available

Figure 99: uplink emission: header multiplexing

RS_clock
RS_ireset
RS_enable

RS_in — 4

Reed-Solomon
Coding
RS(15,9,3)

RS_out_enable

4
RS_out

Figure 100: uplink emission: header encoder (Reed-Solomon)

Figure 101: uplink emission: Reed-Solomon encoder

Figure 102: uplink emission: payload processing

$$G = \begin{pmatrix} 1 & 0 & 0 & 1 & 1 \\ 1 & 1 & 1 & 0 & 1 \end{pmatrix}$$

Figure 103: uplink emission: first convolutive encoder - block

CCod1_in

CCod1_out

Figure 104: uplink emission: first convolutive encoder - principle

ccod2_clock
ccod2_reset
ccod2_enable

ccod2_datain_available

ccod2_in

CCOD2

ccod2_out

ccod2_dataout_available

Figure 105: uplink emission: second convolutive encoder - block

ccod2_in

ccod2_out

Figure 106: uplink emission: second convolutive encoder - principle

Figure 107: uplink emission: interleaver - block

32
(index j)

|1|2|3|...|4|5|6|
|7|8| |...|
| | |...|

32
(index i)

for i=0..31,
    for j=0..31
        Memory[i][j] = inlea_datain;
    endfor;
endfor;

Figure 108: uplink emission: interleaver - writting

32
(index j)

Figure 109: uplink emission: interleaver – reading

Figure 110: uplink emission: header and payload multiplexing

Figure 111: uplink emission: spreading - filtering – up-sampling

Figure 112: uplink emission: QPSK mapping

Figure 113: uplink emission: QPSK mapping – detailed implementation

Figure 114: uplink emission: QPSK mapping – sequencer – state machine

Figure 115: uplink emission: SRRC filter

Figure 116: uplink emission - SRRC filter - detailed implementation

Figure 117: uplink emission: first interpolation

Figure 118: uplink emission: baseband to IF transposition (NCO)